(19) Europäisches Patentamt
European Patent Office
Office européen des brevets

(11) EP 2 679 645 B1

(12) # EUROPEAN PATENT SPECIFICATION

(45) Date of publication and mention of the grant of the patent:
**14.04.2021 Bulletin 2021/15**

(21) Application number: **12750241.7**

(22) Date of filing: **20.02.2012**

(51) Int Cl.:
***G02B 1/11*** (2015.01)
***C09D 201/00*** (2006.01)
***C08F 292/00*** (2006.01)
***C08J 5/18*** (2006.01)
***C08K 3/00*** (2018.01)
***C08L 101/00*** (2006.01)
***C09C 3/10*** (2006.01)
***C09C 3/12*** (2006.01)
***C09D 133/04*** (2006.01)

(86) International application number:
**PCT/JP2012/054012**

(87) International publication number:
**WO 2012/115057 (30.08.2012 Gazette 2012/35)**

(54) **COATING MATERIAL CONTAINING ORGANIC/INORGANIC COMPOSITE, ORGANIC/INORGANIC COMPOSITE FILM AND ANTIREFLECTION MEMBER**

BESCHICHTUNGSMATERIAL MIT EINER ORGANISCH/ANORGANISCHEN ZUSAMMENSETZUNG, ORGANISCH/ANORGANISCHER FILM UND REFLEXIONSMINDERNDES ELEMENT

MATÉRIAU DE REVÊTEMENT CONTENANT UN COMPOSITE ORGANIQUE/INORGANIQUE, FILM DU COMPOSITE ORGANIQUE/INORGANIQUE ET ÉLÉMENT ANTIREFLET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**21.02.2011 JP 2011034703**
**10.03.2011 JP 2011053229**
**23.05.2011 JP 2011114889**
**25.11.2011 JP 2011257807**

(43) Date of publication of application:
**01.01.2014 Bulletin 2014/01**

(73) Proprietor: **Asahi Kasei Kabushiki Kaisha**
**Tokyo 100-0006 (JP)**

(72) Inventors:
- **AKIMOTO, Mitsuyo**
  **Tokyo 101-8101 (JP)**
- **TANAKA, Kenya**
  **Tokyo 101-8101 (JP)**

(74) Representative: **D Young & Co LLP**
**120 Holborn**
**London EC1N 2DY (GB)**

(56) References cited:
**EP-A1- 2 687 548**
**WO-A1-2009/025130**
**JP-A- 5 287 213**
**JP-A- 5 295 025**
**JP-A- 9 328 522**
**JP-A- 60 120 703**
**JP-A- 62 101 617**
**JP-A- 2000 230 107**
**JP-A- 2001 064 439**
**JP-A- 2001 302 943**
**JP-A- 2002 371 243**
**JP-A- 2003 201 444**
**JP-A- 2004 300 172**
**JP-A- 2005 290 036**
**JP-A- 2006 063 042**
**JP-A- 2006 206 875**
**JP-A- 2008 138 165**
**JP-B1- 44 020 871**
**JP-B2- 62 021 815**
**US-B1- 6 383 559**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 679 645 B1

## Description

## Technical Field

The present invention relates to an organic-inorganic composite, a method of producing the organic-inorganic composite, and a coating material, an organic-inorganic composite film and an antireflection member containing the organic-inorganic composite. The present invention also relates to an optical element, an optical member and an illumination apparatus including an organic-inorganic composite film.

## Background Art

Conventionally, refractive index control of a film, a coating film or the like formed from a polymer has been performed using a method of introducing F atoms into the polymer, but there has been a problem in that a control range is limited and it is dissolved in only a special solvent.

Therefore, in recent years, attempts to disperse hollow inorganic particles in a polymer as means for further lowering a refractive index while maintaining an optical property, have been widely performed. In this case, it is necessary for the particles to be uniformly dispersed in the polymer in order to provide a well-looking product with no physical deflection or deviation.

When a refractive index of a film, a coating film or the like is lowered, a reflectance thereof decreases. Using this mechanism, an antireflection film can be formed. The antireflection film has been widely used for various products, including various display members such as a liquid crystal display device or a plasma display panel, an optical lens, a spectacle lens, a solar cell panel, and the like.

Generally, an antireflection film having an antireflection function has a layer having a lower refractive index (hereinafter referred to as "a low refractive index layer") than a transparent support, which is provided on the transparent support. Low refractive index materials for forming this low refractive index layer may include an inorganic material such as $MgF_2$ (having a refractive index of 1.38) or $SiO_2$ (having a refractive index of 1.46), and an organic material such as perfluoro resin (having a refractive index of 1.35 to 1.45).

Usually, a layer of $MgF_2$ is formed by a vapor phase method such as vacuum deposition or sputtering, and a layer of $SiO_2$ is formed by a vapor phase method such as vacuum deposition or sputtering, or a liquid phase method such as a sol-gel method. A layer of perfluoro resin is formed by a liquid phase method. Generally, a formation method by the vapor phase method provides low productivity and is not suitable for mass production although an antireflection film having an excellent optical property can be formed.

For example, in using the low refractive index material as described above for the purpose of antireflection in a display or the like, in most cases, two or more layers of a layer having a higher refractive index than a transparent support such as glass or a film, and a low refractive index layer are formed on a surface of the transparent support to obtain antireflection performance. Further, it is known that the greater a refractive index difference between a high refractive index material for forming a high refractive index layer and the low refractive index material is, the smaller a minimum value of a reflectance is.

Conventionally, when a PET film base material (having a refractive index of 1.67) is used as the transparent support, an effect of a low refractive index was not necessarily sufficient even in use of perfluoro resin (having a refractive index of 1.40) as the low refractive index material, and it was necessary to provide a high refractive index layer between the transparent support and the low refractive index layer. However, if a material having a much lower refractive index than the perfluoro resin can be obtained, sufficient antireflection performance can be expected to be achieved only with one layer of the low refractive index layer to be formed of such a material.

A method of introducing voids into a low refractive index layer, for example, by forming the void between particles of a low refractive index material is effective as a method of further reducing a refractive index of the low refractive index layer. This is because a refractive index of the air is 1.00 and a low refractive index layer including the air in the voids has a very low refractive index.

A curable low refractive index layer having a void between particles that is obtained by adding a binder component to a coating agent composition consisting of hollow fine particles and a silicone resin, has been reported in Patent Literature 1.

A photocurable low refractive index layer in which voids are formed between porous inorganic particles treated with a silane coupling agent and fine particles containing, as a primary component, a multi-functional acrylic monomer having a reactive double bond has been reported in Patent Literature 2.

A photocurable low refractive index layer in which fine particles obtained by polymerizing a polymer are stacked in the presence of fine inorganic particles treated with a coupling agent having a reactive double bond, has been reported in Patent Literature 3.

JP 2004 300172 A discloses a coating composition comprising ultrafine particles of submicron order which can

be uniformly dispersed in a liquid medium for preparing a coating liquid and which has a polymerizable functional group on the surface.

US 6 383 559 B1 discloses a process for the preparation of an antireflection film, which comprises the steps of: coating a liquid comprising a polymer binder and micro particles on a transparent film, wherein the polymer binder is synthesized by using an ester of a polyhydric alcohol with a (meth)acrylic acid, whereby micro particles are so deposited to superpose at least one micro particle on another micro particle, to form micro voids surrounded by the micro particles, said micro particles having a mean particle size of 5 to 200 nm, and said polymer binder being contained in an amount of 5 to 25 weight % based on the total amount of the coated layer; and drying the coated layer to form a low refractive index layer.

JP 2006 063042 A discloses a silane coupling agent having a living radical polymerization-initiating group.

## Citation List

### Patent Literature

[Patent Literature 1] Japanese Patent Laid-Open publication No. 2004-258267
[Patent Literature 2] Japanese Patent Laid-Open publication No. Hei 11-326601
[Patent Literature 3] Japanese Patent Laid-Open publication No. Hei 11-6902

## Summary of Invention

### Technical Problem

A method of introducing voids into a low refractive index layer, for example, by forming a void between organic-inorganic composite particles may be considered to be effective to further reduce a refractive index of a low refractive index layer. This is because a refractive index of the air is 1.00 and the low refractive index layer containing the air in the voids has a very low refractive index.

However, according to study by the present inventors, in the case of the method of Patent Literature 1, since it is essential to bond between hollow fine particles through a condensation reaction of silicone resin or binder component, a void formed between the hollow fine particles is not prevented from being filled with such a component. (Confirmation of comparative examples) Therefore, a refractive index increases.

Further, in the case of the method of Patent Literature 2, when a coating agent primarily containing porous inorganic particles, which are treated with a silane coupling agent and a multi-functional acrylic monomer having a reactive double bond, is applied to a base material and dried, each of the inorganic particles and the monomer is unevenly distributed, and thereby aggregation of the inorganic particles or bias of a size and place of voids occurs. Therefore, effects such as degradation of an optical property or degradation of film strength are caused.

Further, in the case of the method of Patent Literature 3, it is difficult to make all of polymers produced from a polymerization initiator react to a double bond of inorganic particles because of its steric hindrance. Therefore, a large amount of polymers that are not bonded to the inorganic particles (hereinafter referred to as "free polymers") exist in the low refractive index layer. As a result, the void between fine particles is filled with the free polymers, and void content decreases. Further, the polymer bonded to the inorganic particles causes a bond (secondary aggregation) between particles during the polymerization of the polymers through a reaction with a reactive double bond bonded to different inorganic particles or a bimolecular termination reaction with a polymer bonded to different inorganic particles. Therefore, effects such as poor dispersion or degradation of an optical property are caused.

Meanwhile, as a method of synthesizing an organic-inorganic composite that does not suffer from the problem described above, a method of directly bonding an initiator to inorganic particles and synthesizing a polymer through living radical polymerization may be considered. However, specific technical details required to form a layer in which voids are effectively formed, i.e., a low refractive index layer that does not scatter light, has high transparency and sufficiently achieves a low refractive index when the organic-inorganic composite is formed by the living radical polymerization, have yet to be disclosed.

Further, specific technical details for curing an organic-inorganic composite in which one end of the organic polymer is bonded to inorganic particles to form a low refractive index layer having an excellent solvent-resistant characteristic and having no problem associated with film strength, have yet to be disclosed.

The present invention has been made in view of the circumstances described above, and an object of the present invention is to provide a film-forming organic-inorganic composite capable of forming a transparent coating film and film having a good appearance and easily controlling a refractive index of the film. Further, another object of the

present invention is to provide a coating film having a low refractive index.

**Solution to Problem**

The present invention relates to the following.

[1] An organic-inorganic composite film comprising:

an organic-inorganic composite including: an inorganic compound particle; and a polymer bonded to the inorganic compound particle, wherein a molecular weight distribution of the polymer is equal to or less than 2.3,

wherein the inorganic compound particle and the polymer are bonded through a coupling agent which has a structure represented by the following formula:

X-Si(R1)(R2)(R3)

in the formula, X denotes a polymerization initiating group, R1 and R2 independently denote an alkyl group having 1 to 10 carbon atoms respectively, and R3 denotes an alkoxy group having 1 to 10 carbon atoms, a hydrogen atom, a hydroxyl group or a halogen atom;

wherein the polymerization initiating group is an organic halide group represented by the following general formula (1) or a halogenated sulfonyl group represented by general formula (2):

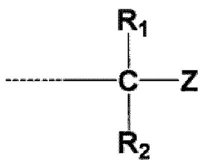 · · · (1) 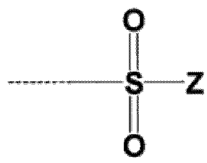 · · · (2)

in which R1 and R2 each independently denotes a hydrogen atom, an alkyl group having 1 to 20 carbon atoms that may have a substituent, an allyl group that may have a substituent, an aryl group having 6 to 20 carbon atoms that may have a substituent, an alkyl aryl group, or an alkyl aryl group that may have a substituent, and Z denotes a halogen atom ;

wherein the organic-inorganic composite further includes a free polymer not bonded to the inorganic compound particle, and a percentage of the free polymer is equal to or less than 20 mass% with reference to a total mass of the free polymer and the polymer bonded to the inorganic compound particle ;

wherein a percentage of voids in the film is 3 to 70 volume% with reference to a volume of the film; and

wherein the organic-inorganic composite film has a refractive index of equal to or less than 1.36.

[2] The organic-inorganic composite film according to [1], wherein the inorganic compound particle is an inorganic oxide particle.

[3] The organic-inorganic composite film according to [2], wherein the inorganic oxide particle form a chain structure including a plurality of primary particles linked in a beaded shape.

[4] The organic-inorganic composite film according to [1] or [2], wherein a circularity of the inorganic compound particle is 0.5 to 1.

[5] The organic-inorganic composite film according to any one of [1] to [4], wherein the polymer contains a methacrylic acid ester or an acrylic acid ester as a monomer unit.

[6] The organic-inorganic composite film according to any one of [1] to [5], wherein the polymer contains at least one crosslinkable functional group.

[7] The organic-inorganic composite film according to [6], wherein the crosslinkable functional group contains at least one reactive double bond.

[8] The organic-inorganic composite film according to [7], wherein the reactive double bond is a carbon-carbon double bond in a (meta) acryloyl group.

[9] The organic-inorganic composite film according to any one of [1] to [8], wherein a number average molecular weight Mn of the polymer is 10000 to 100000 g/mol, and/or wherein a content of the inorganic compound particle is 70 to 96 mass% with reference to a total mass of the organic-inorganic composite.

[10] The organic-inorganic composite film according to any one of [1] to [9], wherein a content of the inorganic compound particle is 55 to 94 volume% with reference to a total volume of the organic-inorganic composite.

[11] The organic-inorganic composite film according to any one of [1] to [10] having a refractive index of 0.020 or more lower than a theoretical refractive index, and/or having a minimum reflectance of equal to or less than 1.5%.

[12] The organic-inorganic composite film according to any one of [1] to [11], having a pencil hardness of equal to or more than F.

[13] The organic-inorganic composite film according to any one of [1] to [12], wherein the organic-inorganic composite is crosslinked.

[14] The organic-inorganic composite film according to [13], wherein the organic-inorganic composite is crosslinked by radical polymerization, and/or wherein the organic-inorganic composite is further crosslinked by a crosslinker.

[15] A coating material to form an organic-inorganic composite film according to any one of [1] to [14] through coating, the coating material comprising:
an organic-inorganic composite including: an inorganic compound particle; and a polymer bonded to the inorganic compound particle; wherein the organic-inorganic composite is as defined in any one of [1] to [14].

[16] The coating material according to [15], further comprising an organic solvent, and/or further comprising a photo-polymerization initiator or a curing agent, and/or wherein a solid content concentration is 0.2 to 50 mass%, and/or having a viscosity of equal to or less than 5 Pa·s.

[17] The organic-inorganic composite film according to any one of [1] to [14], produced by a method including the following steps 1 and 2:

Step 1: reacting the inorganic compound particle with a coupling agent having a polymerization initiating group, to obtain a surface-reformed inorganic compound particle; and

Step 2: forming the polymer bonded to the inorganic compound particle through living radical polymerization of a radical polymerizable monomer initiated by the polymerization initiating group, to produce the organic-inorganic composite; wherein the living radical polymerization is atom transfer radical polymerization.

[18] The organic-inorganic composite film according to any one of [13] or [14], produced by a method including the following steps 1, 2 and 3:

Step 1: reacting the inorganic compound particle with a coupling agent having a polymerization initiating group, to obtain a surface-reformed inorganic compound particle;

Step 2: forming the polymer bonded to the inorganic compound particle through living radical polymerization of a radical polymerizable monomer initiated by the polymerization initiating group, to produce the organic-inorganic composite; wherein the living radical polymerization is atom transfer radical polymerization; and

Step 3: bonding a compound having a crosslinkable functional group including a reactive double bond to the organic-inorganic composite after Step 2.

[19] The organic-inorganic composite film according to any one of [1] to [14], produced by a method including the

following steps 4 and 5:

Step 4: reacting a coupling agent having a polymerization initiating group and a hydrophobizing agent with the inorganic compound particle, to obtain a surface-reformed inorganic compound particle; and

Step 5: forming the polymer bonded to the inorganic compound particle through living radical polymerization of a radical polymerizable monomer initiated by the polymerization initiating group, to produce the organic-inorganic composite after Step 4; wherein the living radical polymerization is atom transfer radical polymerization.

[20] The organic-inorganic composite film according to any one of [13] or [14], produced by a method including the following steps 4, 5 and 6:

Step 4: reacting a coupling agent having a polymerization initiating group and a hydrophobizing agent with the inorganic compound particle, to obtain a surface-reformed inorganic compound particle;

Step 5: forming the polymer bonded to the inorganic compound particle through living radical polymerization of a radical polymerizable monomer initiated by the polymerization initiating group, to produce the organic-inorganic composite after Step 4; wherein the living radical polymerization is atom transfer radical polymerization; and

Step 6: bonding a compound having a functional group including a reactive double bond to the organic-inorganic composite.

[21] A method of producing an organic-inorganic composite film according to any one of [1] to [12], the method comprising the steps of:

obtaining a coating material that comprises an organic-inorganic composite including: an inorganic compound particle; and a polymer bonded to the inorganic compound particle, wherein the organic-inorganic composite is as defined in any one of [1] to [12]; and

applying the coating material to a substrate and removing the organic solvent from the applied coating material to form an organic-inorganic composite film.

[22] A method of producing an organic-inorganic composite film according to any one of [13] or [14], the method comprising the steps of:

obtaining a coating material that comprises an organic-inorganic composite including: an inorganic compound particle; and a polymer bonded to the inorganic compound particle; wherein the organic-inorganic composite is as defined in any one of [13] or [14];

applying the coating material to a substrate and removing the organic solvent from the applied coating material to form an organic-inorganic composite film; and

crosslinking the organic-inorganic composite through photo-curing or thermal curing.

[23] An optical material, member or element comprising the organic-inorganic composite film according to any one of [1] to [14].

[24] An antireflection member comprising the organic-inorganic composite film according to any one of [1] to [14].

[25] An illumination apparatus comprising the organic-inorganic composite film according to any one of [1] to [14].

**Advantageous Effects of Invention**

According to the present invention, it is possible to provide a film-forming organic-inorganic composite capable of forming a transparent organic-inorganic composite film having a good appearance and easily controlling a refractive index of the transparent organic-inorganic composite film.

Further, with the organic-inorganic composite constituting the organic-inorganic composite film according to the present invention, it is possible to easily form an organic-inorganic composite film exhibiting high void content.

## Brief Description of Drawings

Fig. 1 is a schematic diagram illustrating a method of calculating a maximum length and a minimum width of an inorganic oxide particle.
Fig. 2 is a schematic cross-sectional view of an antireflection film according to the present embodiment.
Fig. 3 is a TEM photograph of beaded inorganic particles of a raw material (1-4).

## Description of Embodiments

Hereinafter, a mode for carrying out the present invention (hereinafter, the present embodiment) will be described in detail.

[(A) Inorganic compound particle]

An inorganic compound is a compound other than an organic compound. Specifically, the inorganic compound refers to a compound composed of elements other than carbon, except for some carbon compounds.

Examples of elements that constitute an inorganic compound include elements in groups 1 to 16 of a periodic table. These elements are not particularly limited, but elements belonging to groups 2 to 14 of the periodic table are preferable. Specific examples of the elements include group 2 elements (Mg, Ca, Ba, etc.), group 3 elements (La, Ce, Eu, Ac, Th, etc.), group 4 elements (Ti, Zr, Hf, etc.), group 5 elements (V, Nb, Ta, etc.), group 6 elements (Cr, Mo, W, etc.), group 7 elements (Mn, Re, etc.), group 8 elements (Fe, Ru, Os, etc.), group 9 elements (Co, Rh, Ir, etc.), group 10 elements (Ni, Pd, Pt, etc.), group 11 elements (Cu, Ag, Au, etc.), group 12 elements (Zn, Cd, etc.), group 13 elements (Al, Ga, In, etc.) and group 14 elements (Si, Ge, Sn, Pb, etc.).

Examples of an inorganic compound containing such elements include oxide (containing a composite oxide), halide (fluoride, chloride, bromide or iodide), oxo acid salt (nitric, sulfate, phosphate, borate, perchlorate, carbonate, etc.), a compound formed from negative elements and the above-described element such as carbon monoxide, carbon dioxide and carbon disulfide, hydrocyanic acid and salt such as cyanide, cyanate, thiocyanate and carbide.

Among the carbon compounds, examples of the carbon compounds exceptionally classified into an inorganic compound include allotropes of carbon such as a diamond, lonsdaleite, graphite, graphene, fullerene (buckminsterfullerene, carbon nanotube, carbon nanohorn, etc.), glassy carbon, carbyne, amorphous carbon, and carbon nanofoam.

One inorganic compound particle may contain one kind or two or more kinds of elements among the above elements. A plurality of kinds of elements may uniformly exist in the particle or may be unevenly distributed. A surface of a particle of a certain compound of an element may be coated by a different compound of an element. These inorganic compounds may be used alone or may be used in combination of a plurality of such compounds.

A size of the inorganic compound particle (particularly, spherical particle) is not particularly limited, but an average particle diameter (an average value of an outer diameter of the particle) is preferably 1 to 200nm. If the average particle diameter is greater than 200nm, when the organic-inorganic composite is used as an optical material, problems such as scattering of light tend to easily occur. If the average particle diameter is less than 1nm, a characteristic specific to a material constituting the inorganic compound particle is likely to be changed. Further, it becomes difficult to effectively form a void between the inorganic compound particles. From the same viewpoint, the average particle diameter of the inorganic particle is more preferably 1 to 150nm and further preferably 10 to 100nm. Particularly, since it is necessary for the size of the particle to be in a Rayleigh scattering region when transparency is required in an film-forming organic-inorganic composite, and in a coating film, a molded body, an optical material or the like using the organic-inorganic composite, the average particle diameter of the inorganic compound particle is preferably 10 to 70nm, and further preferably 10 to 60nm. A method of measuring the average particle diameter of the inorganic compound particle will be described in detail in examples that will be described below.

For example, a shape or a crystalline form of the inorganic compound particle is not particularly limited and may be various shapes such as a spherical shape, a crystalline shape, a scale shape, a columnar shape, a tubular shape, a fibrous shape, a hollow shape, a porous shape, and a beaded shape. Above all, from a viewpoint of a structure in which voids can be effectively formed, the hollow shape, the beaded shape or the spherical shape is preferable.

The inorganic oxide particle is not particularly limited as long as the inorganic oxide particle is a particle formed from an oxide of an element other than carbon, e.g., Si, Zr, Ti, Ar, Sn, Ca, or Ba, but, from the viewpoint of ease of availability, $SiO_2$, $ZrO_2$, $TiO_2$, $Al_2O_3$, $BaTiO_3$ and $CaCO_3$ are preferable, and $SiO_2$ is particularly preferable. The inorganic compound may contain a $ZrO_2$ particle or a $TiO_2$ particle, and $SiO_2$, $Al_2O_3$ and the like with which the surface of these particle is coated. These may be used alone or may be used in combination of a plurality of such inorganic oxide particles.

[(A1): Inorganic oxide particle forming a chain structure containing a plurality of primary particles linked in a beaded shape]

An inorganic oxide particle having a chain structure in which a plurality of primary particles are linked in a beaded shape (hereinafter referred to as a "beaded inorganic oxide particle") is not limited, but the particles have a shape in which the particles are linked and/or branched in a beaded shape. Specific examples thereof may include an inorganic oxide particle having a chain structure in which spherical colloidal silica are linked in a beaded shape, and an inorganic oxide particle in which linked colloidal silica is branched (hereinafter referred to as "beaded silica"), as shown in Fig. 3. The beaded silica is obtained by linking primary particles of the spherical silica via divalent or more metal ions. At least three, further preferably five, and more preferably seven primary particles are linked. The beaded inorganic particle includes a particle in which a primary particle linked in a beaded shape is branched. When the beaded inorganic particle is observed at a magnification of 50,000 to 100,000 using an electron microscope such as an SEM and a TEM, the number of particles present in a form having a chain structure and a branched structure rather than an independent spherical particle among particles present in the field of vision is at least 50% or more, preferably 70% or more, and more preferably in a range of 90 to 100%. A three-dimensional obstacle of the beaded inorganic particle causes other beaded inorganic particles not to densely occupy a space and, as a result, a film having higher void content can be easily formed and thus it is particularly preferable. Further, when the inorganic particle having a high L/D such as the above-described beaded inorganic particle is used, an irregularity structure is formed on a film surface depending on an inorganic content, and accordingly, it is particularly preferable since excellent water repellency is expressed like a drop of water rolling on a surface of a leaf of a lotus.

[(A2): Inorganic compound particle having a circularity of 0.5 to 1]

If a void between the inorganic compound particles can be effectively formed, an inorganic compound particle having a circularity of 0.5 to 1 may be used. From the viewpoint of uniformity maintenance, this circularity is more preferably 0.7 to 1 and further preferably 0.85 to 1. A method of measuring the circularity will be described in detail in examples that will be described below.

[(A3): Inorganic compound particles having a cavity content of 5 to 80%]

A void ratio of the inorganic compound particles is not particularly limited, but inorganic compound particles whose cavity content within the particles is 5 to 80% may be used from the viewpoint of transparency and ease of refractive index control.

When the cavity content is less than 5 volume%, a refractive index control effect is small, and when the cavity content exceeds 80 volume%, strength is low and damage is likely to occur when processing is performed into an optical material or the like. On the other hand, as the cavity content is 5 to 80 volume%, it is possible to obtain a coating film having excellent refractive index control ability and a good look. From the same viewpoint, this cavity content is more preferably 10 to 60 volume% and, further preferably 15 to 40 volume%. The cavity content is represented by "cavity content (volume%)=(volume of cavity part)/(volume of entire particles)$\times$100." A method of measuring the cavity content will be described in detail in examples that will be described below.

In the case of such inorganic compound particles, a cavity is present within the inorganic compound particle, as well as the void between the inorganic compound particles. Therefore, it is preferable in that an organic-inorganic composite film having a lower refractive index can be obtained. A form of the inorganic compound particle is not particularly limited, but a tubular particle, a hollow particle, or a porous particle is preferable from the viewpoint of refractive index control. The hollow particle and the porous particle are particularly preferable. Above all, a spherical hollow silica particle and porous silica are preferable from the viewpoint of ease of availability.

An outer shell thickness of the above hollow particle is not particularly limited, but the outer shell thickness is preferably 1 to 30nm, more preferably 5 to 20nm, and particularly preferably 7 to 12nm from the viewpoint of balance of a refractive index and a film formation property.

The refractive index of the hollow particle is not particularly limited, but is preferably about 1.05 to 1.4, since a refractive index control effect is easily obtained. From the viewpoint of a balance of a refractive index design and the film formation property, the refractive index of the inorganic oxide particle is more preferably 1.1 to 1.35 and further preferably 1.15 to 1.3.

[(B) Polymer]

In a polymer constituting an organic-inorganic composite, at least a part of the polymer is bonded to a surface of the inorganic compound particle through a coupling agent (a coupling agent having a polymerization initiating group), which will be described later. The bond of the inorganic compound particle and the polymer is preferably a covalent

bond from the viewpoint of strength of the bond. This polymer contains one kind or two or more kinds of radical polymerizable monomers as monomer units. Further, the organic-inorganic composite may contain a plurality of kinds of polymers consisting of different monomer units.

<Coupling agent>

The coupling agent in the present embodiment is a compound used to link an inorganic compound particle surface to the above-described organic polymer. This coupling agent is defined according to claim 1 and is a compound having a polymerization initiating group and a functional group that generates a bond by reacting to the inorganic compound particle surface. The inorganic compound particle surface in this case may be formed of an inorganic compound itself or may have been subjected to surface treatment. The surface treatment cited herein refers to modification of the inorganic compound particle surface by a functional group through a chemical reaction, heat-treatment, light radiation, plasma radiation, radiation exposure or the like.

A method of bonding the coupling agent with the inorganic compound particle surface is not particularly limited, but examples thereof include a method in which a hydroxyl group of the inorganic compound particle surface is reacted with the coupling agent, and a method in which a functional group introduced by the surface treatment of the inorganic compound particle surface is reacted with the coupling agent. It is possible to link a plurality of coupling agents by further causing a coupling agent to react to the coupling agent bonded to the inorganic compound particle. Further, water or a catalyst may be used together according to a kind of coupling agent.

Functional groups described herein include a phosphate group, a carboxy group, an acid halide group, an acid anhydride group, an isocyanate group, a glycidyl group, a chlorosilyl group, an alkoxysilyl group, a silanol group, an amino group, a phosphonium group and a sulfonium group, when the bond is created through a reaction with the hydroxyl group of the inorganic compound particle surface. Above all, from the viewpoint of balance of reactivity and a remaining amount of acid or coloration, the alkoxysilyl group is preferable.

The coupling agent is monofunctional. When there are two or more functional groups, a condensation product (byproduct) of the coupling agent is produced and removal thereof is difficult. Further, since an unreacted functional group remains in the organic-inorganic composite film, alcohol, water or the like is generated upon drying by heating, and processing of heating, which makes the film foam. Further, this is because it may cause aggregation of the inorganic compound particles.

The polymerization initiating group that the coupling agent has is defined according to claim 1 and is a functional group having polymerization initiating ability. Polymerization initiating groups described herein include a polymerization initiating group used for nitroxide-mediated radical polymerization (hereinafter referred to as "NMP"), atom transfer radical polymerization (hereinafter referred to as "ATRP"), or reversible addition-fragmentation chain transfer polymerization (hereinafter referred to as "RAFT"), which will be described below.

The polymerization initiating group in the NMP is not particularly limited as long as the polymerization initiating group is a group in which a nitroxide group has been bonded.

The polymerization initiating group in the ATRP is typically a group containing a halogen atom. It is preferable that bond dissociation energy of the halogen atom to be low. Examples of a such a structure may include a group to which a halogen atom bonded to a tertiary carbon atom, a halogen atom bonded to a carbon atom adjacent to an unsaturated carbon-carbon bond of a vinyl group, a vinylidene group, a phenyl group or the like, or a halogen atom directly bonded to a heteroatom containing conjugate group such as a carbonyl group, a cyano group and a sulfonyl group or bonded to an atom adjacent thereto has been introduced. In the present invention, the polymerization initiating group is an organic halide group represented by following general formula (1) and a halogenated sulfonyl group represented by general formula (2) are suitable.

[Chemical formula 1]

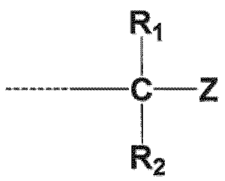

• • • (1)

[Chemical formula 2]

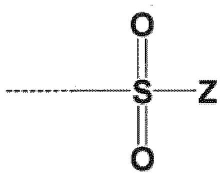

· · · (2)

In Formulas (1) and (2), $R_1$ and $R_2$ each independently denotes a hydrogen atom, an alkyl group having 1 to 20 carbon atoms that may have and a substituent, an allyl group that may have a substituent, an aryl group having 6 to 20 carbon atoms that may have a substituent, an alkyl aryl group, or an alkyl aryl group that may have a substituent, and Z denotes a halogen atom.

The polymerization initiating group of Formula (1) may be a group having a carbonyl group as shown in the following general formula (3). In Formula (3), $R_1$, $R_2$ and Z are synonymous with $R_1$, $R_2$ and Z in Formula (1).

[Chemical formula 3]

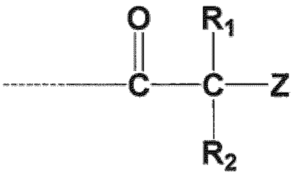

· · · (3)

Specific examples of the polymerization initiating group of Formula (3) are shown in the following chemical formula.

[Chemical formula 4]

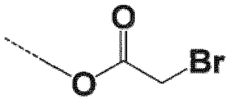
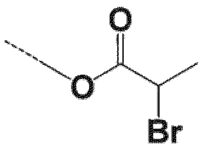
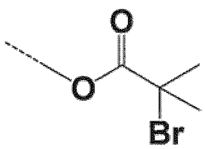
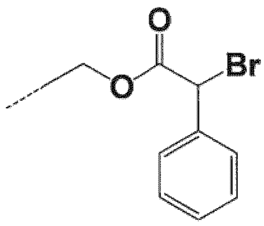
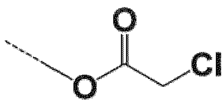
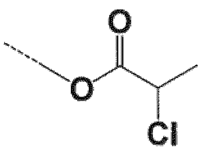
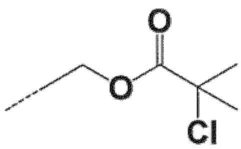
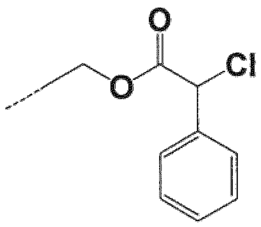
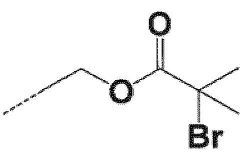
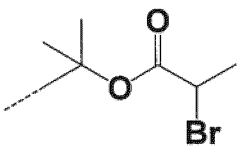
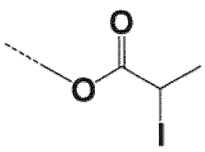

The polymerization initiating group in the RAFT is not particularly limited as long as the polymerization initiating group is a general radical polymerization initiating group. An example is a group containing a sulfur atom functioning as an RAFT agent.

Other examples include trithiocarbonate, dithioester, thioamide, thiocarbamate, dithiocarbamate, thiouran, thiourea, dithiooxamide, thioketone, and trisulfide.

The coupling agent has a structure represented by the following formula 1.

X-Si(R1)(R2)(R3) ... (Formula 1)

In formula 1, X is the polymerization initiating group described above, R1 and R2 each independently is an alkyl group having 1 to 10 carbon atoms, and R3 is an alkoxy group having 1 to 10 carbon atoms, a hydrogen atom, a hydroxyl group or a halogen atom.

Specific examples of a suitable coupling agent include the following silane compounds:

3-(2-bromoisobutyroxy)propyldimethylchlorosilane (Cas number: 370870-81-8);
Propionic acid, 2-bromo-2-methyl-, 3-(dichloromethylsilyl)propyl ester (Cas number: 1057260-39-5);
Propionic acid, 2-bromo-2-methyl-, 3-(trichlorosilyl)propyl ester (Cas number: 688359-84-4);
3-(methoxydimethylsilylpropyl)-2-bromo-2-methylpropionate (Cas number: 531505-27-8);
3-(dimethoxymethylsilylpropyl)-2-bromo-2-methylpropionate (Cas number: 1186667-60-6);
3-(trimethoxysilylpropyl)-2-bromo-2-methylpropionate (Cas number: 314021-97-1);
(3-(2-bromoisobutyryl)propyl)dimethylethoxysilane (Cas number: 265119-86-6);
(3-(2-bromoisobutyryl)propyl)methyldiethoxysilane (Cas number: 1186667-65-1);
Propionic acid, 2-bromo-2-methyl-, 3-(triethoxysilyl)propyl ester (Cas number: 880339-31-1);
Propionic acid, 2-bromo-, 3-(chlorodimethylsilyl)propyl ester (Cas number: 438001-36-6);
Propionic acid, 2-bromo-, 3-(trichlorosilyl)propyl ester (Cas number: 663174-64-9);
Propionic acid, 2-bromo-, 3-(methoxydimethylsilyl)propyl ester (Cas number: 861807-46-7);
(3-(2-bromopropionyl)propyl)dimethylethoxysilane (Cas number: 265119-85-5); and
(3-(2-bromopropionyl)propyl)triethoxysilane (Cas number: 1233513-06-8).

The polymerization form of the polymer is not particularly limited but, may include, for example, a homopolymer, a periodic copolymer, a block copolymer, a random copolymer, a gradient copolymer, a tapered copolymer, or a graft copolymer. Among these, from the viewpoint of physical property control such as Tg or the refractive index, the copolymers are preferable.

It is preferable for the polymer to be a homopolymer or a copolymer of acrylic acid ester and methacrylic acid ester from the viewpoint of solubility to general-purpose organic solvents and thermal decomposition suppress.

It is preferable for the radical polymerizable monomer to be polymerizable through atom transfer radical polymerization (hereinafter referred to as "ATRP") or reversible addition-fragmentation chain transfer polymerization (hereinafter referred to as "RAFT").

Examples of the above monomer may include ethylene, "dienes such as buta-1,3-diene, 2-methylbuta-1,3-diene or 2-chlorobuta-1,3-diene", "styrenes such as styrene, $\alpha$-methylstyrene, 4-methylstyrene, 4-hydroxystyrene, acetoxystyrene, 4-chloromethylstyrene, 2,3,4,5,6-pentafluorostyrene or 4-aminostyrene", "acrylic acid esters such as methyl acrylate, ethyl acrylate, n-butyl acrylate, tert-butyl acrylate, isobutyl acrylate, 2-ethylhexyl acrylate, octyl acrylate, octadecyl acrylate, cyclohexyl acrylate, benzyl acrylate, trimethylsilyl acrylate, acrylic acid amide, 2-(dimethylamino)ethyl acrylate, 2,2,2-trifluoroethyl acrylate, 2,2,3,3,-tetrafluoropropyl acrylate, 1,1,1,3,3,3-hexafluoroisopropyl acrylate, 1H, 1H, 2H, 2H-heptadecafluorodecyl acrylate, 1H, 1H, 3H-hexafluorobutyl acrylate, 1H, 1H, 5H-octafluoropentyl acrylate, 1H, 1H-heptafluorobutyl acrylate, 2-isocyanatoethyl acrylate, or 1,1-(bis acryloyloxymethyl)ethylisocyanate", "methacrylic acid esters such as methyl methacrylate, ethyl methacrylate, n-butyl methacrylate, tert-butyl methacrylate, isobutyl methacrylate, 2-ethylhexyl methacrylate, octyl methacrylate, octadecyl methacrylate, cyclohexyl methacrylate, benzyl methacrylate, trimethylsilyl methacrylate, methacrylic acid amide, 2-(dimethylamino)ethyl methacrylate, 2-(diethylamino)ethyl methacrylate, 2,2,2-trifluoroethyl methacrylate, 1H,1H,2H,2H-heptadecailuorodecyl methacrylate, 1H,1H,3H-hexafluorobutyl methacrylate, 2,2,3,3,-tetrafluoropropyl methacrylate, 1H,1H,5H-octafluoropentyl methacrylate, 1H,1H,7H-dodecafluoropentyl methacrylate, 2-isocyanatoethyl methacrylate, 2-(0-[1'-methylpropylideneamino]carboxyamino)ethyl methacrylate, or 2-[(3,5-dimethylpyrazolyl)carbonylamino]ethyl methacrylate", "(meta) acrylic acid derivatives such as acrylic acid 2-hydroxyethyl, acrylic acid 2-hydroxypropyl, acrylic acid 3-hydroxypropyl, acrylic acid 2-hydroxy butyl, acrylic acid 3-hydroxy butyl, acrylic acid 4-hydroxy butyl, acrylic acid 2-hydroxy hexyl, acrylic acid 6-hydroxy hexyl, acrylic acid 3-perfluorobutyl-2-hydroxypropyl, acrylic acid 3-perfluorohexyl-2-hydroxypropyl, acrylic acid 3-perfluorooctyl-2-hydroxypropyl, methacrylic acid 2-hydroxyethyl, methacrylic acid 2-hydroxypropyl, methacrylic acid 3-hydroxypropyl, methacrylic acid 2-hydroxybutyl, methacrylic acid 3-hydroxybutyl, methacrylic acid 4-hydroxybutyl, methacrylic acid 6-hydroxyhexyl, methacrylic acid cyclohexyl, methacrylic acid 3-perfluorobutyl-2-hydroxypropyl, methacrylic acid 3-perfluorohexyl-2-hydroxypropyl, methacrylic acid 3-perfluorooctyl-2-hydroxypropyl, acrylamide, methacrylamide, N-cyclopropylacrylamide, N,N-dimethylacrylamide, N-hydroxymethylacrylamide, N-isopropylacrylamide, acrylonitrile, or methacrylonitrile", "vinyl esters such as vinyl acetate, vinyl propionate, benzoic acid vinyl or butyric acid vinyl", "vinyl ethers such as vinyl methyl ether or vinyl ethyl ether", "vinyl methyl ketone, vinyl hexyl ketone, vinyl ketones, N-vinyl compounds such as N-vinylpyrrole, N-vinylcarbasol, N-vinylindole or N-vinyl pyrrolidone", "allyl compounds such as allyl alcohol, allyl chloride, acetic acid allyl, vinyl chloride or vinylidene chloride", "compounds having a fluoroalkyl group such as fluorinated vinyl or vinylidene fluoride", "functional monomers such as glycidyl acrylate, glycidyl methacrylate or 4-glycidylstyrene", and "compounds having two or more reactive double bonds such as allyl acrylate, allyl methacrylate, diacrylic anhydride, 1,2-ethanediyl diacrylate, pentaerythritol triacrylate, pentaerythritol tetra acrylate or divinylbenzene". Among these, it is preferable to select styrenes, acrylic acid esters or methacrylic acid esters when the transparency of the coating film or the molded body is particularly important.

It is preferable to select at least one or more kinds of monomers containing fluorine from among the above monomers in order to provide refractive index control or water repellency/oil repellency. Acrylic acid 2,2,2-trifluoroethyl, acrylic acid 2,2,3,3-tetrafluoropropyl, acrylic acid 2,2,3,3,3-pentafluoropropyl, acrylic acid 1,1,1,3,3,3-hexafluoroisopropyl, methacrylic acid 2,2,2-trifluoroethyl, methacrylic acid 2,2,3,3-tetrafluoropropyl, methacrylic acid 2,2,3,3,3-pentafluoropropyl, and methacrylic acid 1,1,1,3,3,3-hexafluoroisopropyl are further preferable since they are readily available.

The use of at least one kind of monomer selected from the group consisting of acrylic acid ester and methacrylic acid ester is preferable as a monomer not containing fluorine since these are readily available. Above all, a monomer selected from among methyl acrylate, ethyl acrylate, butyl acrylate, methyl methacrylate, ethyl methacrylate and butyl methacrylate is preferable.

Specific examples of the preferred monomer is shown in chemical formulas below.

[Chemical formula 5]

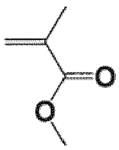
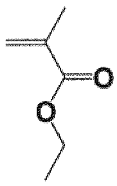
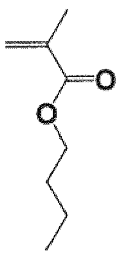
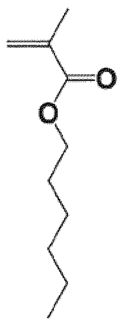
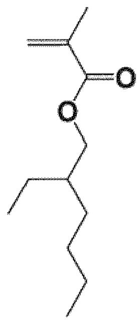
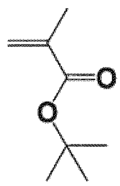
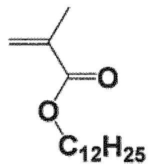

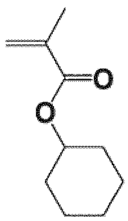
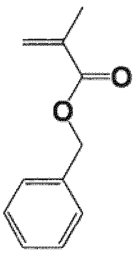
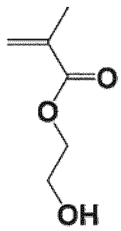
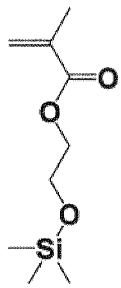

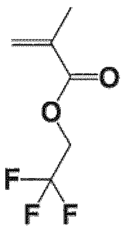
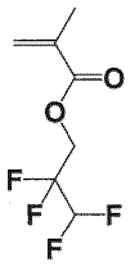
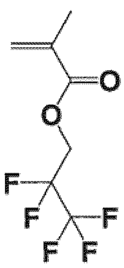
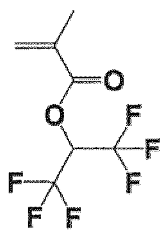

Methacrylic ester

[Chemical formula 6]

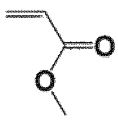
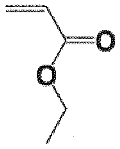
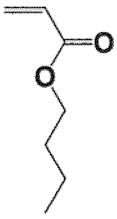
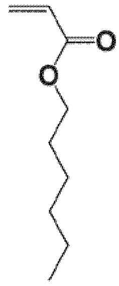
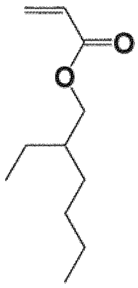
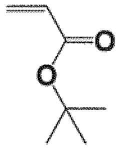
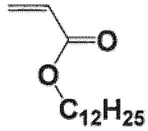

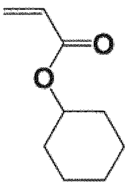
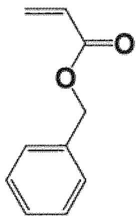

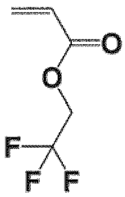
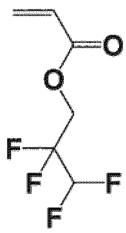
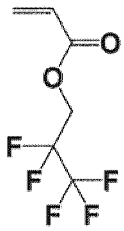
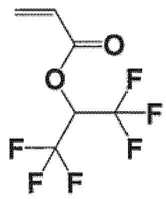

Acrylic ester

[Chemical formula 7]

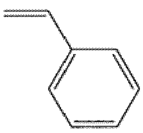
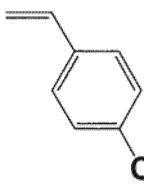
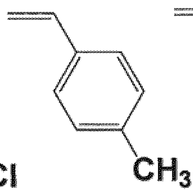
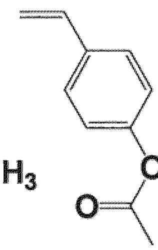
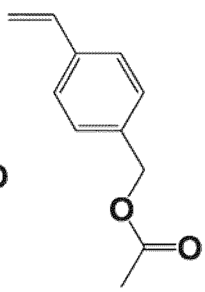

Styrenes

The above polymer may have a crosslinkable functional group in order to crosslink the organic-inorganic composite. A type of crosslinkable functional group is not particularly limited but a (meth)acryloyl group or a cyclic ether group (an epoxy group, an oxetane group or the like) or the like is preferable from the viewpoint of reactivity.

A reactive double bond that may be used for the present embodiment refers to an unsaturated bond capable of initiating a polymerization reaction from a compound (a photo-radical initiator) described below that generates a radical through radiation of an active ray such as ultraviolet light, and curing. As the reactive double bond, a carbon-carbon double bond in an (meth)acryloyl group (an acryloyl group or a methacryloyl group) is preferable.

A method of introducing a reactive double bond into a polymer may include a method in which a polymer is

synthesized using a compound having two or more reactive double bonds as a monomer, a method in which a polymer is synthesized from a monomer having a functional group and then adding a compound having a reactive double bond to its functional group, or the like.

The compound having two or more reactive double bonds is not limited, but a compound having two or more double bonds with different reactivity capable of suppressing problems such as gelation during synthesizing an organic polymer is preferable. Above all, acrylic acid allyl is more preferable because it is readily available.

As a scheme of adding the compound having a reactive double bond to the polymer, it is preferable to react a functional group in the polymer with a functional group in the compound having a reactive double bond. As the functional group in the polymer or in the compound having a reactive double bond, a functional group such as a hydroxyl group, an alkoxysilyl group, an epoxy group, a carboxyl group, an isocyanate group, an amino group, or an amide group is preferable. Examples of combinations of these functional groups include a hydroxyl group-carboxyl group, an amino group-carboxyl group, an amide group-carboxyl group, an alkoxysilyl group-carbonyl group, an isocyanate group-hydroxyl group, an epoxy group-hydroxyl group, an alkoxysilyl group-hydroxyl group, an amide group-hydroxyl group, epoxy group-amino group, etc.

As the compound having a reactive double bond and having a hydroxyl group, hydroxyalkyl vinyl ethers such as hydroxyethyl vinyl ether, hydroxybutyl vinyl ether or cyclohexanedimethanol monovinyl ether; ethylene glycol monovinyl ethers such as diethylene glycol monovinyl ether, triethylene glycol monovinyl ether or tetraethylene glycol monovinyl ether; hydroxyalkyl allyl ethers such as hydroxyethyl allyl ether, hydroxybutyl allyl ether or cyclohexanedimethanol monoallyl ether; hydroxyalkyl vinyl esters such as hydroxyethyl carboxylic acid vinyl ester, hydroxybutyl carboxylic acid vinyl ester or ((hydroxymethylcyclohexyl)methoxy)acetic acid vinyl ester; hydroxyalkyl carboxylic acid allyl esters such as hydroxyethyl carboxylic acid allyl ester, hydroxybutyl carboxylic acid allyl ester, or ((hydroxymethylcyclohexyl)methoxy) acetic acid allyl ester; (meta)acrylic acid hydroxyalkyl esters such as hydroxyethyl (meta)acrylate; and the like are preferable.

As a compound having a reactive double bond and having an alkoxysilyl group, 3-(meth)acryloyloxypropyltrimethoxysilane, 3-(meth)acryloyloxypropylmethyldimethoxysilane, trimethoxysilylpropyl vinyl ether, or the like is preferable.

As a compound having a reactive double bond and having a carboxyl group, (meth)acrylic acid, itaconic acid, fumaric acid, maleic acid, maleic anhydride, citraconic acid, undecylenic acid, or the like is preferable. As a compound having an amino group, aminopropyl vinyl ether, diethylaminoethyl vinyl ether or the like is preferable.

As a compound having a reactive double bond and having an isocyanate group, 2-isocyanateethyl (meth)acrylate, 1,1-bis(acryloylmethyl)ethylisocyanate, methacrylic acid 2-(0-[1'-methylpropylideneamino]carboxyamino)ethyl, 2-[(3,5-dimethylpyrazolyl)carbonylamino]ethyl methacrylate or the like is preferable.

As a compound having a reactive double bond and having an epoxy group, glycidyl vinyl ether, glycidylcarboxylic acid vinyl ester, glycidyl allyl ether, glycidyl (meth)acrylate or the like is preferable.

Although not particularly limited, when an isocyanate group is introduced as a crosslinkable functional group, a scheme of synthesizing a polymer by using (meta)acrylic acid 2-isocyanatoethyl, methacrylic acid 2-{0-[1'-methylpropylideneamino]carboxyamino)ethyl, 2-[(3,5-dimethylpyrazolyl)carbonylamino]ethyl methacrylate or the like as one monomer unit is preferable from the viewpoint of ease of a polymerization reaction and reactivity of the functional group. Further, a (meth)acryloyl group can be introduced as a crosslinkable functional group by synthesizing a polymer using (meth)acrylic acid 2-isocyanatoethyl or the like as one monomer unit and reacting an isocyanate group in an obtained polymer with a hydroxyl group such as hydroxyethyl (meth)acrylate.

When a (meth)acryloyl group is introduced as the crosslinkable functional group, a scheme of synthesizing a polymer using hydroxyethyl (meth)acrylate as one monomer unit and then reacting a hydroxyl group in the polymer with an isocyanate group of 2-isocyanateethyl(meth)acrylate or 1,1-(bisacryloyloxymethyl)ethylisocyanate is more preferable from the viewpoint of ease of the polymerization reaction and reactivity of the functional group.

Further, when introducing a cyclic ether group (epoxy group) as a crosslinkable functional group, a scheme of synthesizing a polymer by using glycidyl (meth)acrylate as one of the monomer units is preferable from the viewpoint of ease of the polymerization reaction.

The shape of the above polymer is not particularly limited, but may include, for example, a chain shape, a branched chain shape, a ladder type, or a star type. Further, any substituent may be introduced to improve dispersibility or compatibility.

A molecular weight of the polymer is not particularly limited, but a number average molecular weight (hereinafter referred to as "Mn") is preferably 4000 to 500000 g/mol, more preferably 8000 to 200000 g/mol and further preferably 10000 to 100000 g/mol. When Mn is less than 4000 g/mol, aggregation of the inorganic particles tends to easily occur, and it becomes difficult to keep the shape of the film since a thickness of a polymer layer formed around the inorganic particles is small. When Mn exceeds 500000 g/mol, a characteristic as the inorganic particle tends to be hard to exhibit or cavity content between the organic-inorganic composites tends to decrease.

A molecular weight distribution of the polymer is obtained by Mw/Mn from a weight average molecular weight

(hereinafter referred to as "Mw") and Mn. Mn and Mw cited herein are values of polymethyl methacrylate conversion that is measured by gel permeation chromatography (GPC) as will be described in detail in an example that will be described below.

In the present embodiment, the molecular weight distribution of the polymer included in the organic-inorganic composite is equal to or less than 2.3. From the viewpoint of dispersibility of the inorganic particles, cavity control or a film formation property, it is preferable that the molecular weight (chain length) of the polymer is matching i.e., the molecular weight distribution is a value close to 1. From this viewpoint, the molecular weight distribution is preferably 1.0 to 2.2, more preferably 1.0 to 2.1, further preferably 1.0 to 1.9 and particularly preferably 1.0 to 1.8.

When a chain transfer reaction, a bimolecular termination reaction or the like occurs in the polymerization reaction, the molecular weight distribution becomes greater than 2.3. In that case, a problem is generated in that a free polymer is generated or inorganic particles aggregate. Further, in a coated film of the organic-inorganic composite it is very important, from the viewpoint of a self-film-formation property, to form a more uniform shell layer in which the molecular weight of the polymer is matching since the polymer bonded to the inorganic particles mainly functions as a binder.

[Organic-inorganic composite]

A glass transition temperature (hereinafter referred to as Tg) of the organic-inorganic composite is not particularly limited, but is preferably -10 to 180 °C, more preferably 0 to 160 °C, further preferably 20 to 150 °C and particularly preferably 40 to 120 °C so that a good film formation property can be provided while suppressing stickiness.

Halogen content of the organic-inorganic composite refers to a total amount of bromine and chlorine. This halogen content is not particularly limited, but is preferably 0.001 to 2.5 mass%, more preferably 0.01 to 1.5 mass%, and further preferably 0.1 to 1 mass% with reference to a total mass of the organic-inorganic composite for the reason of a good film formation property.

Copper content of the organic-inorganic composite is not particularly limited, but is preferably less than 0.2 mass%, more preferably less than 0.005 mass%, further preferably less than 0.02 mass%, and particularly preferably less than 0.005 mass% in order to suppress coloration of a coating film and a molded body.

Fluorine content in the organic-inorganic composite is not particularly limited, but is preferably 0 to 60 mass%, more preferably 1 to 50 mass%, and further preferably 5 to 40 mass% with reference to a total mass of the organic-inorganic composite in consideration of balance between dispersibility to general-purpose organic solvents and a refractive index control effect, water repellency/oil repellency and transparency.

The content of the inorganic oxide particles in the organic-inorganic composite is not particularly limited, but is preferably 70 to 96 mass%, further preferably 75 to 93 mass%, and particularly preferably 78 to 87 mass% from the viewpoint of refractive index control. Further, the content of the inorganic oxide particles is preferably 55 to 94 volume%, further preferably 62 to 88 volume%, and particularly preferably 66 to 78 volume% with reference to a total volume of the organic-inorganic composite from the viewpoint of refractive index control or a film formation property or moldability.

[Method of producing an organic-inorganic composite]

The organic-inorganic composite can be obtained, for example, by a method including a step of bonding a coupling agent having a polymerization initiating group to a surface of the inorganic oxide particle, a step of forming the polymer through radical polymerization initiated by the polymerization initiating group, and a step of adding a compound having a reactive double bond to the polymer as necessary.

Surface-reformed inorganic particles in which the coupling agent has been introduced into the surface of the inorganic oxide particles may be obtained by a reaction of the inorganic oxide particles and the coupling agent. The reaction of the inorganic particles and the coupling agent may be performed in a reaction liquid in which the inorganic particles and the coupling agent are dispersed or dissolved. In this case, the reaction liquid may be heated. A hydrophobizing agent may be added after the reaction with the coupling agent or together with the coupling agent, and thereby the reaction is performed. The kind of hydrophobizing agent is not particularly limited as long as the hydrophobizing agent reacts to a remaining hydroxyl group of the inorganic particle surface, but may include, for example, 1,1,1,3,3,3-hexamethyldisilazane (HMDS), chlorotrimethylsilane (TMS), dimethylethylchlorosilane, chlorodimethylpropylsilane, butylchlorodimethylsilane, chlorotriethylsilane, chlorodimethylphenylsilane, benzylchlorodimethylsilane, chlorodimethyl(3-phenylpropyl)silane, trimethylethoxysilane, triethylethoxy silane, hexamethyldisiloxane or the like.

For radical polymerization, it is preferable to select living radical polymerization (hereinafter referred to as "LRP") to reduce a dispersion degree (molecular weight distribution) of a molecular weight of a created polymer. LRP includes NMP, ATRP and RAFT. Generally, among them, ATRP is particularly preferable in terms of flexibility of a polymerization initiator, a number of kinds of applicable monomers, a polymerization temperature, or the like. Further, in the organic-inorganic composite material it is necessary to suppress creation of a free polymer that is not bonded to the inorganic

particles, and from this viewpoint, ATRP for which polymerization control is easy is particularly preferable.

A radical polymerization scheme is not particularly limited and, for example, a bulk polymerization method or a solution polymerization method may be selected. Further, from the viewpoint of productivity and safety, a scheme such as suspension polymerization, emulsion polymerization, dispersion polymerization, or seed polymerization may be adopted.

The polymerization temperature is not particularly limited and may be appropriately selected according to a polymerization method and a kind of a monomer. For example, in the case of ATRP or RAFT, the polymerization temperature is preferably -50 °C to 200 °C, further preferably 0 °C to 150 °C, and particularly preferably, 20 °C to 130 °C. If a monomer contains acrylic acid ester and/or methacrylic acid ester, it is possible to precisely perform polymerization in a relatively short time when the polymerization is performed at 50 to 130 °C.

A polymerization time is not particularly limited, and may be appropriately selected according to a polymerization method and a kind of a monomer. However, for example, the polymerization time may be 1 to 13 hours. When the polymerization time falls within this range, there is a tendency in which the content of the inorganic compound particles in the organic-inorganic composite becomes a preferable content, voids can be sufficiently formed between the organic-inorganic composites, formation of a uniform film becomes easy, and film strength is sufficient. It is more preferable for the polymerization time to be 1.5 to 10 hours from the same viewpoint.

The polymerization reaction may be performed without a solvent or with a solvent. When the solvent is used, a solvent in which dispersibility of the surface-reformed inorganic oxide particles and solubility of the polymerization catalyst are excellent is preferable. The solvent may be used alone or may be used in combination of a plurality of kinds of solvents.

The kind of solvent is not particularly limited, but may include, for example, methyl isobutyl ketone (MIBK), methyl ethyl ketone (MEK), anisole, toluene, xylene, tetrahydrofuran (THF), 1-propanol, 2-propanol, methanol, ethanol, 1-butanol, t-butanol, acetonitrile, dimethylformamide (DMF), dimethyl acetamide, dimethyl sulfoxide (DMSO), n-methylpyrrolidone, 1,4-dioxane, water or the like.

A use amount of the solvent is not particularly limited, but, for example, is preferably 0 to 2000 parts by weight and more preferably 0 to 1000 parts by weight relative to 100 parts by weight of the monomer. If the solvent amount is small, a reaction rate tends to advantageously increase, but a polymerization solution viscosity tends to increase according to a monomer kind or a polymerization condition. Further, if the solvent amount is great, the polymerization solution viscosity decreases, but the reaction rate decreases. Therefore it is preferable to appropriately adjust a combination ratio.

The polymerization reaction may be performed without a catalyst or may be performed using a catalyst, but it is preferable to use the catalyst from the viewpoint of productivity. The kind of catalyst is not particularly limited, and any catalyst may be appropriately used according to a polymerization method or a monomer kind. For example, in the case of ATRP, the kind of catalyst may be appropriately selected from among various catalysts that have been generally known according to a polymerization scheme. Specifically, for example, a metal catalyst containing Cu(0), $Cu^+$, $Cu2^+$, $Fe^+$, $Fe^{2+}$, $Fe^{3+}$, $Ru^{2+}$ or $Ru^{3+}$ may be used. Above all, in particular, a monovalent copper compound containing $Cu^+$ and zero-valent copper are preferable in order to achieve advanced control of the molecular weight and the molecular weight distribution. Specific examples of the catalyst may include Cu(0), CuCl, CuBr, $CuBr_2$, and $Cu_2O$. The catalyst may be used alone or may be used in combination of a plurality of catalysts. A use amount of the catalysts is usually 0.01 to 100 mol, preferably 0.01 to 50 mol, and further preferably 0.01 to 10 mol relative to 1 mol of the polymerization initiating group.

The metal catalyst is usually used together with an organic ligand. Examples of ligand atoms to the metal may include a nitrogen atom, an oxygen atom, a phosphorus atom, and a sulfur atom. Above all, the nitrogen atom or the phosphorus atom is preferable. Specific examples of the organic ligand may include 2,2'-bipyridine and its derivatives, 1,10-phenanthroline and its derivatives, tetramethylethylenediamine, N,N,N',N,"N"-pentamethyldiethylenetriamine (hereinafter referred to as "PMDETA"), tris(dimethylaminoethyl)amine (hereinafter referred to as "Me6TREN"), tris(2-pyridylmethyl)amine, triphenylphosphine, or tributylphosphine. When polymerization of acrylic acid esters or methacrylic acid esters is performed, PMDETA, Me6TREN, 2,2'-bipyridine and its derivative, 4,4'-di(5-nonyl)-2,2'-dipyridine (hereinafter referred to as "dNbpy"), are preferable. Specific examples of the organic ligand is shown in the following chemical formula.

[Chemical formula 8]

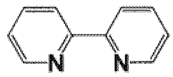
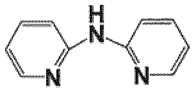
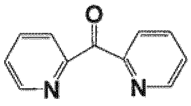
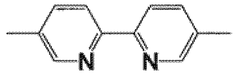
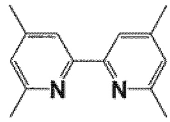

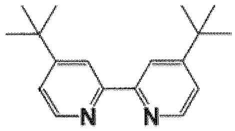
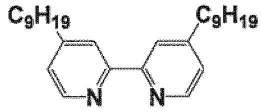
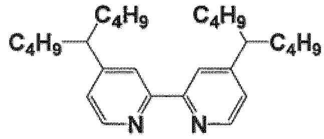

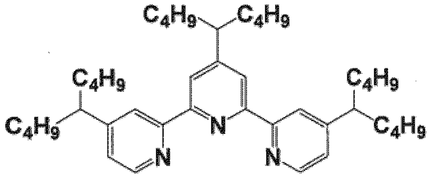
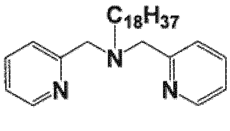
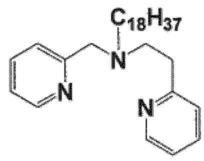

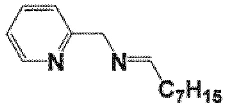
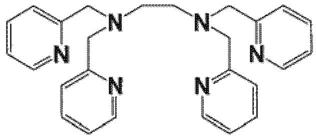
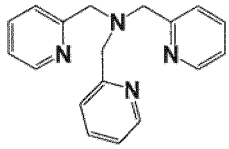

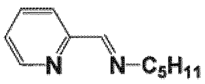

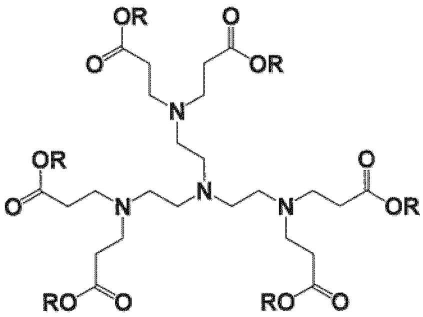
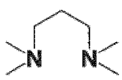
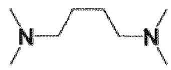
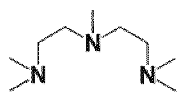

R: 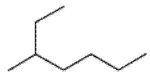
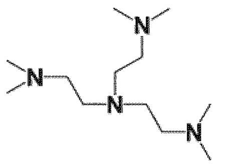

The metal catalyst and the organic ligand may be separately added to be mixed in a polymerization system or may be mixed in advance and then added to the polymerization system. Particularly, when a copper compound is used, the former method is preferable.

In the polymerization reaction, an additive may be used as necessary, in addition to the above components. The kind of the additive is not particularly limited but may include, for example, a dispersant or a stabilizer, an emulsifier (surfactant) or the like.

The dispersant or the stabilizer is not particularly limited as long as the dispersant or the stabilizer serves its function, but may include various hydrophobic or hydrophilic dispersants or stabilizers such as: a polystyrene derivative such as polyhydroxystyrene, poly(styrene sulfonate), vinylphenol-(meth)acrylic acid ester copolymer, styrene-(meth)acrylic acid ester copolymer or styrene-vinylphenol-(meth)acrylic acid ester copolymer; a poly((meth)acrylic acid) derivative such as poly((meth)acrylic acid), poly(meth)acrylamide, polyacrylonitrile, poly(ethyl(meth)acrylate) or poly(butyl (meth)acrylate); a poly(vinyl alkyl ether) derivative such as poly(methyl vinyl ether), poly(ethyl vinyl ether), poly(butyl vinyl ether) or poly(isobutyl vinyl ether); a cellulose derivative such as cellulose, methylcellulose, cellulose acetate, cellulose nitrate, hydroxymethylcellulose, hydroxyethylcellulose, hydroxypropylcellulose, or carboxymethylcellulose; a poly(vinyl acetate) derivative such as polyvinylalcohol, polyvinylbutyral, polyvinylformal or poly(vinyl acetate); a nitrogen-containing polymer derivative such as polyvinylpyridine, polyvinylpyrrolidone, polyethyleneimine or poly-2-methyl-2-oxazoline; a polyvinylhalide derivative such as polyvinylchloride or polyvinylidenechloride; and a polysiloxane

derivative such as polydimethylsiloxane. These may be used alone and may be used in combination of these.

The emulsifier (surfactant) is not particularly limited as long as the emulsifier serves its function, but may include an anionic emulsifier such as an alkylsulfuric acid ester salt such as sodium lauryl sulfate, an alkylbenzene sulfonate such as dodecylbenzene sulphonic acid sodium, an alkylnaphthalene sulfonate, a fatty acid salt, an alkyl phosphate or an alkyl sulfosuccinate; a cationic emulsifier such as an alkylamine salt, quaternary ammonium salt, an alkylbetaine, or amine oxide; a nonionic emulsifier such as a polyoxyethylene alkyl ether, a polyoxyethylene alkyl ether, a polyoxyethylene alkylallyl ether, a polyoxyethylene alkylphenyl ether, a sorbitan fatty acid ester, a glycerin fatty acid ester, or a polyoxyethylene fatty acid ester; or the like. These may be used alone and may be used in combination of these.

As a step of adding the compound having a reactive double bond to the polymer, the compound having a reactive double bond may be introduced into a polymerization solution containing an organic-inorganic composite obtained by radical polymerization and a reaction may be simply performed, or a washed and purified organic-inorganic composite may be dispersed in an organic solvent again and then a reaction may be performed.

A reaction of the functional group in the polymer and the functional group of the compound having the reactive double bond may be performed without a catalyst or may be performed using the catalyst, but it is preferable to use the catalyst from the viewpoint of productivity.

A polymerization inhibitor may be introduced into the reaction liquid in order to suppress the reactive double bond from radically reacting and being gelated during a reaction between the functional groups.

A producing method is not particularly limited as long as the producing method is the above-described producing method, but representative producing methods are shown below.

[Organic-inorganic composite material producing method 1: Producing method by discontinuous steps]

(1) A coupling agent having a polymerization initiating group is added to a dispersion of inorganic compound particles to cause a reaction at a predetermined temperature, and a hydrophobizing agent is also added to conduct a reaction to obtain a dispersion of surface-reformed inorganic compound particles.

(2) After cooled to room temperature, the dispersion is washed with a predetermined solvent, and then solid content is separated and dried through centrifugal separation to obtain the surface-reformed inorganic compound particles.

(3) The surface-reformed inorganic compound particles are dispersed in a polymerization solvent, radical polymerizable monomers and a catalyst are added to cause a reaction under predetermined conditions, and then a polymer bonded to the inorganic compound particles is formed through living radical polymerization initiated by the polymerization initiating group to obtain an organic-inorganic composite 1. A reaction (4) or later is performed as necessary.

(4) After cooling to room temperature, a polymerization inhibitor is added to a reaction liquid of the organic-inorganic composite 1, a compound having a functional group including a reactive double bond and a catalyst are also added to cause a reaction under predetermined conditions, and then washing is performed with a solvent to obtain an organic-inorganic composite 2.

[Organic-inorganic composite material producing method 2: Producing method by continuous steps]

(1) A coupling agent having a polymerization initiating group is added to a dispersion of inorganic compound particles to cause a reaction at a predetermined temperature, and a hydrophobizing agent is also added to cause a reaction to obtain a dispersion of surface-reformed inorganic compound particles.

(2) After cooling to room temperature, a radical polymerizable monomer and a catalyst are added to cause a reaction under predetermined conditions, and then a polymer bonded to the inorganic compound particles is formed through living radical polymerization initiated by the polymerization initiating group to obtain an organic-inorganic composite 1. A reaction (3) or later is performed as necessary.

(3) After cooling to room temperature, a polymerization inhibitor is added to the reaction liquid of the organic-inorganic composite 1, a compound having a functional group including a reactive double bond and a catalyst are also added to cause a reaction under predetermined conditions, and then washing is performed with a solvent to obtain an organic-inorganic composite 2.

[Coating material]

The coating material of the present embodiment is not particularly limited as long as the coating material contains the organic-inorganic composite. A form of the coating material may be a liquid or a solid, but is preferably a liquid.

Above all, a coating material containing an organic-inorganic composite dispersed in an organic solvent is preferable.

An organic solvent used for the coating material is not particularly limited, but a general-purpose organic solvent in which dispersibility of the organic-inorganic composite described above is good and safety is relatively high is preferable. The solvent may be used alone or may be used in a mixed form of a plurality of solvents. From the viewpoint of a film formation property and safety, an evaporation rate of the organic solvent is preferably 10 to 600 and further preferably 20 to 200 when an evaporation rate of butyl acetate is assumed to be 100. From the same viewpoint, a boiling point of the organic solvent is preferably 75 to 200 °C and further preferably 90 to 180 °C. The organic solvent may be used alone or may be used in combination of two or more.

For example, examples of the organic solvent may include acetone, methyl ethyl ketone (MEK), diethyl ketone, methyl isobutyl ketone (MIBK), diisobutyl ketone, cyclohexanone, diacetone alcohol, isophorone, tetrahydrofuran (THF), 2-methoxyethanol (methy lcellosolve), 2-ethoxyethanol (ethyl cellosolve), 2-n-butoxyethanol (n-butyl cellosolve), ethyleneglycol mono-tert-butyl ether (t-butyl cellosolve), 1-methoxy-2-propanol (propyleneglycol monoethyl ether), 3-methoxy-3-methylbutanol (methylmethoxybutanol), diethyleneglycol mono-n-butyl ether (diethyleneglycol monobutyl ether), benzene, toluene, xylene, anisole (methoxybenzene), benzotrifluoride, cyclohexane, hexane, mineral spirit, benzylalcohol, methanol, ethanol, 1-propanol, 2-propanol, 1-butanol, t-butanol, ethyl acetate, isopropyl acetate, propyl acetate, butyl acetate, isobutyl acetate, acetic acid 2-methoxy-1-methylethyl(propyleneglycol monomethyl ether acetate), acetic acid 2-ethoxyethyl (acetic acid cellosolve), 3-ethoxypropionic acid ethyl, acetic acid 3-methoxybutyl, acetic acid 3-methoxy-3-methylbutyl, diethyl ether, ethyleneglycol, propyleneglycol, 1,3-propanediol, acetonitrile, dimethylacetamide, dimethylformamide (DMF), dimethylsulfoxide (DMSO), n-methylpyrrolidone (NMP), pyridine, 1,4-dioxane, chloroform, and the like.

Further, a photopolymerization initiator, a crosslinker, a free polymer, an additive, a plasticizer, oils and fats, an emulsifier (surfactant), a coupling agent, an acid, an alkali, a monomer, an oligomer, a polymer, a pigment, a dye, a perfume, a colorant or the like may be added as necessary.

The photopolymerization initiator of the present embodiment is not particularly limited as long as the photopolymerization initiator polymerizes a composition through radiation of an active ray, but may be roughly classified into three of a photo-radical initiator, a photo-acid generating agent, and a photo base generator.

It is preferable to use a compound that generates a radical through radiation of an active ray or radiation as the photo-radical initiator. Using such a photo-radical initiator, a polymerization reaction of the reactive double bond in the organic polymer can occur due to the radical generated by the irradiation of the active ray or the radiation, and the organic-inorganic composite can be cured.

As the photo-radical initiator, acetophenones, benzoins, benzophenones, ketals, anthraquinones, thioxanthones, an azo compound, a peroxides, 2,3-dialkyldione compounds, disulfide compounds, thiuram compounds, fluoroamine compounds, oxime esters or the like is used. Specific examples of the photo-radical initiator include acetophenones such as 2,2'-diethoxyacetophenone, p-dimethylacetophenone, 1-hydroxycyclohexylphenylketone, 1-hydroxydimethylphenylketone, 2-methyl-4'-methylthio-2-moripholinopropiophenone, 2-benzyl-2-dimethylamino-1-(4-moripholinophenyl)-butanone, 1, 2-methyl-1[4-(methylthio)phenyl]-2-moripholinopropane-1-on, $\alpha$-hydroxyacetophenone or $\alpha$-aminoacetamidephenone; benzoins such as benzoin methyl ether, benzoin ethyl ether, benzoin isopropyl ether or benzyl dimethyl ketal; benzophenones such as benzophenone, 2,4'-dichlorobenzophenone, 4,4'-dichlorobenzophenone or p-chlorobenzoylphenone; and oxime esters such as 1,2-octanedion 1- [4-(phenylthio)-2-(0-benzoyloxime)] or ethanone-1-[9-ethyl-6-(2-methylbenzoyl)-9H-carbazol-3-yl]-1-(0-acetyl oxime). The photo-radical initiator may be used alone or may be used in combination of two or more.

The photo-acid generating agent is a compound that generates acid through the irradiation of the active ray or the radiation and may include, for example, a sulfonic acid derivative, onium salts, or carboxylic acid esters.

Examples of the sulfonic acid derivative may include disulfones, disulfonyl diazomethanes, disulfonyl methanes, sulfonyl benzoylmethanes, imide sulfonates such as trifluoromethyl sulfonate derivatives, benzoin sulfonates, sulfonates of 1-oxy-2-hydroxy-3-propylalcohol, pyrogallol trisulfonates, benzyl sulfonates and the like. Specific examples include diphenyldisulfone, ditosyldisulfone, bis(phenylsulfonyl)diazomethane, bis(chlorophenyl sulfonyl)diazomethane, bis(xylylsulfonyl)diazomethane, phenylsulfonylbenzoyldiazomethane, bis(cyclohexylsulfonyl)methane, benzoin tosylate, 1,2-diphenyl-2-hydroxypropyl tosylate, 1,2-di(4-methylmercaptophenyl)-2-hydroxypropyl tosylate, pyrogallol methylsulfonate, pyrogallol ethylsulfonate, 2,6-dinitrophenylmethyl tosylate, ortho-nitrophenylmethyl tosylate, para-nitrophenyl tosylate, and the like.

A carboxylic acid ester may include 1,8-naphthalene dicarboxylic acid imide methylsulfonate, 1,8-naphthalene dicarboxylic acid imide tosylsulfonate, 1,8-naphthalene dicarboxylic acid imide trifluoromethylsulfonate, 1,8-naphthalene dicarboxylic acid imide camphorsulfonate, succinic acid imide phenylsulfonate, succinic acid imide tosylsulfonate, succinic acid imide trifluoromethylsulfonate, succinic acid imide camphorsulfonate, phthalimide trifluorosulfonate, cis-5-norbornene-end-2,3-dicarboxylic acid imide trifluoromethylsulfonate or the like.

As an onium salt, a sulfonium salt or an iodonium salt having an anion such as tetrafluoroborate ($BF_4^-$), hexafluorophosphate ($PF_6^-$), hexafluoroantimonate ($SbF_6^-$), hexafluoroarsenate ($AsF_6^-$), hexachloroantimonate ($SbCl_6^-$),

tetraphenylborate, tetrakis(trifluoromethylphenyl)borate, tetrakis(pentafluoromethylphenyl)borate, perchlorate ion ($ClO_4^-$), trifluoro methane sulfonic acid ion ($CF_3SO_3^-$), fluorosulfonic acid ion ($FSO_3^-$), toluene sulfonic acid ion, trinitrobenzene sulfonic acid anion or trinitrotoluene sulfonic acid anion, may be used.

Examples of the sulfonium salt may include triphenylsulfonium hexafluoroarcenate, triphenylsulfonium hexafluoroborate, triphenylsulfonium tetrafluoroborate, triphenylsulfonium tetrakis(pentafluorobenzyl)borate, methyldiphenylsulfonium tetrafluoroborate, methyldiphenylsulfonium tetrakis(pentafluorobenzyl)borate, dimethylphenylsulfonium hexafluorophosphate, triphenylsulfonium hexafluorophosphate, triphenylsulfonium hexafluoroantimonate, diphenylnaphthylsulfonium hexafluoroarsenate, tritolylsulfonium hexafluorophosphate, anisyldiphenylsulfonium hexafluoroantimonate, 4-butoxyphenyldiphenylsulfonium tetrafluoroborate, 4-butoxyphenyldiphenyl sulfonium tetrakis(pentafluorobenzyl)borate, 4-chlorophenyldiphenylsulfonium hexafluoroantimonate, tris(4-phenoxyphenyl)sulfonium hexafluorophosphate, di(4-ethoxyphenyl)methylsulfomum hexafluoroarsenate, 4-acetylphenyldiphenylsulfonium tetrafluoroborate, 4-acetylphenyldiphenylsulfonium tetrakis(pentafluorobenzyl)borate, tris(4-thiomethoxyphenyl)sulfonium hexafluorophosphate, di(methoxysulfonylphenyl)methylsulfonium hexafluoroantimonate, di(methoxynaphthyl)methylsulfonium tetrafluoroborate, di(methoxynaphthyl)methylsulfonium tetrakis(pentafluorobenzyl)borate, di(carbomethoxyphenyl)methylsulfonium hexafluorophosphate, (4-octyloxyphenyl)diphenylsulfonium tetrakis(3,5-bis-trifluoromethylphenyl)borate, tris(dodecylphenyl)sulfonium tetrakis(3,5-bis-trifluoromethylphenyl)borate, 4-acetamidephenyldiphenylsulfonium tetrafluoroborate, 4-acetamidephenyldiphenylsulfonium tetrakis(pentafluorobenzyl)borate, dimethylnaphthylsulfonium hexafluorophosphate, trifluoromethyldiphenylsulfonium tetrafluoroborate, trifluoromethyldiphenylsulfonium tetrakis(pentafluorobenzyl)borate, phenylmethylbenzylsulfonium hexafluorophosphate, 10-methylphenoxathinium hexafluorophosphate, 5-methylthianthrenium hexafluorophosphate, 10-phenyl-9,9-dimethylthioxanthenium hexafluorophosphate, 10-phenyl-9-oxothioxanthenium tetrafluoroborate, 10-phenyl-9-oxothioxanthenium tetrakis(pentafluorobenzyl)borate, 5-methyl-10-oxothianthrenium tetrafluoroborate, 5-methyl-1-10-oxothianthrenium tetrakis(pentafluorobenzyl)borate, and 5-methy-10,10-dioxothianthrenium hexafluorophosphate.

The iodonium salt may include (4-n-decyloxyphenyl)phenyliodonium hexafluoroantimonate, 4-(2-hydroxy-n-tetradecyloxy)phenyl]phenyliodonium hexafluoroantimonate, [4-(2-hydroxy-n-tetradecyloxy)phenyl]phenyliodonium trifluorosulfonate, [4-(2-hydroxy-n-tetradecyloxy)phenyl]phenyliodonium hexafluorophosphate, [4-(2-hydroxy-n-tetradecyloxy)phenyl]phenyliodonium tetrakis(pentafluorophenyl)borate, bis(4-t-butylphenyl)iodonium hexafluoroantimonate, bis(4-t-butylphenyl)iodonium hexafluorophosphate, bis(4-t-butylphenyl)iodonium trifluorosulfonate, bis(4-t-butylphenyl)iodonium tetrafluoroborate, bis(dodecylphenyl)iodonium hexafluoroantimonate, bis(dodecylphenyl)iodonium tetrafluoroborate, bis(dodecylphenyl)iodonium hexafluorophosphate, bis(dodecylphenyl)iodonium trifluoromethylsulfonate, di(dodecylphenyl)iodonium hexafluoroantimonate, di(dodecylphenyl)iodonium triflate, diphenyliodonium bisulfate, 4,4' -dichlorodiphenyliodonium bisulfate, 4,4'-dibromodiphenyliodonium bisulfate, 3,3'-dinitrodiphenyliodonium bisulfate, 4,4'-dimethyldiphenyliodonium bisulfate, 4,4'-bis-succinimide diphenyliodonium bisulfate, 3-nitrodiphenyliodonium bisulfate, 4,4'-dimethoxydiphenyliodonium bisulfate, bis(dodecylphenyl)iodonium tetrakis(pentafluorophenyl)borate, (4-octyloxyphenyl)phenyliodonium tetrakis(3,5-bis-trifluoromethylphenyl)borate.

As other onium salts, an aromatic diazonium salt may be used and, for example, p-methoxybenzenediazonium hexafluoroantimonate or the like may be used.

Commercially available onium salts may include San-Aid SI-60, SI-80, SI-100, SI-60L, SI-80L, SI-100L, SI-L145, SI-L150, SI-L160, SI-L110 or SI-L147 (made by Sanshin Chemical Industries, Ltd.), UVI-6950, UVI-6970, UVI-6974 or UVI-6990 (made by Union Carbide Corp.), ADEKA OPTOMER SP-150, SP-151, SP-170, SP-171 or SP-172 (made by Asahi Denka Kogyo K. K.), Irgacure 261 or Irgacure 250 (made by Ciba Specialty Chemicals Co., Ltd.), CI-2481, CI-2624, CI-2639 or CI-2064 (made by Nippon Soda Co., Ltd.), CD-1010, CD-1011 or CD-1012 (made by Sartomer), DS-100, DS-101, DAM-101, DAM-102, DAM-105, DAM-201, DSM-301, NAI-100, NAI-101, NAI-105, NAI-106, SI-100, SI-101, SI-105, SI-106, PI-105, NDI-105, BENZOIN TOSYLATE, MBZ-101, MBZ-301, PYR-100, PYR-200, DNB-101, NB-101, NB-201, BBI-101, BBI-102, BBI-103 or BBI-109 (made by Midori Kagaku Co., Ltd.), PCI-061T, PCI-062T, PCI-020T or PCI-022T (made by Nippon Kayaku Co., Ltd.), IBPF or IBCF (made by Sanwa Chemical Co., Ltd.) CD1012 (made by Sartomer), IBPF or IBCF (made by Sanwa Chemical Co., Ltd.), BBI-101, BBI-102, BBI-103 or BBI-109 (made by Midori Kagaku Co., Ltd.), UVE1014 (made by General Electronics, Inc.), RHODORSIL-PI2074 (made by Rhodia Corporation), and WPI-113 or WPI-116 (made by Wako Pure Chemical Industries, Ltd.), etc. Further, a diaryliodonium salt that can be fabricated using a method described in J. Polymer Science: Part A: Polymer Chemistry, Vol. 31, 1473-1482 (1993), J. Polymer Science: Part A: Polymer Chemistry, Vol. 31, 1483-1491(1993) may be used. The salts may be used alone or in combination of two or more.

As the photobase generator, for example, an acyclic acyloxyimino compound, an acyclic carbamoyloxime compound, a carbamoylhydroxylamine compound, a carbamic acid compound, a formamide compound, an acetamide compound, a carbamate compound, a benzylcarbamate compound, a nitrobenzylcarbamate compound, a sulfonamide compound, an imidazole derivative compound, an aminimide compound, a pyridine derivative compound, an α-aminoacetophenone derivative compound, a quaternary ammonium salt derivative compound, an α-lactonering derivative compound, an aminimide compound, or a phthalimide derivative compound may be used. Above all, the acyloxyimino

compound that has relatively higher amine generation efficiency is preferable. The compounds may be used alone or in combination of two or more.

The curing agent in the present embodiment is a material used to cure a resin composition, and is not particularly limited as long as the curing agent can react with a cyclic ether group. It is preferable for the curing agent to be used together with a curing accelerator, which will be described below.

A curing agent includes, for example, an acid anhydride-based compound, an amine-based compound, an amide-based compound, a phenolic compound or the like. Above all, an acid anhydride-based compound is preferable, and a carboxylic acid anhydride is more preferable.

Further, an alicyclic acid anhydride is included in the acid anhydride-based compound cited herein, and an alicyclic carboxylic acid anhydride is preferable among the carboxylic acid anhydrides. These materials may be used alone or may be used in combination of the plurality of these.

Specific examples of the curing agent may include, for example, phthalic anhydride, succinic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride, methylhexahydrophthalic anhydride, diaminodiphenylmethane, diethylenetriamine, triethylenetetramine, diaminodiphenylsulfone, isophoronediamine, dicyandiamide, tetraethylenepentamine, dimethylbenzylamine, ketimine compound, polyamide resin synthesized from dimer of linoleic acid and ethylenediamine, bisphenols, polycondensates of phenols (phenol, alkyl-substituted phenol, naphthol, alkyl-substituted naphthol, dihydroxybenzene, dihydroxynaphthalene, etc.) and various aldehydes, polymers of phenols and various diene compounds, polycondensates of phenols and aromatic dimethylol, or condensates of bismethoxymethylbiphenyl and naphthols or phenols, biphenols and a modified material thereof, imidazole, boron trifluoride-amine complex, guanidine derivative and the like.

Specific examples of the alicyclic carboxylic acid anhydride may include 1,2,3,6-tetrahydrophthalic anhydride, 3,4,5,6-tetrahydrophthalic anhydride, hexahydrophthalic anhydride, "4-methylhexahydrophthalic anhydride/hexahydrophthalic anhydride=70/30", 4-methylhexahydrophthalic anhydride, "methyl bicyclo[2.2.1]heptane-2,3-dicarbonic acid anhydride/bicyclo[2.2.1]heptane-2,3-dicarbon acid anhydride" or the like.

Further, for example, specific examples of the aliphatic acid anhydride may include tetrapropenylsuccinic anhydride, octenylsuccinic acid anhydride, 2,5-diketotetrahydrofuran or the like.

The curing accelerator in the present embodiment means a curing catalyst used for the purpose of promotion of a curing reaction, and the curing accelerator may be used alone or in a combination of a plurality of them. The curing accelerator is not particularly limited, but it is preferable to select tertiary amines and salts thereof.

Specific examples of the curing accelerator may include the following:

(1) Tertiary amines: benzyldimethylamine, 2,4,6-tris(dimethylaminomethyl)phenol, cyclohexyldimethylamine, triethanolamine, etc.

(2) Imidazoles: 2-methylimidazole, 2-n-heptylimidazole, 2-n-undecylimidazole, 2-phenylimidazole, 2-phenyl-4-methylimidazole, 1-benzyl-2-methylimidazole, 1-benzyl-2-phenylimidazole, 1,2-dimethylimidazole, 2-ethyl-4-methylimidazole, 1-(2-cyanoethyl)-2-methylimidazole, 1-(2-cyanoethyl)-2-n-undecylimidazole, 1-(2-cyanoethyl)-2-phenylimidazole, 1-(2-cyanoethyl)-2-ethyl-4-methylimidazole, 2-phenyl-4-methyl-5-hydroxymethylimidazole, 2-phenyl-4,5-di(hydroxymethyl)imidazole, 1-(2-cyanoethyl)-2-phenyl-4,5-di[(2'-cyanoethoxy)methyl]imidazole, 1-(2-cyanoethyl)-2-n-undecylimidazolium trimellitate, 1-(2-cyanoethyl)-2-phenylimidazolium trimellitate, 1-(2-cyanoethyl)-2-ethyl-4-methylimidazolium trimellitate, 2,4-diamino-6-[2'-methylimidazolyl-(1')]ethyl-s-triazine, 2,4-diamino-6-(2'-n-undecylimidazolyl)ethyl-s-triazine, 2,4-diamino-6-[2'-ethyl-4'-methylimidazolyl-(1')]ethyl-s-triazine, isocyanuric acid additive of 2-methylimidazole, isocyanuric acid additive of 2-phenylimidazole, isocyanuric acid additive of 2,4-diamino-6-[2'-methylimidazolyl-(1 & apos;)]ethyl-s-triazine, or the like,

(3) Organic phosphorus-based compound: diphenylphosphine, triphenylphosphine, triphenylphosphite or the like,

(4) Quaternary phosphonium salts: benzyltriphenylphosphonium chloride, tetra-n-butylphosphonium bromide, methyltriphenylphosphonium bromide, ethyltriphenylphosphonium bromide, n-butyltriphenylphosphonium bromide, tetraphenylphosphonium bromide, ethyltriphenylphosphonium iodide, ethyltriphenylphosphonium acetate, tetra-n-butylphosphonium o,o-diethylphosphorodithioate, tetra-n-butylphosphonium benzotriazolate, tetra-n-butylphosphonium tetrafluoroborate, tetra-n-butyl-phosphonium tetraphenylborate, tetraphenylphosphonium tetraphenylborate, or the like,

(5) Diazabicycloalkenes: 1,8-diazabicyclo[5.4.0]undecene-7 and an organic acid salt thereof or the like,

(6) Organometallic compound: octyl acid zinc, actyl acid tin, an aluminum acetyl acetone complex or the like,

(7) Quaternary ammonium salts: tetraethylammonium bromide, tetra-n-butylammonium bromide or the like,

(8) Metal halide: boron compounds such as boron trifluoride or boric acid triphenyl; zinc chloride; stannic chloride; or the like.

Multi-functional acrylates

The crosslinker is not particularly limited, but may include, for example, a compound having a plurality of (meth)acryloyl groups.
As a (meth)acrylate crosslinker having two (meth)acryloyl groups in a molecule, alkyleneglycol di(meth)acrylates such as ethyleneglycol di(meth)acrylate, butanediol di(meth)acrylate, hexanediol di(meth)acrylate, or cyclohexanedimethanol di(meth)acrylate; polyalkyleneglycol di(meth)acrylates such as triethyleneglycol di(meth)acrylate, tripropyleneglycol di(meth)acrylate, tetraethyleneglycol di(meth)acrylate, or polyethyleneglycol di(meth)acrylate; or the like are exemplified.
As a (meth)acrylate crosslinker having three (meth)acryloyl groups in a molecule, tri(meth)acrylate having a branched alkyl group such as trimethylolpropane tri(meth)acrylate or pentaerythritol tri(meth)acrylate; tri(meth)acrylate having a branched alkylene ether group such as glycerol propoxy tri(meth)acrylate or trimethylol propane triethoxy tri(meth)acrylate; tri(meth)acrylate containing a heterocyclic ring such as tris(2-hydroxyethyl)isocyanurate tri(meth)acrylate; or the like are exemplified.
As a (meth)acrylate crosslinker having four or more (meth)acryloyl groups in a molecule, a poly(meth)acrylate having a plurality of branched alkyl groups such as di(trimethylolpropane) tetra(meth)acrylate or dipentaerythritol hexa(meth)acrylate; a poly(meth)acrylate having a plurality of branched alkyl groups and a hydroxyl group such as dipentaerythritol penta(meth)acrylate; or the like is exemplified. These (meth)acrylic acid ester-based crosslinkers may be used alone or in combination of two or more.
A coating method is not particularly limited as will be described below, but a wet coat method is preferably used since a large area can be coated and facility cost can be suppressed. To that end, it is preferable for a coating material to be a liquid in which the above-described organic-inorganic composite has been dispersed in a solvent.
A solid content concentration (concentration of the organic-inorganic composite containing a free polymer) in the coating material is not particularly limited, but in view of balancing dispersibility and a film formation property, the solid content concentration is preferably 1 to 70 mass%, further preferably 1 to 50 mass%, and particularly preferably 1 to 20 mass% with reference to a total mass of the coating material. The solid content concentration may be adjusted by directly diluting the organic-inorganic composite or it may be adjusted by concentrating a dilute solution with an evaporator or the like.

[Organic-inorganic composite film]

The organic-inorganic composite film of the present embodiment includes the organic-inorganic composite .
A "film" in the present invention is not limited in thickness, and may be a film formed on a support base or may be a film forming a structure alone.
A term "void" in the present invention means a micro void formed between two or more adjacent inorganic oxide particles of the organic-inorganic composite forming the film. A term "cavity" means a hole formed inside the inorganic compound particle itself, and is distinguished from "void".
A size of the void is not particularly limited, but is preferably a size that does not scatter light. In other words, even a film having the voids can be regarded as a uniform film optically or macroscopically. Therefore, a percentage of voids with respect to a volume of an apparent film, i.e., the void content, may be calculated based on a volume average of a refractive index (>1) of the organic-inorganic composite forming the film and a refractive index of the void (a refractive index of the air: 1.00).
A percentage (void content) of voids formed between the organic-inorganic composites is 3 to 70 volume%, preferably 10 to 60%, and further preferably 20 to 50% with reference to a volume of the cured organic-inorganic composite film. When the void content is less than 3 volume%, an effect of the low refractive index of the film tends to be reduced. Further, when the void content exceeds 70 volume%, film strength decreases and the film tends to be fragile.
The refractive index is measured by a method that will be described below, and is 1.36 or less, and preferably 1.33 or less from the viewpoint of reflectance suppression. If the refractive index is greater than 1.42, a suppression effect of the reflectance decreases and application to an antireflection film or the like becomes difficult.
A minimum reflectance of the organic-inorganic composite film is not particularly limited, but the minimum reflectance is measured by a method that will be described below, and is preferably 1.5% or less, more preferably 1.2% or less, further preferably 1% or less, and particularly preferably 0.5% or less from the viewpoint of reflectance suppression. If the minimum reflectance is greater than 1.5%, application to an antireflection film or the like becomes difficult.
Pencil hardness of the organic-inorganic composite film is not particularly limited, but the pencil hardness is measured by a method that will be described below, and is preferably HB, or more, more preferably F or more, and further preferably H or more from the viewpoint of handling.
The organic-inorganic composite film of the present embodiment is not particularly limited as long as the organic-inorganic composite film is a film including the organic-inorganic composite, but it is preferable for the organic-inorganic

composite film of the present embodiment to be a film formed by coating the above-described coating material using a method that will be described below. Generally, the organic-inorganic composite film may be formed to a thickness of a few nm to a few cm on a base material (e.g., a PET film, a TAC film, glass, a resin material such as acrylic polycarbonate, a metal, a silicon wafer, an LED, a semiconductor, a CD, a DVD or various hard coat layers).

As a coating method, "a dry coating method such as vapor deposition, sputtering or ion plating," "a wet coating method such as print, slit coat, bar coat, applicator coating, spin coat, blade coat, air knife coat, gravure coat, roll coat, spray coat, or dip coat" or the like is generally known. Further, in addition to the above-described method, there is a method in which an organic-inorganic composite film is formed on a base material by applying "a molding treatment method such as film molding, lamination molding, injection molding, blow molding, compression molding, rotational molding, extrusion molding, or extension molding". These methods may be used alone or in combination of a plurality of these.

The "free polymer" refers to a polymer not bonded to the inorganic compound particles. In a cured material, a composition forming the cured material, which is a polymer not bonded to the inorganic compound particles before a curing reaction or an organic compound having a low molecular weight is included. In other words, the free polymer refers to a compound that filles a void formed between organic-inorganic composite inorganic oxide particles. A method of measuring the free polymer will be described in detail in an example that will be described below.

A percentage of the free polymers not bonded to the inorganic compound particles in the present embodiment is obtained using a method that will be described below. This percentage is 20 mass% or less and preferably 3 mass% or less from the viewpoint of voids being effectively formed with respect to an inorganic compound amount. As described above, when the percentage of the free polymer is 30 mass% or more, the free polymers are not uniformly dispersed in the structure, and accordingly, stable production is not only difficult but void content is also degraded since the free polymers fill the voids formed between the organic-inorganic composite inorganic particles. The refractive index of the void is 1.00, which is a much smaller value than that of the material forming a film. Therefore, since the refractive index greatly changes with a small difference in void content, it is preferable to control the free polymer amount and effectively form uniform voids.

Curing of the organic-inorganic composite film in the present embodiment is not particularly limited, but energy ray curing or thermal curing is preferable and photo-curing is particularly preferable. A photo-curing method is not particularly limited. Usually, a polymerization initiator is decomposed through stimulation of an active ray, a polymerization initiation species is generated, and a polymerizable functional group of a target substance is polymerized.

The photo-curing is a method of obtaining a cured material by irradiating an active ray (an ultraviolet ray, a near-ultraviolet ray, a visible ray, a near-infrared ray, an infrared ray or the like). The kind of active ray is not particularly limited, but is preferably the ultraviolet ray or the visible ray and more preferably the ultraviolet ray.

Among photo-curing, a photo-radical polymerization type is more preferable due to the advantages of high reactivity of a reactive double bond and a short time taken for crosslink.

In addition to the crosslink by the photo-radical polymerization described above, a crosslink reaction by cationic polymerization and heating, a crosslink reaction by mixing a compound having a functional group capable of reacting with an organic polymer, and the like may be used in combination. The crosslink of the organic-inorganic composite may be performed, for example, when at least one reactive double bond is included in the polymer of the organic-inorganic composite, by initiating a polymerization reaction from a reactive double bond by a radical generated from a photo-radical initiator and forming a bond between the polymers or between the polymer and the inorganic compound particles. Further, when a crosslinker is included, the crosslink may be performed by the bond between the polymers or between the polymer and the inorganic compound particles being formed by the crosslinker. Further, for the bond between the polymers or between the polymer and the inorganic compound particles, a bond between polymers of different organic-inorganic composites or between the polymer and inorganic compound particles is preferable, but there may be a bond between polymers of the same organic-inorganic composites or between the polymer and inorganic compound particles.

A generation source for the active ray is not particularly limited and may include, for example, various light sources, such as a low-pressure mercury lamp, a moderate-pressure mercury lamp, a high-pressure mercury lamp, a super high-pressure mercury lamp, a UV lamp, a xenon lamp, a carbon arc lamp, a metal halide lamp, a fluorescent lamp, a tungsten lamp, an argon ion laser, a helium cadmium laser, a helium neon laser, a krypton ion laser, various semiconductor lasers, a YAG laser, an excimer laser, a light emitting diode, a CRT light source, a plasma light source, or an electron beam irradiation device.

Irradiation light intensity differs according to wavelengths of a used light source, but is usually in a range of a few $mW/cm^2$ to 10 $W/cm^2$. The irradiation light intensity is preferably in a range of several $mW/cm^2$ to 5 $W/cm^2$. An irradiation amount is appropriately set according to sensitivity of the reactive double bond, a thickness or a temperature of the coating film, or the like.

Here, thermal curing is a method of curing by causing a three-dimensional crosslink between molecules through a chemical reaction by heat. A thermal curing method is not particularly limited, but a method of thermally curing using

a curing agent or a curing accelerator or a method of thermally curing using a thermal cationic polymerization initiator is preferable. Above all, the method of thermally curing using a curing agent and a curing accelerator is more preferable.

The organic-inorganic composite film according to the present embodiment has excellent transparency and an optical property, and total light transmittance in a thickness direction that is an index thereof is not particularly limited, but is preferably 85 to 100%, more preferably 88 to 100%, and further preferably 90 to 100%. Similarly, a haze value is not particularly limited, but is preferably 0 to 5%, more preferably 0 to 3% and further preferably 0 to 2%.

Since the organic-inorganic composite film according to the present embodiment easily achieves a desired refractive index, the organic-inorganic composite film is useful as an optical material or an optical member. The representative example thereof may include an antireflection film, a hard coat film or the like.

[Method of producing an organic-inorganic composite film]

The method of producing an organic-inorganic composite film according to the present embodiment is not particularly limited, but a representative producing method will be shown below.

[Method 1 of producing an organic-inorganic composite film: No curing treatment]

(1) An organic solvent is added to an organic-inorganic composite to disperse it to obtain a coating material.
(2) The coating material is applied to a substrate and the organic solvent is removed from the applied coating material to form the organic-inorganic composite film.

[Method 2 of producing an organic-inorganic composite film: Photo-curing (photo-radical curing)]

(1) An organic solvent and a photo-radical initiator are added to an organic-inorganic composite to disperse it to obtain a coating material.
(2) The coating material is applied to a substrate and the organic solvent is removed from the applied coating material to form an organic-inorganic composite film.
(3) Further, the organic-inorganic composite film is irradiated with an active ray to crosslink (photo-cure) the organic-inorganic composite, thereby obtaining an organic-inorganic composite film.

[Method 3 of an organic-inorganic composite film: Photo-curing (photo-cationic curing)]

(1) An organic solvent and a photo-acid generating agent are added to an organic-inorganic composite to disperse it to obtain a coating material.
(2) The coating material is applied to a substrate and the organic solvent is removed from the applied coating material to form an organic-inorganic composite film.
(3) Further, the organic-inorganic composite film is irradiated with an active ray to crosslink (photo-cure) the organic-inorganic composite, thereby obtaining an organic-inorganic composite film.

[Method 4 of producing an organic-inorganic composite film: Thermal curing (crosslink with a curing agent and a curing accelerator)]

(1) An organic solvent, a curing agent, and a curing accelerator are added to an organic-inorganic composite to disperse it to obtain a coating material.
(2) The coating material is applied to a substrate and the organic solvent is removed from the applied coating material to form an organic-inorganic composite film.
(3) Further, the organic-inorganic composite film is heated for a predetermined time to crosslink (thermally cure) the organic-inorganic composite, thereby obtaining an organic-inorganic composite film.

[Optical material]

The optical material according to the present embodiment includes the above-described organic-inorganic composite film and is used to form an optical member.

The optical material is a general material used to cause light such as a visible light, an infrared ray, an ultraviolet ray, an X-ray, or a laser to pass through the material. The optical material may be used for various uses. A coating material and a doping liquid for producing the following optical material are included in optical material.

A representative example of uses of the optical material includes a high transmission member (a film or a molded body) for increasing light extraction efficiency of illumination and an optical semiconductor, including an antireflection member for various displays shown below.

Further, in the field of a liquid crystal display, the uses of the optical material may include, for example, a peripheral material for a liquid crystal display device, such as a substrate material, a light guide plate, a prism sheet, a polarizing plate, a retardation plate, a viewing angle correction film, an adhesive, and a liquid crystal film such as a polarizer protection film.

A sealant, an optical correction film, a housing material, a front glass protection film, a front glass substitute material, and an adhesive in a color PDP (plasma display panel) expected as a next-generation flat-panel display; a substrate material, a light guide plate, a prism sheet, a polarizing plate, a retardation plate, a viewing angle correction film, an adhesive and a polarizer protection film in a plasma addressed liquid crystal (PALC) display; a front glass protection film, a front glass substitute material and an adhesive in an organic EL (electroluminescence) display; and various film substrates, a front glass protection film, a front glass substitute material and an adhesive in a field emission display (FED) are exemplified.

In the field of light recording, uses of the optical material may include, for example, a disk substrate material, a pickup lens, a protection film, a sealant and an adhesive for a VD (video disc), a CD/CD-ROM, a CD-R/RW, a DVD-R7DVD-RAM, an MO/MD, a PD (phase-change disc) or an optical card.

In the field of an optical semiconductor, uses of the optical material may include, for example, a light emitting diode (LED), a semiconductor laser, a photodiode, a phototransistor, a CCD/CMOS sensor, a photo-coupler, a photo-relay, a photo-interrupter and an optical communication device.

In the field of an optical device, uses of the optical material may include, for example, a photography lens of a camera, a material for a lens, a finder, a finder prism, a target prism, a finder cover, and a light receiving sensor unit. A projection lens, a protection film, a sealant and an adhesive of a projection television are also exemplified. Further, uses of the optical material may include a material for a lens, a sealant, an adhesive and a film of a light sensing apparatus.

In the field of an optical part, for example, a fiber material, a lens, a waveguide, a sealant of an element and an adhesive around an optical switch in an optical communication system are exemplified. An optical fiber material, a ferrule, a sealant and an adhesive around an optical connector are also exemplified. For optical passive parts and optical circuit parts, a lens, a waveguide, a sealant of an LED element and an adhesive are exemplified. A substrate material, a fiber material, a sealant of an element and an adhesive around an opto-electronic integrated circuit (OEIC) are also exemplified.

In the field of an optical fiber, for example, an illumination and a light guide for a decoration display, industrial sensors, displays and marks, or an optical fiber for a communication infrastructure and an in-home digital device connection, and the like are exemplified.

In a peripheral material of a semiconductor integrated circuit, for example, a resist material for microlithography for an LSI or ultra LSI material may be included.

As a next-generation optical and electronic functional organic material, for example, a next-generation DVD, an organic EL element peripheral material, an organic photorefractive element, an optical amplification element that is a light-light conversion device, an optical computing element, a substrate material around an organic solar battery, a fiber material and a sealant of an element, and an adhesive are exemplified.

In the automotive and transportation fields, for example, a lamp reflector, a bearing retainer, a gear part, a corrosion resistance coat, a switch part, a head lamp, in-engine parts, electric equipment parts, various interior and exterior products, a drive engine, a brake oil tank, an automotive rust prevention steel sheet, an interior panel, interior materials, a wire harness for protection and unity, a fuel hose, a car lamp, a glass substitute, and a window glass inter-film of a car are exemplified. A double glass inter-film for railroad vehicles is also exemplified. In airplane uses, a toughening agent of a structure material, engine peripheral members, a wire harness for protection and unity, a corrosion resistance coat, and window glass inter-film are exemplified.

In the field of architecture, for example, a material for interior decoration and processing, parts for illumination, an electric cover, a sheet, a glass inter-film, a glass substitute, a solar battery peripheral material and the like are exemplified. For agriculture, a film for house coating is exemplified.

[Optical member]

An optical member according to the present embodiment refers to a member including the above-described optical material, and a form thereof is not particularly limited. Use of the optical member is not particularly limited, but the optical member is suitably used for the above-described use since the optical member includes the optical material.

[Antireflection member]

The antireflection member according to the present embodiment may be a film (an antireflection film) or may be another antireflection molded body. The antireflection film is not particularly limited as long as the antireflection film is a film including the organic-inorganic composite film described above. The antireflection film may include a substrate, and the organic-inorganic composite film may be provided on the substrate. As the substrate, a resin film is preferable. Examples of a preferred resin may include, for example, PET, TAC, acrylic resin, polycarbonate resin, vinyl chloride resin, epoxy resin and polyimide resin. When the antireflection film is used for a display, the PET, the TAC and the acrylic resin are preferable, and the PET and the TAC are particularly preferable.

The antireflection molded body according to the present embodiment is not particularly limited as long as the antireflection molded body is a molded body including the organic-inorganic composite film described above, but may include a substrate and an organic-inorganic composite film provided on the substrate. The substrate may include acrylic resin, polycarbonate resin, vinyl chloride resin, epoxy resin, polyimide resin and the like. Above all, from the viewpoint of transparency and strength, the acrylic resin and the polycarbonate resin are particularly preferable. The shape of the molded body is not particularly limited, and for example, various shapes such as a sheet shape, a plate shape, a block shape, a disc shape, and a three-dimensional shape may be selected.

[Optical element]

An optical element according to the present embodiment refers to a functional element using a diffraction phenomenon of light. The optical element of the present embodiment is not particularly limited as long as the optical element meets this requirement, but is suitable for, for example, an optical lens, an optical prism, or an optical filter.

The optical lens and the optical prism may include, for example, a lens of a microscope, an endoscope, a telescope or the like, an fθ lens of a laser beam printer, a laser scanning system lens such as a lens for a sensor, an imaging lens of a camera, a cell-phone or the like, a prism lens of a finder system, an all-ray transmission type lens such as a spectacle lens, and a pickup lens of an optical disc.

[Illumination apparatus]

An illumination apparatus according to the present embodiment is not particularly limited as long as the illumination apparatus is an apparatus that brightens a specific place for any purpose using various light sources. The illumination apparatus includes, for example, an incandescent lamp, a fluorescent lamp, a lamp, an LED or an organic EL.

The coating material or the organic-inorganic composite film according to the present embodiment may contain various organic resins, a colorant, a leveling agent, a lubricant, a surfactant, a silicone-based compound, a reactive diluent, a non-reactive diluent, an antioxidant, a light stabilizer or the like.

Further, a material generally provided as an additive for resin (a plasticizer, a fire retardant, a stabilizer, an antistatic agent, an impact resistance toughening agent, a foaming agent, an antibacterial and antifungal agent, a filler, an anti-fogging agent, a crosslinker, etc.) may be combined. Other materials may be included. The other materials include a solvent, oils and fats, oils and fats artifact, natural resin, synthetic resin, pigment, dye, a coloring material, a remover, a preservative, an adhesive, a deodorant, a flocculant, a cleaner, a deodorant, a pH regulator, a photosensitive material, ink, an electrode, a plating solution, a catalyst, a resin modifier, a plasticizer, a softening agent, a pesticide, an insecticide, a fungicide, pharmaceutical raw material, an emulsifier/surfactant, rust preventing agent, a metal compound, a filler, cosmetics and pharmaceutical raw materials, a dehydrating agent, a desiccating agent, antifreezing fluid, an adsorbent, a colorant, rubber, a foaming agent, a colorant, an abrasive, a release agent, a flocculant, a defoaming agent, a curing agent, a reducing agent, a flux agent, a film treatment agent, a casting raw material, a mineral, acid and alkali, a shot agent, an antioxidant, a surface coating agent, an additive, an oxidizer, an explosive, fuel, a bleach, a light emitting element, perfume, concrete, a fiber (carbon fiber, aramid fiber, glass fiber, etc.), glass, metal, an excipient, a disintegrating agent, a binder, a fluidity agent, a gelling agent, a stabilizer, a preservative, a buffer, a suspending agent, a thickening agent, and the like.

The organic resin is not particularly limited and may include, for example, epoxy resin, phenolic resin, melamine resin, urea resin, unsaturated polyester resin, polyurethane resin, diallyl phthalate resin, silicone resin, alkyd resin, acrylic resin, polyester resin, polypropylene resin, polystyrene resin, AS resin, ABS resin, polycarbonate resin, polylactic acid

resin, polyacetal resin, polyimide resin, polyphenylene sulfide resin, polyether ether ketone resin, polyamide-imide resin, polyamide resin, polyphthalamide resin, polysulfone resin, polyarylate resin, polyethersulfone resin, polyetherimide resin, polyphenyl sulfone resin, modified polyphenylene ether resin, vinyl chloride resin, synthetic rubber, polyethylene terephthalate resin, liquid crystal polymer, polytetrafluoroethylene, polychlorotrifluoroethylene resin, polyvinylidene fluoride resin, and vinyl ether copolymer.

The colorant is not particularly limited as long as the colorant is a material used for the purpose of coloration, and may include, for example, various organic pigments such as phthalocyanine, azo, disazo, quinacridone, anthraquinone, flavanthrone, perinnone, perylene, dioxazine, condensed azo, azomethine-based pigments; inorganic pigments such as titanium oxide, lead sulfate, chrome yellow, zinc yellow, chrome vermilion, a valve shell, cobalt purple, Prussian blue, ultramarine blue, carbon black, chrome green, chromium oxide or cobalt green; or the like. These colorants may be used alone or in a combination of a plurality of them.

The leveling agent is not particularly limited and may include, for example, a silicone-based leveling agent (dimethylpolysiloxane, organic modified polysiloxane, etc.), an acrylate-based leveling agent (ethyl acrylate, butyl acrylate, 2-ethylhexyl acrylate, a fluorine-modified acrylate, a silicone-modified acrylate, etc.), epoxidized soybean fatty acid, epoxidized abietyl alcohol, hydrogenated castor oil, a titanium-based coupling agent, and the like. These leveling agents may be used alone or in a combination of a plurality of them.

The lubricant is not particularly limited and may include a hydrocarbon-based lubricant such as paraffin wax, microwax or polyethylene wax, a higher fatty acid-based lubricant such as lauric acid, myristic acid, palmitic acid, stearic acid, arachidic acid, or behenic acid, a higher fatty acid amide-based lubricant such as stearyl amide, palmityl amide, oleyl amide, methylene bisstearoamide, or ethylene bisstearoamide, a higher fatty acid ester-based lubricant such as hardened castor oil, butyl stearate, ethyleneglycol monostearate, or pentaerythritol (mono-, di-, tri- or tetra-) stearate, an alcohol-based lubricant such as cetylalcohol, stearyl alcohol, polyethyleneglycol or polyglycerol, metallic soaps that are metal salts such as magnesium, calcium, cadmium, barium, zinc or lead of lauric acid, myristic acid, palmitic acid, stearic acid, arachidic acid, behenic acid, ricinoleic acid or naphthenic acid, a natural wax such as carnauba wax, candelilla wax, beeswax or montan wax, and the like. These lubricants may be used alone or in a combination of a plurality of them.

The surfactant refers to an amphiphilic substance having a hydrophobic group that does not have affinity with a solvent in a molecule thereof, and an amphiphilic group (usually, a hydrophilic group) that has affinity with the solvent. Further, the kind thereof is not particularly limited and may include, for example, a silicone-based surfactant, a fluorine-based surfactant or the like. The surfactant may be used alone or in combination of a plurality of them.

The silicone-based compound is not particularly limited, and may include, for example, silicone resin, a silicone condensate, a silicone partial condensate, silicone oil, a silane coupling agent, silicone oil, polysiloxane, and the like, and also include a compound in which an organic group has been introduced into both ends, one end or a side chain for modification. For example, a method of the modification is not particularly limited and may include amino modification, epoxy modification, alicyclic epoxy modification, carbinol modification, methacryl modification, polyether modification, mercapto modification, carboxyl modification, phenol modification, silanol modification, polyether modification, polyether methoxy modification, diol modification or the like.

The reactive diluent is not particularly limited and may include, for example, alkyl glycidyl ether, monoglycidyl ether of an alkylphenol, neopentylglycol diglycidyl ether, 1,6-hexanediol diglycidyl ether, an alkanoic acid glycidyl ester, ethyleneglycol diglycidyl ether, propyleneglycol diglycidyl ether or the like. The non-reactive diluent is not particularly limited and may include, for example, a high boiling point solvent such as benzylalcohol, butyldiglycol, propyleneglycol monomethyl ether or the like.

The antioxidant is not particularly limited and may include, for example, an organic phosphorus-based antioxidant such as triphenyl phosphate or phenylisodecyl phosphite, an organic sulfur-based antioxidant such as distearyl-3,3'-thiodipropionate, a phenolic antioxidant such as 2,6-di-tert-butyl-p-cresol, or the like.

The light stabilizer is not particularly limited and may include, for example, a benzotriazole-, benzophenone-, salicylate-, cyanoacrylate-, nickel-, or triazine-based ultraviolet ray absorbent, a hindered amine-based light stabilizer, or the like.

The use of the organic-inorganic composite, the coating material and the organic-inorganic composite film according to the present embodiment is not limited to optical use. For example, these may be used as electronic materials (cast molding and circuit unit such as insulators, an alternating current transformer and a switch, a package of various parts, a sealant for an IC, an LED or a semiconductor, a rotator coil of a power generator or a motor, winding impregnation, a printed wiring board, an insulation board, medium-sized insulators, coils, connectors, terminals, various cases, electrical parts, etc.), paint (corrosion-resistant paint, maintenance, ship painting, corrosion-resistant lining, a primer for cars and household electrical appliances, drink and beer cans, exterior lacquer, extrusion tube painting, general corrosion-resistant painting, maintenance painting, lacquer for millwork, automotive electrodeposition primer, other industrial electrodeposition painting, drink and beer can interior lacquer, coil coating, drum and can interior painting, acid-resistant lining, wire enamel, insulation paint, automotive primer, beauty treatment and corrosion-resistant painting of various metal products,

pipe interior and exterior painting, electrical part insulation painting, heat line blocking material, etc.), composite materials (pipes and tanks for chemical plants, aircraft materials, car members, various sporting goods, carbon fiber composite materials, aramid fiber composite materials, etc.), civil engineering and construction materials (flooring materials, packing materials, membrane, anti-slip and thin layer package, concrete joint and raising, anchor implantation adhesion, precast concrete joint, tile adhesion, crack repair of a concrete structure, grout and leveling of a pedestal, corrosion-resistant and waterproof painting of water and sewage facilities, corrosion resistant laminated lining of tanks, corrosion-resistant painting of a steel structure, mastic painting of a building outer wall, etc.), an adhesive (an adhesive for the same or different kinds of materials such as metal, glass, ceramics, cement concrete, wood and plastic, an assembling adhesive for cars, railway vehicles, aircrafts or the like, an adhesive for manufacture of prefab composite panel, etc.: including a one-liquid type, a two-liquid type, and a sheet type;), jigs and tools of aircrafts, cars, or plastic moldings (a press die, a resin die such as a stretched die or matched die, vacuum molding and blow molding molds, master models, casting patterns, lamination tools, various inspection tools, etc.), a modifier-stabilizer (resin processing of fibers, stabilizers for polyvinyl chloride, additives to synthetic rubber, etc.) or the like.

The organic-inorganic composite and the organic-inorganic composite film according to the present embodiment are applicable to uses such as a substrate material, a die-bond material, a chip coat material, a stack plate, an optical fiber, a light guide, an optical filter, an adhesive for electronic parts, a coat material, a seal material, an insulating material, a photoresist, an encapsulation material, a potting material, a light transmission layer and an interlayer insulating layer of an optical disc, a printed wiring board, a stacked plate, a light guide plate, an antireflection film and the like.

## EXAMPLES

Hereinafter, examples in which the present embodiment is more concretely described will be described. However, the present invention is not limited to the following examples

Evaluation of physical properties in the examples and comparative examples was performed according to the following procedure.

<HR-STEM photography of inorganic compound particles>

(1) 0.1 g of the organic-inorganic composite and 9.9 g of chloroform (made by Wako Pure Chemical Industries, Ltd.) were placed in a sample bottle and a rotor was put therein. The contents were stirred for 30 minutes by a stirrer, and ultrasonic treatment was performed for 30 minutes to obtain a sample solution. When it was hard for an organic-inorganic composite to be dispersed in the chloroform, a good dispersible solvent was appropriately selected and used in place of chloroform.

(2) The sample solution was dropped on a grid ("STLM100Cu grid" made by Okenshoji Co., Ltd.) and air-dried to form a film of an organic-inorganic composite (organic-inorganic composite film).

(3) The organic-inorganic composite on the grid was observed in a transmission mode of HR-STEM and photographed. Any measurement magnification may be selected according to a size and a shape of the particles.

<Circularity of inorganic compound particles>

(4) An HR-STEM image captured according to the same method as in (1) to (3) described above was processed by the image analysis software and "equivalent circle diameter" and "cercumference" of the inorganic compound particle (outer cercumference of the particle) were calculated. Based on the calculated equivalent circle diameter and cercumference, a circularity of each of 200 particles was obtained according to the following equation. A case in which the circularity was equal to or more than 0.5 was determined to be "A," and a case in which the circularity was less than 0.5 was determined to be "B".

$$\text{Circularity}=(\text{circumferential length obtained from equivalent circle diameter})/(\text{cercumference}) \ldots (10)$$

Where, (circumferential length obtained from equivalent circle diameter)=(equivalent circle diameter)$\times\pi$.

(5) Among the circularity of the 200 particles, numerical values of an upper 5% and a lower 5% were removed, and

an average value of the remaining 90% was calculated and regarded as a circularity of the inorganic compound particles.

<L/D of inorganic compound particles>

(6) The HR-STEM image captured according to the same method as in (1) to (3) described above was processed by the image analysis software and a "maximum length" and a "minimum width" of an outer corcumference of each of the 200 particles was calculated. Fig. 1 is a schematic view illustrating a method of calculating a maximum length and a minimum width of each particle. As shown in Fig. 1, the "maximum length" refers to a maximum value of a distance between any two points on a circumference of a particle in the HR-STEM image, and the "minimum width" refers to a width of the particle in a direction perpendicular to a direction in which the particle shows the maximum length.

(7) The obtained maximum length L and minimum width D were substituted for the following equation to obtain L/D of each of 200 particles.

$$L/D=(\text{maximum length})/(\text{minimum width}) \ldots (11)$$

(8) Among L/D of the 200 particles, numerical values of an upper 5% and a lower 5% were removed and an average value of the remaining 90% was obtained and regarded as L/D of the inorganic compound particles.

<Outer shell thickness of hollow particles>

(9) The HR-STEM image captured according to the same method as in (1) to (3) described above was processed by the image analysis software and an equivalent circle diameter of an inner cercumference of each of 200 hollow particles was obtained. In the present specification, the "equivalent circle diameter" refers to a diameter of a circle having the same area as the particle.

(10) Among the circle-equivalent diameters of the 200 particles, the numerical values of an upper 5% and a lower 5% were removed and an average value of the remaining 90% was obtained and regarded as an "average inner diameter of the hollow particles."

(11) The outer shell thickness of the hollow particles was calculated from the average particle diameter of the inorganic compound particles and the average inner diameter of the hollow particles that were obtained above, according to the following equation.

$$\text{Outer shell thickness of hollow particles}=(\text{average particle diameter of inorganic compound particles}-\text{average inner diameter of hollow particles})/2 \ldots (6)$$

<Cavity content of hollow particles>

(12) Then, a lumen radius a of the hollow particles was obtained from the average inner diameter of the hollow particles according to the following equation.

$$\text{Lumen radius “a” of hollow particles}=\text{average inner diameter of hollow particles}/2 \ldots (7)$$

(13) A radius "b" of the inorganic compound particles was obtained from the average particle diameter of the inorganic compound particles according to the following equation.

$$\text{Radius "b" of inorganic compound particles} = \text{Average particle diameter of inorganic compound particles}/2 \ldots (8)$$

(14) The lumen radius a of the hollow particles and the radius "b" of the inorganic compound particles obtained in (12) to (13) described above were substituted into the following equation to obtain cavity content of the inorganic compound particles.

$$\text{cavity content } (\%) = (4\pi a^3/3)/(4\pi b^3/3) \times 100 \ldots (9)$$

<Refractive index of inorganic compound particles>

The refractive index of the inorganic compound particles was obtained according to the following method using a standard refraction liquid (made by Cargill Inc.). However, when the standard refraction liquid having a desired refractive index was not available, a reagent having a known refractive index was used instead.

(1) A dispersion of the inorganic compound particles was applied to an evaporator and a dispersion medium was vaporized.
(2) This was dried by a vacuum dryer at 120 °C and a powder was obtained.
(3) 2 to 3 drops of a standard refraction liquid having a known refractive index were dropped onto a glass plate and mixed with the powder.
(4) The operation of (3) described above was performed with various standard refraction liquids, and a refractive index of the standard refraction liquid when the mixture liquid was transparent was regarded as the refractive index of the inorganic compound particles.

<Measurement of halogen content of surface-reformed inorganic compound particles>

Halogen content of the surface-reformed inorganic compound particles was obtained through a combustion treatment and a subsequent ion chromatograph method according to the following procedure.

(1) A sample was burned using a quartz combustion tube in an oxygen atmosphere, and a generated gas was absorbed by an absorption liquid (3% hydrogen peroxide water).
(2) The absorption liquid was appropriately diluted, and amounts of bromine ions and chlorine ions in the absorption liquid were measured using an ion chromatograph ("ICS-2000" made by Daionex Corporation).
(3) A total amount of the bromine ions and the chlorine ions relative to a mass of the surface-reformed inorganic compound was obtained as halogen content from a total amount of the bromine ions and the chlorine ions that were measured.

<Specific gravity of polymer>

Measurement was performed according to ASTM D792.

<Molecular weight of polymer and dispersion degree of molecular weight>

A molecular weight of the polymer and a dispersion degree of the molecular weight were obtained by a "decomposition method" or an "addition method." When the film-forming organic-inorganic composite was easily dispersible to toluene, measurement was performed by the "decomposition method" and when the film-forming organic-inorganic composite was poorly soluble to the toluene, measurement was performed by the "addition method."

[Decomposition method]

Pretreatment

As pretreatment for measurement of a molecular weight of the polymer bonded to the inorganic compound particles, hydrofluoric acid treatment (hereinafter referred to as "HF treatment") was performed on the organic-inorganic composite according to the following procedure.

(1) 2 mL of toluene (made by Wako Pure Chemical Industries, Ltd.) and 15 mg of a phase transfer catalyst ("Alquat336" made by Aldrich company) were added to a container made of Teflon (registered trademark) or an any resin having a rotor made of Teflon (registered trademark) put therein, and stirring was performed to obtain a solution in which phase transfer catalyst was dissolved in the toluene.
(2) 200 mg of an organic-inorganic composite sample was added to the solution and dissolved by stirring.
(3) 2 mL of hydrofluoric acid (concentration: 46 to 48%, made by Wako Pure Chemical Industries, Ltd.) was further added to the obtained solution and stirring was performed for 24 hours at room temperature to separate the polymer from the inorganic compound particles.
(4) The solution was neutralized by an aqueous solution of calcium carbonate (made by Wako Pure Chemical Industries, Ltd.). In this case, when phase separation is difficult, a solution to which toluene 2 mL is added for centrifugation may be used.

Molecular weight measurement

Measurement of gel permeation chromatography (GPC) was performed under the following conditions, on the sample solution obtained through the above pretreatment. A number average molecular weight (Mn) and a weight average molecular weight (Mw) of polymethyl methacrylate conversion of a main peak were obtained from a measurement result based on a calibration line produced using a polymethyl methacrylate standard (made by Sowa Science Co., Ltd.).
Device: "HLC-8220GPC" made by Tosoh Corporation
Detector: RI detector
Moving phase: Tetrahydrofuran
Flow amount: 0.35 mL/minute
Column: Two "TSKgel GMHXL" made by Tosoh Corporation were connected and used.
Column temperature: 40 °C

Molecular weight distribution

The number average molecular weight (Mn) and the weight average molecular weight (Mw) of the polymethyl methacrylate conversion were substituted into the following equation to obtain molecular weight distribution of the polymer. A case in which the molecular weight distribution was equal to or less than 2.31 was determined to be "A" and a case in which the molecular weight distribution exceeded 2.31 was determined to be "B".

$$\text{Molecular weight distribution} = Mw/Mn \quad \ldots (12)$$

[Addition method]

The pretreatment was performed according to the following method and "the molecular weight measurement" and "molecular weight distribution" were obtained according to the same method as in "Decomposition method" described above.

Pretreatment

The "molecular weight" and the "molecular weight distribution" of the polymer bonded to the inorganic compound particles were obtained according to the following procedure. As a sample for molecular weight measurement, an organic-inorganic composite was synthesized, separately from the example, in a state in which a polymerization initiator was added, and a polymer produced as a by-product by the addition of the polymerization initiator was measured and regarded as the "molecular weight" and the "molecular weight distribution" of the polymer bonded to the inorganic compound particles.

(1) Synthesis of a sample for molecular weight measurement

(1-1) A solution containing a raw material of the organic-inorganic composite was prepared according to the same method as in the example.
(1-2) A polymerization initiator was added to the solution so that monomer:polymerization initiator=100:(0.01~0.25) (mol ratio). The polymerization initiator was added to have approximately 10 to 20% of bromine content relative to the bromine content in the polymerization liquid of the example.
Polymerization initiator: 2-ethyl bromoisobutyrate (EBIB) made by Aldrich.
(1-3) A catalyst solution was added to the solution and a sample for measurement (a mixture of the organic-inorganic composite and the by-product polymer) was polymerized according to the same method as in the example.
(1-4) The flask was immersed in an ice bath to be rapidly cooled, it was put into hexane, stirred and then left at rest. A supernatant solution was then discarded.
(1-5) Hexane was added to the remaining sediment again, the flask was left at rest, and a supernatant solution was discarded. This operation was repeated eight times and the remaining sediment was dried according to the same method as in the example.

(2) 10 mL of a solvent (e.g., MIBK) was added to 1 g of the sample for molecular weight measurement obtained in (1) described above and stirring was performed for 24 hours.
(3) An appropriate amount of THF was added to the solution, stirring was performed for 1 hour, and a resultant solution was centrifuged.
(4) The supernatant solution after centrifugation was measured according to the same method as in "Decomposition method" described above to obtain a "molecular weight" and a "dispersion degree of the molecular weight".

<Amount of "polymer bonded to inorganic compound particles" of organic-inorganic composite>

(1) 10 g of an organic-inorganic composite was placed in a sample bottle, MIBK was added to a volume of 100 mL, a rotor was put therein and then the contents were stirred for 24 hours by a stirrer.
(2) 10 mL of the above solution was poured into a different sample bottle, THF was added and diluted to 100 mL, a rotor was put therein and the contents were further stirred for 24 hours by a stirrer.
(3) The solution was transferred to a centrifuge tube and treated for 30 minutes at 6600 rpm by a centrifuge.
(4) Measurement of the gel permeation chromatography (GPC) was performed on the supernatant solution after the centrifugation under the following conditions to measure a free polymer in the organic-inorganic composite. A peak top molecular weight (Mp) of polymethyl methacrylate conversion of a main peak was obtained from a measurement result based on a calibration line produced using a polymethyl methacrylate standard (made by Sowa Science Co., Ltd.).
Device: "HLC-8220GPC" made by Tosoh Corporation
Detector: RI detector
Moving phase: Tetrahydrofuran
Flow amount: 0.35 mL/m
Column: Two "TSKgel GMHXL" made by Tosoh Corporation were connected and used.
Column temperature: 40 °C
(5) A peak of Mp> 800 obtained above was quantified as a free polymer. At the time of quantifying, a "quantitative standard substance" having the closest Mp was selected from among the following, a calibration line was produced, and an amount (mass%) of the free polymers in the organic-inorganic composite was calculated through the quantitative standard substance conversion. Further, when there were multiple peaks, a total amount thereof was obtained and regarded as the amount (mass%) of the free polymers.
(5-1) Quantitative standard substance: Polymethyl methacrylate (made by Sowa Science Co., Ltd.)
Polymethyl methacrylate "PMMA850 (Mp=860)"
Polymethyl methacrylate "PMMA2K (Mp=2,000)"
Polymethyl methacrylate "PMMA7K (Mp=7,500)"
Polymethyl methacrylate "PMMA11K (Mp= 11,800)"
Polymethyl methacrylate "PMMA21K (Mp=20,850)"
Polymethyl methacrylate "PMMA30K (Mp=33,500)"
Polymethyl methacrylate "PMMA45K (Mp=46,300)"
Polymethyl methacrylate "PMMA85K (Mp=87,800)"

Polymethyl methacrylate "PMMA110K (Mp=107,000)"
Polymethyl methacrylate "PMMA135K (Mp=130,000)"
Polymethyl methacrylate "PMMA135K (Mp=130,000)"
Polymethyl methacrylate "PMMA190K (Mp=185,000)"
Polymethyl methacrylate "PMMA225K (Mp=240,000)"
Polymethyl methacrylate "PMMA320K (Mp=322,000)"
Polymethyl methacrylate "PMMA680K (Mp=670,000)"
(6) Measurement of amount of polymer in organic-inorganic composite (amount of polymers and free polymers bonded to inorganic compound)
Mass weight loss (mass%) when the organic-inorganic composite was heated under the following conditions was measured at n=3, and an average value thereof was regarded as an "amount of polymers in the organic-inorganic composite (polymers and free polymers bonded to the inorganic compound)".
Device: "TGA-50," Shimadzu Corporation
Atmosphere: Nitrogen atmosphere containing 1% oxygen
Sample container: Aluminum pan
Temperature program: Started at 25 °C → raised at 20 °C/minute → brought to 500 °C → maintained for 1 hour at 500 °C
(7) An "amount (mass%) of polymers bonded to the inorganic compound particles" was calculated from the "amount (mass%) of the free polymers" and the "amount (mass%) of polymers in the organic-inorganic composite (an amount of polymers and free polymers bonded to the inorganic compound)" obtained above according to the following equation.

$$\text{amount (mass\%) of polymers bonded to the inorganic compound particles} = (A-B)/A \times 100 \ldots (13)$$

Here, A denotes an amount of polymers in the organic-inorganic composite (an amount of the polymers and the free polymers bonded to the inorganic compound) (mass%), and B denotes an amount (mass%) of the free polymer.

<Reactive double bond amount in polymer>

The reactive double bond amount in the polymer was measured according to the following procedure.

(1) A molar amount of a monomer (e.g., methacrylic acid 2-hydroxyethyl) including a hydroxyl group as a functional group in the polymer was obtained from each monomer conversion rate. The monomer conversion rate was obtained by gas chromatography (GC) under the following conditions.
Device: "GC-14B" made by Shimadzu Corporation
Detector: FID
Column temperature: 50 °C → 200 °C (temperature rise rate 20 °C/minute), and maintained at 250 °C
GC inlet temperature: 230 °C
Detector temperature: 280 °C
Carrier gas: Helium
(2) An addition reaction of the monomer including a hydroxyl group as a functional group and a monomer (e.g., methacrylic acid 2-isocyanateethyl) including an isocyanate group as a functional group was performed, and an amount of the hydroxyl group of the monomer including a hydroxyl group as a functional group remaining in a product of the addition reaction was measured. The measurement of the hydroxyl group amount was performed by a nuclear magnetic resonance device (NMR) under the following conditions.
Device: "DPX-400" made by Bruker Corporation
Solvent: Deuterated N,N-dimethylformamide

<Measurement of Tg of organic-inorganic composite>

Tg of the organic-inorganic composite was evaluated by a differential scanning calorimeter (DSC) under the following conditions.
Device: "Diamond DSC" made by PerkinElmer company
Temperature program: Started at -40 °C → maintained for 20 minutes → raised at 20 °C/minute → 200 °C

<Measurement of halogen content of an organic-inorganic composite>

Halogen content of the organic-inorganic composite was evaluated according to the same method as in "Measurement of halogen content of the surface-reformed inorganic oxide particles" described above.

<Measurement of copper content of organic-inorganic composite>

Copper content was evaluated by acid decomposition and subsequent ICP emission spectrometry in the following procedure.

(1) A sample was decomposed into sulfuric acid (made by Wako Pure Chemical Industries, Ltd.), nitric acid (made by Wako Pure Chemical Industries, Ltd.), and hydrofluoric acid (made by Wako Pure Chemical Industries, Ltd.).
(2) Further, heating dissolution was performed with nitric acid (1+2).
(3) The solution was diluted and measurement was performed using an ICP emission spectrometer ("ICPS-8100" made by Shimadzu Corporation).

<Measurement of fluorine content of organic-inorganic composite>

Fluorine content was evaluated thorough the combustion treatment and a subsequent ion chromatograph method according to the following procedure.

(1) A sample was burned with a quartz combustion tube under an oxygen atmosphere. In this case, the sample may be dissolved and/or diluted as necessary and then used.
(2) A gas generated by combustion was absorbed into an ice-cooled absorption liquid (0.2% NaOH aqueous solution).
(3) The absorption liquid was appropriately diluted and an amount of fluorine ions in the absorption liquid was measured by an ion chromatograph ("ICS-2000" made by Daionex Corporation). The amount of the fluorine ions relative to the mass of the organic-inorganic composite was obtained from the measured fluorine ion amount, as the fluorine content.

<Measurement of inorganic oxide content of organic-inorganic composite>

A mass loss when the organic-inorganic composite was heated under the following conditions was obtained using a thermogravimetric measuring device.
Device: "TGA-50," Shimadzu Corporation
Atmosphere: nitrogen atmosphere containing 1% oxygen
Sample container: Aluminum pan
Temperature program: Started at 25 °C → raised at 20 °C/minute → brought to 500 °C → maintained at 500 °C for 1 hour

Measurement was performed at n=3, and an average value was regarded as inorganic oxide content of the organic-inorganic composite. Values of mass% and volume% were calculated as follows.

(1) Mass%
The measured mass loss (mass%) was substituted into the following equation to calculate content (mass%) of the inorganic oxide.

$$\text{Inorganic oxide content (mass\%)} = 100 - \text{mass loss (mass\%)}$$

(2) Volume%

(2-1) Calculation of mass and volume of polymer
The measured mass loss (mg) was regarded as a mass (mg) of the polymer and its value was substituted into the following equation to calculate the volume (μL) of the polymer.

$$\text{volume } (\mu L) \text{ of polymer} = \{\text{mass (mg) of polymer}\}/\{\text{specific gravity of polymer}\}$$

(2-2) Calculation of mass and volume of an inorganic oxide

The measured mass loss (mg) was substituted into the following equation to calculate the mass (mg) of the inorganic oxide.

$$\text{mass (mg) of inorganic oxide} = \text{sample amount (mg)} - \text{mass loss (mg)}$$

The mass of the inorganic oxide was substituted into the following formula to calculate the volume (μL) of the inorganic oxide.

$$\text{volume (μL) of inorganic oxide} = \{\text{mass (mg) of inorganic oxide})\}/\{\text{density (g/cm}^3\text{) of inorganic oxide}\}$$

(2-3) Calculation of inorganic oxide content (volume%)

The values obtained as described above were substituted into the following equation to calculate inorganic oxide content (volume%).

[Equation 1]

$$\text{inorganic oxide content particle (volume\%)} = \text{volume (μL) of inorganic oxide perticle} \times 100/(\text{volume (μL) of inorganic oxide perticle} + \text{volume (μL) of polymer}) \ldots (14)$$

<Fabrication of coating material>

Arbitrary organic solvent was added to the organic-inorganic composite, and a stirring treatment was performed for 24 hours at room temperature to fabricate a solvent dispersion of the organic-inorganic composite. Further, as necessary, a photopolymerization initiator, a curing agent, a curing accelerator, a crosslinker, a free polymer or the like was added and mixed, and a resultant material was used as a coating material. Further, ultrasonic treatment or a concentration treatment by an evaporator was added as necessary.

<Solid content concentration of coating material>

A solid content concentration of the coating material was obtained according to the following procedure.

(1) The coating material was placed in a weighing bottle and a mass (mass A) of the content was recorded.
(2) The weighing bottle was air-dried under nitrogen flow until fluidity of the content disappeared.
(3) The weighing bottle was dried for 24 hours at 105 °C under vacuum, and then cooled to room temperature in a desiccator.
(4) The weighing bottle was weighed and the mass (mass B) of the content was recorded.
(5) Solid content was obtained by the following equation.

$$\text{Solid content (mass\%)} = (\text{mass B})/(\text{mass A}) \times 100$$

<Evaluation of aggregate of the coating material>

The coating material fabricated according to the above-described method was left at rest for 24 hours in a refrigerator of 5 °C and an amount of sediment at that time was visually confirmed. A case in which there is no sedimentation

of the aggregate was determined to be pass ("A"), and a case in which the aggregate was obviously precipitated or a case in which there was insoluble material not dissolved in the arbitrary solvent at the time of coating material fabrication was determined to be ("B").

<Fabrication of an organic-inorganic composite film (coating film)>

An organic-inorganic composite film (coating film) was fabricated according to the following procedure.

(1) An appropriate amount of the coating material described above was weighed.
(2) The coating material of (1) was placed on a PET film or a TAC film and coating was rapidly performed by a bar coater. Provided that the bar coater was appropriately selected so that a coating film thickness after drying was about 1.5 to 2 μm.
PET film: "Cosmo Shine 4100" (thickness 100 μm, total light transmittance 90% and haze 0.9%) made by Toyobo Co., Ltd.
TAC film: (thickness 80 μm, total light transmittance 93% and haze 0.7%) made by Fuji Film Co., Ltd.
(3) Air-drying was performed for 10 minutes, drying was performed for 10 minutes by an explosion-proof fan dryer of 80 °C, and then photo-curing or thermal curing was performed, as necessary, to obtain an "organic-inorganic composite film (coating film)".

Photo-curing: The coating film after drying was irradiated with UV light with a light amount of 600 $mJ/cm^2$ from the organic-inorganic composite film side under nitrogen by a high-pressure mercury lamp.
Thermal curing: Heating was performed for 5 hours by an explosion-proof fan dryer of 100 °C.

<Appearance of organic-inorganic composite film (coating film)>

The above organic-inorganic composite film (coating film) was visually observed. A case in which an aggregate of the particles was not substantially seen was determined to pass ("A") and a case in which the aggregate of the particles was seen was determined to be "B".

<Measurement of refractive index of organic-inorganic composite film (coating film)>

Using a refractive index measurement device, a refractive index was measured under the following conditions.
Device: "MODEL 2010 PRISM COUPLER" made by Metricon Corporation
Mode: Single film mode
Measurement wavelength: 633 nm

<Measurement of total light transmittance and haze of organic-inorganic composite film (coating film)>

Using a haze meter ("NDH 5000W" made by Nippon Denshoku Industries Co., Ltd.), total light transmittance and haze of the coating film were measured according to "JIS K7105: Method of testing an optical property of plastic".

<Measurement of pencil hardness of organic-inorganic composite film (coating film)>

Pencil hardness of the coating film was measured with a load of 500 g by an electric pencil scratch hardness tester (made by Yasuda Seiki Seisakusho Ltd.) based on "JIS K5600-5-4: General paint test method-Part 5: Mechanical property of a coating film-Section 4: Scratch hardness (pencil method)".

<Adhesion of organic-inorganic composite film (coating film)>

A tape peel test was performed using a crosscut guide (CCI-1 made by Cotec Corporation) based on "JIS-K5600" and adhesion was determined. The unpeeled cured organic-inorganic composite film was determined to be A and the peeled cured organic-inorganic composite film was determined to be B.

<Solvent resistance of organic-inorganic composite film (coating film)>

A cured film was formed on glass according to the same method as "Fabrication of organic-inorganic composite film" and a cured film was immersed in a tetrahydrofuran liquid and covered with a lid. In this state, it was left for 3 days and then a state of the cured film of a part immersed in the liquid was confirmed. A state in which the film remained was

determined to be A and a state in which the film was dissolved or swollen was determined to be B.

<Measurement of contact angle of organic-inorganic composite film (coating film)>

Using a contact angle meter (made by Kyowa Interface Science Co., Ltd.), a water contact angle (contact angle to water) of the coating film and an oil contact angle (contact angle to n-hexadecane) were measured by a drop method.

<Calculated refractive index of organic-inorganic composite film>

The Formula of Maxwell-Garnett was used to obtain a calculated refractive index of the obtained organic-inorganic composite film. The refractive index of the polymer was obtained by synthesizing a polymer having the same composition as a polymer in the organic-inorganic composite, and measuring the refractive index of it.

The value of the refractive index measured according to the method of <Refractive index of inorganic oxide particles> described above was used as the refractive index of the inorganic oxide particles, and a value obtained by dividing the inorganic particle content (volume%) measured by <Measurement of inorganic material content of organic-inorganic composite> described above by 100 was used as a volume fraction of the inorganic oxide particles.

<Formula of Maxwell-Garnett>

$$(n_a^2-n_m^2)/(n_a^2+2n_m^2)=q(n_p^2-n_m^2)/(n_p^2+2n_m^2) \ldots (8)$$

Provided that, in Formula (8), $n_a$ denotes the calculated refractive index of the organic-inorganic composite film, $n_m$ denotes the refractive index of the polymer, $n_p$ denotes the refractive index of the inorganic oxide particle, and q denotes the volume fraction of the inorganic oxide particles, respectively.

Representative calculated values of the inorganic oxide particles of a curable composition and the organic polymer are shown below. Since the photopolymerization initiator was infinitesimal, it was excluded from a calculation.
MMA polymer: Refractive index 1.490 and specific gravity 1.19

Copolymer consisting of MMA and a reactive double bond; the refractive index and the specific gravity of the copolymer having a different molar ratio was obtained from a linear approximation equation obtained from the following values and the MMA polymer.
A copolymer in which a molar ratio of MMA and the reactive double bond is 77/23; refractive index 1.508 and specific gravity 1.21
A copolymer in which a molar ratio of MMA and the reactive double bond is 45/55; refractive index 1.529 and specific gravity 1.23
A copolymer in which a molar ratio of ethyl methacrylate and the reactive double bond is 67/33; refractive index 1.514 and specific gravity 1.16
A copolymer in which a molar ratio of butyl acrylate and the reactive double bond is 60/40; refractive index 1.519 and specific gravity 1.20
A copolymer in which a molar ratio of butyl acrylate and the reactive double bond is 73/27; refractive index 1.510 and specific gravity 1.19
A copolymer in which a molar ratio of ethyl acrylate and the reactive double bond is 48/52; refractive index 1.526 and specific gravity 1.24
A copolymer in which a molar % ratio of methacrylic acid 2,2,2-trifluoroethyl and the reactive double bond is 55/45; refractive index 1.522 and specific gravity 1.32
20 nm spherical silica, 50 nm spherical silica, 100 nm spherical silica, beaded silica; refractive index 1.450 and specific gravity 2.20
48 nm hollow silica; refractive index 1.300 and specific gravity 1.73
64 nm hollow silica; refractive index 1.250 and specific gravity 1.55

<Void content of the organic-inorganic composite film>

An actually measured refractive index of the organic-inorganic composite film including voids is coincident with a value obtained by adding a product of the refractive index and the volume fraction of the voids (refractive index of the air: 1.00) to a product of the refractive index and the volume fraction of the organic-inorganic composite. Therefore, the

void content was calculated by the following formula.

$$\text{Void content (\%)}=(n_a-n_b)/(n_a-1) \times 100... (9)$$

In Formula (9), $n_a$ denotes the calculated refractive index of the organic-inorganic composite, and $n_b$ denotes the actually measured refractive index of the organic-inorganic composite film.

<Fabrication of antireflection film>

A condition that makes a thickness of the low refractive index layer after drying and curing be approximately 110 nm was selected and an antireflection film (corresponding to Fig. 2(a)) was fabricated in the following procedure.

(1) An appropriate amount of the coating material described above was weighed.
(2) The coating material of (1) was placed on a support (a PET film or a TAC film) and coating was rapidly performed by a bar coater and air drying was performed. Provided that the coater was appropriately selected to obtain a desired film thickness.
PET film: "Cosmo Shine A4100" (thickness: 100 μm, total light transmittance: 90%, and haze: 0.9%) made by Toyobo Co., Ltd.
TAC film: Made by Fuji Film Co., Ltd. (thickness: 80 μm, total light transmittance: 93%, and haze: 0.7%)
(3) Further, drying was performed for 2 minutes by an explosion-proof fan dryer of 90 °C, and then UV curing or thermal curing was performed as necessary to obtain an antireflection film in which a low refractive index layer was formed on a support.

<Appearance of antireflection film>

The antireflection film was visually observed. A case in which the aggregation of the particles was not substantially seen was determined to pass ("A") and a case in which the aggregation of the particles was seen was determined to fail ("B").

<Reflected glare of antireflection film>

Reflected glare for the antireflection film was evaluated in the following procedure.

(1) A back surface of the support of the antireflection film was lightly rubbed with sandpaper and painted with a black matte spray.
(2) Light of a fluorescent lamp was radiated from the surface of the antireflection film (the antireflection film side). A case in which the reflected glare was less than a reference was determined to be pass ("A") and a case in which the reflected glare was equal to or more than the reference was determined to be failure ("B").

<Measurement of minimum reflectance of antireflection film>

A minimum reflectance was measured using a spectrophotometer according to the following procedure.

(1) A back surface of the support of the antireflection film was lightly rubbed with sandpaper and painted with a black matte spray.
(2) The reflectance was measured in the range of wavelength of 380 to 700 nm using the following spectrophotometer.
Device: "U-3410": With large sample chamber integrating sphere made by Hitachi, Ltd.
Criterion: Reflectance in an aluminum deposition film was 100%.
(3) In the wavelength of 450 to 650 nm, the lowest reflectance was regarded as minimum reflectance.

<Raw material>

Content of raw materials used in examples and comparative examples are shown in following (1) to (8).

(1) Inorganic particle solution

(1-1) 20 nm spherical silica solution

Product name: "MIBK-ST" made by Nissan Chemical Industries, Ltd.
$SiO_2$ content: 30 mass%
Cavity content: 0%
Refractive index: 1.45
L/D: 1.1

(1-2) 50 nm spherical silica solution

Product name: "MIBK-ST-L" made by Nissan Chemical Industries, Ltd.
$SiO_2$ content: 30 mass%
Cavity content: 0%
Refractive index: 1.45
L/D: 1.1

(1-3) 100 nm spherical silica solution

Product name: "MEK-ST-ZL" made by Nissan Chemical Industries, Ltd.
$SiO_2$ content: 30 mass%
Cavity content: 0%
Refractive index: 1.45
L/D: 1.1

(1-4) Beaded silica solution A

Product name: "MEK-ST-UP" made by Nissan Chemical Industries, Ltd.
20 mass% beaded silica particle/MEK solution
Cavity content: 0%
Refractive index: 1.45
A structure of a long chain formed by spherical silica being bonded in a beaded shape. A TEM photograph of the beaded inorganic particles is shown in Fig. 2.

(1-5) Beaded silica solution B

Product name: "MIBK-ST-UP" made by Nissan Chemical Industries, Ltd.
20 mass% beaded silica particle/MIBK solution
Cavity content: 0%
Refractive index: 1.45

(1-6) Hollow silica solution C

Product name: "Sururia 2320" made by JGC Ceatalysts and Chemicals Ltd.
20 mass% hollow silica particle/MIBK solution
Average particle diameter 48 nm, outer shell thickness 8.5 nm
Cavity content: 27%
Refractive index: 1.30
L/D: 1.1

(1-7) Hollow silica particle solution D

Product name: Made by JGC Ceatalysts and Chemicals Ltd.
Hollow silica particle content: 20 mass%
20 mass% hollow silica particle/MIBK solution
Average particle diameter 64 nm, outer shell thickness 9 nm
Cavity content: 37%

Refractive index: 1.25
L/D: 1.1

(1-8) Zirconia solution

Product name: Made by Nissan Chemical Industries, Ltd.
Zirconia composite particle content: 30 mass%
30 mass% zirconia composite particle/MIBK solution (zirconia composite particles: Composite particles of zirconia, silica, and tin oxide).
Refractive index: 1.91
L/D: 1.5
Density: 5.1 g/cm$^3$

(1-9) Titania solution

Product name: Made by JGC Cecatalysts and Chemicals Ltd.
Titania particle content: 20 mass%
20 mass% titania particle/MIBK solution
Refractive index: 1.90
L/D: 2.1
Density of inorganic oxide particles: 4.1 g/cm$^3$

(2) Silane compound

(2-1) 3-(2-bromoisobutyloxy)propyldimethylchlorosilane (hereinafter referred to as "BPS")

BPS represented in following chemical formula (10) was synthesized with reference to a known method (Japanese Patent Laid-Open No. 2006-063042, etc.).

[Chemical formula 9]

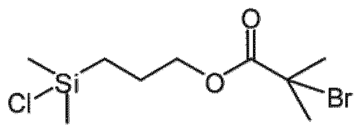 • • • (1 0)

(2-2) (3-(2-bromoisobutyryl)propyl)dimethylethoxysilane (hereinafter referred to as "BIDS")

BIDS represented in the following chemical formula (11) was synthesized according to a known method (Japanese Patent Laid-Open No. 2006-257308).

[Chemical formula 10]

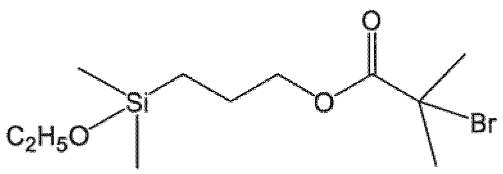 • • • (1 1)

(2-3) 1,1,1,3,3,3-hexamethyldisilazane (hereinafter referred to as "HMDS"): Made by Tokyo Chemical Industry Co., Ltd.

(3) Polymerization catalyst

(3-1) Copper bromide(I) (CuBr): Made by Wako Pure Chemical Industries, Ltd.

(3-2) Copper bromide(II) (CuBr2): Made by Wako Pure Chemical Industries, Ltd.

(4) Ligand

(4-1) N,N,N',N,"N"-pentamethyldiethylenetriamine (hereinafter referred to as "PMDETA"): Made by Aldrich
(4-2) 4,4'-di(5-nonyl)-2,2'-dipyridine (hereinafter referred to as "dNbpy"): Made by Aldrich

(5) Monomer

Monomers other than the following (5-11) and (5-12) were used after a polymerization inhibitor was removed through an alumina column, and then nitrogen bubbling was performed for 1 hour or more for deoxidation treatment. When the alumina column is not applicable, the polymerization inhibitor may be removed by a known method such as distillation.

(5-1) Methyl methacrylate (hereinafter also referred to as "MMA"): Made by Tokyo Chemical Industry Co., Ltd.
(5-2) Ethyl methacrylate (hereinafter also referred to as "EMA"): Made by Tokyo Chemical Industry Co., Ltd.
(5-3) Butyl acrylate (hereinafter also referred to as "BA"): Made by Tokyo Chemical Industry Co., Ltd.
(5-4) Ethyl acrylate (hereinafter also referred to as "EA"): Made by Tokyo Chemical Industry Co., Ltd.
(5-5) Methyl acrylate (hereinafter also referred to as "MA"): Made by Tokyo Chemical Industry Co., Ltd.
(5-6) Methacrylic acid 2,2,2-trifluoroethyl (hereinafter also referred to as "TFEMA"): Made by Tokyo Chemical Industry Co., Ltd.
(5-7) Methacrylic acid 2,2,3,3,3,-pentafluoropropyl (hereinafter also referred to as "PFPMA"): Made by Daikin Industries, Ltd.
(5-8) Methacrylic acid 2-hydroxyethyl (hereinafter also referred to as "HEMA"): Made by Tokyo Chemical Industry Co., Ltd.
(5-9) Glycidyl methacrylate (hereinafter also referred to as "GMA"): Made by Tokyo Chemical Industry Co., Ltd.
(5-10) Methacryl modified silicone oil (hereinafter also referred to as "SiMA"): Made by Shin-Etsu Silicone Co., Ltd., "X-22-2475"
(5-11) Methacrylic acid 2-isocyanateethyl (hereinafter also referred to as "MOI"): Showa Denko K.K.
(5-12) Acrylic acid 2-isocyanateethyl (hereinafter also referred to as "AOI"): Showa Denko K.K.

(6) Solvent or the like

(6-1) Methanol: Made by Wako Pure Chemical Industries, Ltd.
(6-2) Methyl isobutyl ketone (hereinafter referred to as "MIBK"): Made by Wako Pure Chemical Industries, Ltd.
(6-3) Methyl ethyl ketone (hereinafter referred to as "MEK"): Made by Wako Pure Chemical Industries, Ltd.
(6-4) Tetrahydrofuran (hereinafter referred to as "THF"): Made by Wako Pure Chemical Industries, Ltd.
(6-5) Dimethylformamide (hereinafter referred to as "DMF"): Made by Wako Pure Chemical Industries, Ltd.
(6-6) n-methylpyrrolidone (hereinafter referred to as "NMP"): Made by Wako Pure Chemical Industries, Ltd.
(6-7) Hexane: Made by Wako Pure Chemical Industries, Ltd.
(6-8) Toluene: Made by Wako Pure Chemical Industries, Ltd.
(6-9) Cyclohexanone: Made by Wako Pure Chemical Industries Co., Ltd.
(6-10) Diacetone alcohol (hereinafter referred to as "DAA"): Made by Wako Pure Chemical Industries Co., Ltd.
(6-11) Methylcellosolve: Made by Wako Pure Chemical Industries, Ltd.

(7) Methanol-water mixture solution

(7-1) Methanol-water mixture solution-1: Mixture solution including methanol at 77% by volume and ion exchanged water at 23% by volume
(7-2) Methanol-water mixture solution-2: Mixture solution including methanol at 80% by volume and ion exchanged water at 20% by volume

(8) Polymerization initiator

(8-1) Ethyl 2-bromoisobutyrate (hereinafter also referred to as "EBIB"): Made by Aldrich
(8-2) Azobisisobutyronitrile (hereinafter also referred to as "AIBN"): Made by Wako Pure Chemical Industries, Ltd.

(9) Addition reaction catalyst

Dibutyltin dilaurate (hereinafter referred to as DBTDL): Made by Wako Pure Chemical Industries, Ltd.

(10) Polymerization inhibitor

2,6-di-tert-butyl phenol: Made by Tokyo Chemical Industry Co., Ltd.

(11) Photo-radical initiator

(11-1) 1-hydroxy-cyclohexyl-phenyl-ketone (Irgacure 184): Made by Chiba Japan Co., Ltd.
(11-2) 2-methyl-1-(4-methylthiophenyl)-2-morpholinopropane-1-on (Irgacure 907): Made by Chiba Japan Co., Ltd.

(12) photo-acid generating agent

CPI-100P (trademark name): Made by San-Apro Ltd.

(13) Curing agent

(13-1) "4-methyl hexahydrophthalic anhydride/hexahydrophthalic anhydride=70/30"
Product name: "RIKACID MH-700G" made by New Japan Chemical Co., Ltd.
(13-2) Maleic acid: Made by Wako Pure Chemical Industries, Ltd.

(14) Curing accelerator

(14-1) Amine-based compound
Product name: "U-CAT 18X" made by San-Apro Ltd.
(14-2) Triethylamine (hereinafter referred to as TEA): Made by Wako Pure Chemical Industries, Ltd.

(15) Crosslinker

(15-1) (3',4'-epoxycyclohexane)methyl 3,4-epoxycyclohexane carboxylate (hereinafter also referred to as "celoxide 2021P"): Daicel Chemical Industries, Ltd.
(15-2) Dipentaerythritol pentaacrylate: Made by Sigma-Aldrich Co. LLC.

<Synthesis of surface-reformed inorganic oxide particles-1 (Synthesis of BPS-reformed 20 nm spherical silica particles)>

BPS-reformed 20 nm spherical silica particles (20 nm spherical silica particles in which BPS has been bonded to a surface thereof) were synthesized according to the following procedure.

(1) A cooling pipe was connected and the inside of a two-necked flask having a rotor put therein was nitrogen-substituted.
(2) Under nitrogen, a 20 nm spherical silica solution of 84% by volume was introduced into the flask, BPS of 8% by

volume was further introduced, and stirring was initiated.
(3) The flask was immersed in an oil bath of 85 °C and a reaction was performed for 36 hours while stirring.
(4) A reaction liquid was cooled to room temperature and then HMDS of 8% by volume was introduced under nitrogen.
(5) Stirring was performed for 2 hours at room temperature and then for 8 hours at 80 °C to conduct a reaction, and the reaction liquid was cooled to room temperature.
(6) The reaction liquid was moved to a centrifuge tube and centrifuged at 10000 rpm for 30 minutes at 10 °C using a centrifuge (model: 7700 made by Kubota Seisakujo Co., Ltd.).
(7) A supernatant solution in the centrifuge tube was put into a methanol-water mixture solution-2, mixed and left at rest, and the supernatant solution was discarded.
(8) Nitrogen was blown into the sediment, a remaining liquid was volatilized, a small amount of THF was added, and then the sediment was dissolved in THF by stirring.
(9) The solution was put into methanol, stirring was performed, it was left at rest, and then the supernatant solution was discarded.
(10) Methanol was added to the remaining sediment, stirring was performed, and it was left at rest. Then, the supernatant solution was discarded. Further, this operation was repeated 10 times.
(11) Air drying was performed overnight while blowing nitrogen into the sediment to volatilize a liquid and obtain a solid material.
(12) The solid material was dried for 24 hours at 80 °C under vacuum to obtain BPS-reformed 20 nm spherical silica particles.
(13) The halogen content was 2.4 mass%. Since chlorine was not detected, bromine content is shown as the halogen content.

<Synthesis of surface-reformed inorganic oxide particles-2 (Synthesis of BPS-reformed 50 nm spherical silica particles)>

BPS-reformed 50 nm spherical silica particles were synthesized according to the same method as in <Synthesis of surface-reformed inorganic oxide particles-1> described above except that the 20 nm spherical silica solution was changed to a 50 nm spherical silica solution and blending quantity was changed as follows.
Blending quantity: 50 nm spherical silica solution (82% by volume), BPS (9% by volume), and HMDS (9% by volume)
Halogen content was 0.6 mass%.

<Synthesis of surface-reformed inorganic oxide particles-3 (Synthesis of BPS-reformed 100 nm spherical silica particles)>

BPS-reformed 100 nm spherical silica particles were synthesized according to the same method as in <Synthesis of surface-reformed inorganic oxide particles-2> described above except that the 50 nm spherical silica solution was changed to a 100 nm spherical silica solution.
Halogen content was 0.45 mass%.

<Synthesis of surface-reformed inorganic oxide particles-4 (Synthesis of BPS-reformed beaded silica particles A1)>

BPS-reformed beaded silica particles A1 were synthesized according to the same method as in <Synthesis of surface-reformed inorganic oxide particles-1> described above except that the 20 nm spherical silica solution was changed to a beaded silica solution A and blending quantity was changed as follows.
Blending quantity: Beaded silica solution (86% by volume), BPS (7% by volume), and HMDS (7% by volume)
Halogen content was 2.2 mass%.

<Synthesis of surface-reformed inorganic oxide particles-5 (Synthesis of BPS-reformed beaded silica particles A2)>

BPS-reformed beaded silica particles A2 were synthesized according to the same method as in <Synthesis of surface-reformed inorganic oxide particles-1> except that the 20 nm spherical silica solution was changed to a beaded silica solution A and blending quantity was changed as follows.
Blending quantity: Beaded silica solution (92.7% by volume), BPS (0.2% by volume), and HMDS (7.1% by volume)
Halogen content was 0.18 mass%.

<Synthesis of surface-reformed inorganic oxide particles-6 (Synthesis of BPS-reformed 50 nm hollow silica particles)>

BPS-reformed 50 nm hollow silica particles (50 nm hollow silica particles in which BPS has been bonded to a surface thereof) were synthesized according to the same method as in Synthesis of surface-reformed inorganic oxide

particles-1 described above, while changing the blending quantity to a hollow silica solution C (average particle diameter 48 nm) (86% by volume), BPS (7% by volume), and HMDS (7% by volume).

The halogen content of the BPS-reformed 50 nm hollow silica particles was 1.0 mass%. Since chlorine was not detected, bromine content is shown as the halogen content.

<Synthesis of surface-reformed inorganic oxide particles-7 (Synthesis of BPS-reformed 60 nm hollow silica particles)>

BPS-reformed 60 nm hollow silica particles (60 nm hollow silica particles in which BPS has been bonded to a surface thereof) were synthesized according to the same method as in Synthesis of surface-reformed inorganic oxide particles-1 described above, while changing the blending quantity to a hollow silica solution D (average particle diameter 64 nm) (86% by volume), BPS (7% by volume), and HMDS (7% by volume).

The halogen content of the BPS-reformed 60 nm hollow silica particles was 1.2 mass%. Since chlorine was not detected, bromine content is shown as the halogen content.

<Synthesis of surface-reformed inorganic oxide particles-8 (Synthesis of CPS-reformed 20 nm spherical silica particles)>

CPS-reformed 20 nm spherical silica particles (20 nm spherical silica particles in which CPS has been bonded to a surface thereof) were synthesized with BPS being changed to CPS according to the same method as in Synthesis of surface-reformed inorganic oxide particles-1 described above.

[Reference Example 1: 20 nm $SiO_2$-g-p(TFEMA-co-PFPMA); thermoplastic]

An organic-inorganic composite A was produced according to the mix proportion of Table 1 in the following procedure. A concentration of each component is a numerical value with reference to a total amount of all components. An evaluation result of the obtained organic-inorganic composite A is shown in Table 6.

(1) CuBr and $CuBr_2$ were added to a Schlenk flask having a rotor put therein, and an operation of vacuum-treating the inside of the flask and then performing nitrogen substitution was repeated three times to deoxygenate the inside of the flask. Then, a small amount of MIBK was introduced under nitrogen and stirring was performed.

(2) PMDETA was added to the solution and stirring was performed at 60 °C. A resultant solution was used as a catalyst solution.

(3) BPS reformed 20 nm silica particles were put into another Schlenk flask connected with a cooling pipe and having a rotor put therein.

(4) A cooling pipe was connected to the Schlenk flask and an operation of vacuum-treating the inside of the flask and then performing nitrogen substitution was repeated three times to deoxygenate the inside of the flask.

(5) A remaining solvent (MIBK) was introduced into the flask under nitrogen, and a treatment was performed for 10 minutes by an ultrasonic washing machine. Then, a monomer (TFEMA) was further introduced, the flask was immersed in an oil bath of 75 °C and stirring was performed.

(6) Further, the catalyst solution fabricated above was introduced under nitrogen, a reaction liquid was stirred for 8 minutes, and a polymerization reaction was performed.

(7) The flask was immersed in an ice bath to be rapidly cooled. Then, methanol (hexane may be used when it is hard to precipitate solid content only with methanol) was added and stirring was performed. When sediment did not sink easily, the sediment was separated through centrifugal separation and left at rest.

(8) After being left at rest, a supernatant solution was discarded. Then, methanol was added to the remaining sediment again and it was left at rest. The supernatant solution was discarded. This operation was further repeated eight times.

(9) Air drying was performed overnight while blowing nitrogen into the remaining sediment to volatilize a liquid and obtain a solid material.

(10) The solid material was dried for 24 hours at 80 °C under vacuum to obtain an organic-inorganic composite A.

(11) Tg of the organic-inorganic composite A was measured to be 73 °C according to the above-described method.

(12) Halogen content of the organic-inorganic composite A was measured to be 1.8 mass% according to the above-described method. Since chlorine was not detected, bromine content is shown as the halogen content.

(13) Fluorine content of the organic-inorganic composite A was measured to be 5 mass% according to the above-described method.

(14) A number average molecular weight (Mn) and a weight average molecular weight (Mw) of the polymer constituting the organic-inorganic composite A were measured to be Mn=9,500 and Mw=14,100 according to the above-described method. Further, a dispersion degree (Mw/Mn) of the molecular weight was calculated. It was found that Mw/Mn=1.48 and a polymer chain with a matched chain length was bonded to the inorganic oxide particles.

(15) An amount of the free polymers of the organic-inorganic composite A was measured. The free polymer was not detected, and the amount of the polymer bonded to the inorganic oxide particles was 100 mass%.

(16) Inorganic oxide particle content of the organic-inorganic composite A was measured according to the above-described method. The inorganic oxide particle content was 84 mass% and 75 volume%.

(17) A solvent in which MEK and cyclohexanone were mixed at 8:2 (volume ratio) was added to the organic-inorganic composite A so that solid content was approximately 10 mass%, to obtain a coating material according to the above-described method.

(18) The coating material was applied to a PET film and dried according to the above-described method to obtain an organic-inorganic composite film (a coating film). An appearance of the obtained film was visually confirmed. The aggregation of the inorganic oxide particles was not seen and transparency was maintained.

(19) Total light transmittances and haze of the film were measured according to the above-described method. The total light transmittance was 92% and the haze was 0.3%.

(20) The refractive index of the organic-inorganic composite film (the coating film) was measured according to the above-described method. The refractive index was 1.39 which is a lower value than a theoretical refractive index (1.44).

(21) A void content of the organic-inorganic composite film was obtained according to the above-described method and was 12%.

(22) Further, pencil hardness of the film measured according to the above-described method was 2H, and it was found that strength increased in comparison with the pencil hardness (HB) of the coating film of pTFEMA of Comparative Example 2.

(23) As a result of evaluating the contact angle of the film according to the above-described method, a water contact angle was 95° and an oil contact angle was 48°.

(24) As a result of producing and evaluating the coating film according to the same method as above using a TAC film in place of the PET film according to the above-described coating material, good results were obtained like the PET film.

[Reference Example 2: 50 nm $SiO_2$-g-p(TFEMA/MMA/EA); thermoplastic]

An organic-inorganic composite B was produced according to the mix proportion of Table 1 according to the same method as in Reference Example 1 except that a polymerization reaction condition was 75 °C and 12 hours, and evaluated. Evaluation results of the obtained organic-inorganic composite B are shown in Table 6. Since chlorine was not detected, bromine content is shown as the halogen content.

The number average molecular weight (Mn) and the weight average molecular weight (Mw) of the polymer constituting the organic-inorganic composite B were measured according to the above-described method. It was found that Mn=14,200, Mw =21,900 and Mw/Mn=1.54 and a polymer chain with a matched chain length was bonded to the inorganic oxide particles.

Using the organic-inorganic composite B, a coating material and an organic-inorganic composite film (coating film) were obtained according to the above-described method with the solvent being changed to MIBK. Evaluation results are shown in Table 9. The appearance of the obtained film was visually confirmed. The aggregation of the inorganic oxide particles was not seen and transparency was maintained. Further, a refractive index was measured according to the above-described method. The refractive index was 1.38, which is a much smaller value than a theoretical refractive index (1.44). Further, the void content found from the value of the refractive index was 14%. From this, it was found that the refractive index can be controlled.

[Example 3: 50 nm hollow $SiO_2$-g-p(TFEMA-co-HEMA); thermoplastic]

An organic-inorganic composite C was prduced according to the mix proportion of Table 1 according to the same method as in Reference Example 1 except that polymerization reaction conditions were 60 °C and 20 minutes, and evaluated. Evaluation results of the obtained organic-inorganic composite C are shown in Table 6. Since chlorine was not detected, bromine content is shown as the halogen content.

Fabrication was performed using a solvent in which MIBK and MEK were mixed at 1:1 (volume ratio) and using the organic-inorganic composite C according to the above-described method to obtain a coating material. In this case, ultrasonic treatment was performed for 3 hours. Further, a coating film was fabricated according to the above-described method. Evaluation results are shown in Table 9.

The appearance thereof was visually confirmed. The aggregation of the particles was not seen and transparency was maintained. Further, a refractive index was measured according to the above-described method. The refractive index was 1.33, which is a much smaller value than a theoretical refractive index (1.37). Further, the void content found from the value of the refractive index was 9%. From this, it was found that the refractive index can be controlled.

The molecular weight of the polymer constituting the organic-inorganic composite C was measured. It was found that Mn=12,900, Mw=21,900 and Mw/Mn=1.70 (≤2.3) and a polymer chain with a matched chain length was bonded to the inorganic oxide particles.

[Example 4: 60 nm hollow $SiO_2$-g-p(MMA-co-MA); thermoplastic]

An organic-inorganic composite D was produced according to the mix proportion of Table 1 according to the same method as in Reference Example 2 except that polymerization reaction conditions were 60 °C and 15 minutes, and evaluated. Evaluation results of the obtained organic-inorganic composite D are shown in Table 6. Since chlorine was not detected, bromine content is shown as the halogen content.

A coating material and an organic-inorganic composite film (coating film) were obtained using the organic-inorganic composite D according to the same method as in Reference Example 2. Evaluation results are shown in Table 9. The appearance of the obtained film was visually confirmed. The aggregation of the inorganic oxide particles was not seen and transparency was maintained. Further, a refractive index was measured according to the above-described method. The refractive index was 1.20, which is a much smaller value than a theoretical refractive index (1.32). Further, the void content found from the value of the refractive index was 38%. From this, it was found that the refractive index can be controlled.

[Example 5: Beaded $SiO_2$-g-pMMA; thermoplastic]

An organic-inorganic composite E was produced according to the mix proportion of Table 1 by the same method as in Reference Example 1 except that polymerization reaction conditions were 60 °C and 10 minutes, and evaluated. Evaluation results of the obtained organic-inorganic composite E are shown in Table 6. Since chlorine was not detected, bromine content is shown as the halogen content.

A coating material and an organic-inorganic composite film (coating film) were obtained using organic-inorganic composite E according to the same method as in Reference Example 2. Evaluation results are shown in Table 9. The appearance of the obtained film was visually confirmed. The aggregation of the inorganic oxide particles was not seen and transparency was maintained. Further, a refractive index was measured according to the above-described method. The refractive index was 1.21, which is a much smaller value than a theoretical refractive index (1.46). Further, the void content found from the value of the refractive index was 54%. From this, it was found that the refractive index can be controlled.

[Reference Example 6: 20 nm $SiO_2$-g-pGMA; photo-cationic curing]

An organic-inorganic composite F was produced according to the mix proportion of Table 1 by the following method, and evaluated. Evaluation results of the obtained organic-inorganic composite F are shown in Table 6.

(1) CuBr and $CuBr_2$ were added to a Schlenk flask having a rotor put therein, and an operation of vacuum-treating the inside of the flask and then performing nitrogen substitution was repeated three times to deoxygenate the inside of the flask, a small amount of MEK was introduced under nitrogen, and then a solution was stirred.
(2) PMDETA was added to the solution and stirring was performed at 40 °C. A resultant solution was used as a catalyst solution.
(3) BPS-reformed 20 nm spherical silica particles were put into another Schlenk flask connected with a cooling pipe and having a rotor put therein.
(4) A cooling pipe was connected to the Schlenk flask and an operation of vacuum-treating the inside of the flask and then performing nitrogen substitution was repeated three times to deoxygenate the inside of the flask.
(5) A remaining MEK solvent was introduced into the flask under nitrogen, a treatment was performed for 10 minutes by an ultrasonic washing machine, a GMA monomer was introduced, and the flask was immersed in an oil bath of 40 °C and then stirred.
(6) Further, the catalyst solution fabricated above was introduced under nitrogen, a reaction liquid was stirred for 7 hours, and a polymerization reaction was performed.
(7) The flask was immersed in an ice bath to be rapidly cooled, put into hexane and stirred. When sediment did not easily sink, the sediment was separated through centrifugal separation and it was left at rest.
(8) After being left at rest, a supernatant solution was discarded, hexane was added to the remaining sediment again, it was left at rest, and the supernatant solution was discarded. This operation was further repeated twice.
(9) Air drying was performed overnight while blowing nitrogen into the remaining sediment to volatilize a liquid, thereby obtaining an organic-inorganic composite.
(10) The number average molecular weight (Mn) of the polymer constituting the organic-inorganic composite was

measured according to the above-described method. Mn=10,900. Further, a molecular weight distribution (Mw/Mn) was calculated. It was found that Mw/Mn=1.38 (≤2.3) and the polymer chain with a matched chain length was bonded to the inorganic particles.

(11) A free polymer amount of the organic-inorganic composite was measured. 2 mass% of the free polymer was detected and an amount of a polymer bonded to the inorganic particles was 98 mass%.

(12) Further, the organic-inorganic composite, the photo-acid generating agent and MEK were mixed according to the mix proportion of Table 5 to obtain a coating material by the above-described method. The photo-acid generating agent was introduced to be 5 mass% with respect to the amount of the organic polymer in the organic-inorganic composite. Further, a solvent (mixed at a volume ratio of MEK:cyclohexanone=8:2) was added so that a solid content concentration of an organic-inorganic composite composition (the organic-inorganic composite and the photo-acid generating agent) was 10 mass%.

(13) The coating material was applied to a PET film according to the above-described method and dried, and UV irradiation was performed under air to obtain an organic-inorganic composite film. Evaluation results are shown in Table 9. The appearance of the obtained organic-inorganic composite film was visually confirmed. The aggregation or crack of the inorganic particles was not seen and transparency was maintained.

(14) A total light transmittance and haze of the organic-inorganic composite film were measured according to the above-described method. The total light transmittance was 91% and the haze was 1.2%.

(15) Pencil hardness of the cured organic-inorganic composite film was measured to be H according to the above-described method. Further, adhesion examination was performed according to the above-described method. There was no detached part and the adhesion was good.

(16) A refractive index of the organic-inorganic composite film was measured according to the above-described method, and it was 1.42 and exhibited a smaller value than a theoretical refractive index (1.47). From this, it was found that an organic-inorganic composite film having voids was formed.

(17) Void content of the organic-inorganic composite film calculated according to the above-described method, was 11% and exhibited high void content.

[Reference Example 7: 50 nm $SiO_2$-g-pGMA; photo-cationic curing]

An organic-inorganic composite G was produced according to the mix proportion of Table 1 by the same method as in Reference Example 6 except that the BPS-reformed 20 nm spherical silica particles were changed to the BPS-reformed 50 nm spherical silica particles, a polymerization temperature was 50 °C and a polymerization stop time was 4 hours.

Further, the coating material was fabricated according to the mix proportion of Table 5, and an organic-inorganic composite film was fabricated according to the same method as in Reference Example 6, and evaluated Evaluation results are shown in Table 9.

[Reference Example 8: 100 nm $SiO_2$-g-pGMA; photo-cationic curing]

An organic-inorganic composite H was produced according to the mix proportion of Table 1 by the same method as in Reference Example 6 except that the BPS-reformed 20 nm spherical silica particles were changed to the BPS-reformed 100 nm spherical silica particles, the polymerization temperature was changed to 50 °C and a polymerization stop time was 6.5 hours. Further, the coating material was fabricated according to the mix proportion of Table 5, and an organic-inorganic composite film was fabricated according to the same method as in Reference Example 6, and evaluated. Evaluation results are shown in Table 9.

[Example 9: 50 nm hollow $SiO_2$-g-pGMA; photo-cationic curing]

An organic-inorganic composite I was produced according to the mix proportion of Table 1 by the same method as in Reference Example 6 except that the BPS-reformed 20 nm spherical silica particles were changed to the BPS-reformed 50 nm hollow silica particles, the polymerization temperature was changed to 50 °C, and a polymerization stop time was 6.5 hours. Further, the coating material was fabricated according to the mix proportion of Table 5, and an organic-inorganic composite film was fabricated according to the same method as in Reference Example 6, and evaluated Evaluation results are shown in Table 9.

[Example 10: Beaded $SiO_2$-g-pGMA; photo-cationic curing]

An organic-inorganic composite J was produced according to the mix proportion of Table 1 by the same method as in Reference Example 6 except that the BPS-reformed 20 nm spherical silica particles were changed to the BPS-reformed beaded silica particles A2, the polymerization temperature was changed to 50 °C and a polymerization stop time was 7 hours.

Further, the coating material was fabricated according to the mix proportion of Table 5, and an organic-inorganic composite film was fabricated according to the same method as in Reference Example 6, and evaluated Evaluation results are shown in Table 9.

[Reference Example 11: Beaded $SiO_2$-g-pGMA+celoxide; photo-cationic curing]

A crosslinker ("Celoxide 2021P") and a photo-acid generating agent were introduced into the organic-inorganic composite J of Example 10 according to the mix proportion of Table 5, and a solvent (mixed at a volume ratio of MEK:cyclohexanone=8:2) was added so that a solid content concentration was 10 mass% to obtain a coating material.

An organic-inorganic composite film was fabricated according to the same method as in Reference Example 6 and evaluated. Evaluation results are shown in Table 9.

[Example 12: Beaded $SiO_2$-g-pGMA+acid anhydride+curing catalyst; thermal curing]

A curing agent ("RIKACID MH-700G") and a curing accelerator ("U-CAT 18X") were introduced into the organic-inorganic composite J of Example 10 according to the mix proportion of Table 5 and a solvent (mixed at a volume ratio of MEK: cyclohexanone=8:2) was added so that a solid content concentration was 10 mass%, to obtain a coating material. Coating was performed and heating was performed for 6 hours at 100 °C by an explosion-proof fan dryer to fabricate and evaluate an organic-inorganic composite film according to the same method as in Reference Example 6. Evaluation results are shown in Table 9.

[Example 13: Beaded $SiO_2$-g-pGMA+maleic acid+curing catalyst; thermal curing]

A curing agent (maleic acid) and a curing accelerator (TEA) were introduced into the organic-inorganic composite J of Example 10 according to the mix proportion of Table 5, and a solvent (mixed at a volume ratio of MEK:cyclohexanone=8:2) was added so that a solid content concentration was 10 mass%, to obtain a coating material.

Further, coating was performed and heating was performed for 6 hours at 100 °C by an explosion-proof fan dryer to fabricate and evaluate an organic-inorganic composite film according to the same method as in Reference Example 6. Evaluation results are shown in Table 9.

[Example 14: Beaded $SiO_2$-g-pGMA, substrate change (coating to TAC+ a hard coat layer); photo-cationic curing]

A hard coat layer was formed on a TAC film (made by Fuji Film Co., Ltd.; thickness of 80 μm) according to the following method and used as a substrate in place of the PET film. According to the same method as in Example 10 except this, an organic-inorganic composite film was fabricated and evaluated. Evaluation results are shown in Table 9.

(1) 100 g of a urethane acrylate oligomer ("Purple light UV-7640B" made by Nippon Synthetic Chemical Industry Co., Ltd.) was mixed with 100 g of MEK.
(2) Further, 5 g of "Irgacure 184" and 1 g of "Irgacure 907" were added as a photopolymerization initiator, and mixed to obtain a hard coat liquid.
(3) A TAC film was coated with the hard coat liquid by a bar coater and dried for 2 minutes by an explosion-proof fan dryer of 90 °C. Further, UV irradiation was performed with a cumulative light amount of 500 $mJ/cm^2$ under air using an ultraviolet ray curing device (made by SEI Engineering Co., Ltd.) to form a hard coat layer having a thickness of approximately 5 μm.
(4) An organic-inorganic composite film was formed on the hard coat layer according to the same method as in Example 10, and evaluated.

[Example 15: Beaded $SiO_2$-g-pGMA, high-boiling solvent change and substrate change (coating to TAC+ a hard coat layer); photo-cationic curing]

An organic-inorganic composite film was produced according to the same method as in Example 14 except that cyclohexanone of Example 14 was changed to DAA, and evaluated. Evaluation results are shown in Table 9.

It has been found that refractive index can be controlled by controlling a solubility parameter.

[Example 16: Beaded $SiO_2$-g-pGMA, high-boiling solvent change and substrate change (TAC+ coating to a hard coat layer); photo- cationic curing]

An organic-inorganic composite film was produced according to the same method as in Example 14 except that cyclohexanone of Example 14 was changed to methylcellosolve, and evaluated. Evaluation results are shown in Table 10.

It has been found that refractive index can be controlled by controlling a solubility parameter.

[Example 17: Beaded $SiO_2$-g-pGMA, substrate change (coating to a glass plate); photo-cationic curing]

An organic-inorganic composite film was produced according to the same method as in Example 10 except that a glass plate was used as the substrate in place of the PET film, and evaluated. Evaluation results are shown in Table 10.

[Example 18: Beaded $SiO_2$-g-pGMA; photo-cationic curing]

An organic-inorganic composite K and an organic-inorganic composite film thereof were produced according to the mix proportion of Table 1 by the same method as Reference Example 6 except that the BPS-reformed 20 nm spherical silica particles were changed to the BPS-reformed beaded silica particles A1, a polymerization temperature was changed to 60 °C and a polymerization stop time was 5 minutes, and evaluated. Evaluation results are shown in Tables 7 and 10.

[Reference Example 19: 20 nm $SiO_2$-g-p(MMA/HEMA/MOI); photo-radical curing]

An organic-inorganic composite L was produced according to the mix proportion of Tables 2 and 4 by the following procedure. Evaluation results of an obtained organic-inorganic composite film are shown in Tables 7 and 10.

(1) CuBr and $CuBr_2$ were added to a Schlenk flask having a rotor put therein, an operation of vacuum-treating the inside of the flask and then performing nitrogen substitution was repeated three times to deoxygenate the inside of the flask, a small amount of MIBK was introduced under nitrogen, and then a solution was stirred.
(2) PMDETA was added to the solution and stirring was performed at 40 °C, and a resultant solution was used as a catalyst solution.
(3) The BPS-reformed 20 nm spherical silica particles were put into a different Schlenk flask connected with a cooling pipe and having a rotor put therein.
(4) A cooling pipe was connected to the Schlenk flask, and an operation of vacuum-treating the inside of the flask and then performing nitrogen substitution was repeated three times to deoxygenate the inside of the flask.
(5) A remaining MIBK solvent was introduced into the flask under nitrogen and stirring was performed for 5 hours. Then, a monomer was introduced so that a molar ratio of MMA and HEMA was 70/30 and a total monomer weight was approximately 78 mass% (MMA monomer and HEMA monomer) relative to surface-reformed inorganic particles, and the flask was immersed in an oil bath of 80 °C and stirred.
(6) Further, the catalyst solution fabricated above was introduced under nitrogen, a reaction liquid was stirred for 3 hours, and a polymerization reaction was performed.
(7) The flask was immersed in an ice bath to be rapidly cooled, put into hexane and then stirred. When sediment did not easily sink, the sediment was separated through centrifugal separation and left at rest.
(8) A supernatant solution was discarded after being left at rest. Then, MIBK was added to the remaining sediment for re-dispersion. Then, hexane was added, the flask was left at rest, and the supernatant solution was discarded. This operation was further repeated twice. Washing was lastly performed with hexane, and the supernatant solution was discarded to remove the unreacted monomer.
(9) A polymerization inhibitor and an MEK solvent were added to the remaining sediment according to the mix proportion of Table 4 and stirring was performed until the solution became transparent.
(10) Then, the solution was heated to 60 °C, 2-methacryloyloxyethylisocyanate (hereinafter referred to as MOI) and DBTDL were added, stirring was performed for 6 hours, and an addition reaction of HEMA and MOI was performed.
(11) The flask was immersed in an ice bath to be rapidly cooled, put into hexane, stirred and then left at rest. When the sediment did not easily sink, the sediment was separated through centrifugal separation.
(12) A supernatant solution was discarded, an MEK/methanol mixture solvent (mixed at a volume ratio of MEK:methanol=1:1) was added to the remaining sediment for re-dispersion, hexane was added, it was left at rest, and a supernatant solution was discarded. This operation was further repeated twice, washing was lastly performed with hexane, and a supernatant solution was discarded to remove an unreacted monomer.

(13) Air drying was performed while blowing nitrogen into the remaining sediment to volatilize a liquid, thereby obtaining an organic-inorganic composite L.

(14) A number average molecular weight (Mn) of the polymer constituting the organic-inorganic composite L was measured according to the above-described method. Mn=13,900. Further, a molecular weight distribution (Mw/Mn) was calculated. It has found that Mw/Mn=1.82 ($\leq$ 2.3) and the polymer chain with a matched chain length was bonded to the inorganic particles.

(15) A free polymer amount of the organic-inorganic composite L was measured. 2 mass% of the free polymer was detected, and the amount of the polymer bonded to the inorganic particles was 98 mass%.

(16) The organic-inorganic complex L, a photo-radical initiator (mixed at a mass ratio of "Irgacure 184":"Irgacure 907"=4:1), and a solvent (mixed at a volume ratio of MEK:cyclohexanone=8:2) were mixed to obtain a coating material according to the above-described method. The photo-radical initiator was introduced to be 5 mass% with respect to the organic polymer amount in the organic-inorganic composite. Further, the solvent was added so that a solid content concentration of an organic-inorganic composite composition (the organic-inorganic composite and the photo-radical initiator) was 10 mass%.

(17) An aggregates of the coating material was verified according to the above-described method. A solid material having poor dispersion was not observed.

(18) The coating material was applied to a PET film according to the above-described method and dried, and UV irradiation was performed under nitrogen to obtain a cured organic-inorganic composition film. The appearance of the obtained organic-inorganic composite film was visually confirmed. Neither aggregation nor cracking of the inorganic particles was observed and transparency was maintained.

(19) A total light transmittance and haze of the organic-inorganic composite film were measured according to the above-described method. The total light transmittance was 91%, and the haze was 0.4%.

(20) A refractive index of the organic-inorganic composite film was measured according to the above-described method, and it was 1.43 and exhibited a smaller value than the value (1.47) of the refractive index calculated according to the above-described method. From this, it was found that the organic-inorganic composite film having voids was formed.

(21) Void content of the organic-inorganic composite film was calculated according to the above-described method, it was 8% and exhibited high void content.

(22) A solvent resistance of the organic-inorganic composite film was confirmed according to the above-described method. The cured film remained on glass without being dissolved.

(23) An adhesion examination of the organic-inorganic composite film was performed according to the above-described method. There was no detached part and the adhesion was good.

[Reference Example 20: 50 nm $SiO_2$-g-p(MMA/HEMA/MOI); photo-radical curing]

An organic-inorganic composite M was produced according to the same method as in Reference Example 19 except that the BPS-reformed 20 nm spherical silica particles were changed to the BPS-reformed 50 nm spherical silica particles, an MMA/HEMA molar ratio was changed to 80/20, and a polymerization stop time was 4 hours, and evaluated. Evaluation results of an obtained organic-inorganic composite film are shown in Tables 7 and 10.

[Reference Example 21: 100 nm $SiO_2$-g-p(MMA/HEMA/MOI); photo-radical curing]

An organic-inorganic composite N was produced according to the same method as in Reference Example 19 except that the BPS-reformed 20 nm spherical silica particles were changed to the BPS-reformed 100 nm spherical silica particles, an MMA/HEMA molar ratio was changed to 90/10 and a polymerization stop time was 5 hours, and evaluated. Evaluation results of the obtained organic-inorganic composite film are shown in Tables 7 and 10.

[Reference Example 22: Beaded $SiO_2$-g-p(MMA/HEMA/MOI); photo-radical curing]

An organic-inorganic composite O was produced according to the same method as in Reference Example 19 except that the BPS-reformed 20 nm spherical silica particles were changed to the BPS-reformed beaded silica particles A1, an MMA/HEMA molar ratio was changed to 90/10 and a polymerization stop time was 5.5 hours, and evaluated. Evaluation results of an obtained organic-inorganic composite film are shown in Tables 7 and 10.

[Example 23: Beaded $SiO_{2}$g-p(MMA/HEMA/AOI); photo-radical curing]

An organic-inorganic composite P was produced according to the mix proportion of Tables 2 and 4 by the same method as in Reference Example 19 except that the-BPS reformed 20 nm spherical silica particles were changed to the BPS-reformed beaded silica particles A1, an MMA/HEMA molar ratio=70/30, a monomer used for an addition reaction

was changed from MOI to AOI and a polymerization stop time was 2 hours, and evaluated. Evaluation results of an obtained organic-inorganic composite film are shown in Tables 7 and 10.

[Example 24: Beaded $SiO_2$-g-p(SiMA/HEMA/AOI); photo-radical curing]

An organic-inorganic composite Q was produced according to the mix proportion of Tables 2 and 4 by the same method as in Reference Example 19 except that the-BPS reformed 20 nm spherical silica particles were changed to the BPS-reformed beaded silica particles A1, a SiMA/HEMA molar ratio=70/30 for monomers used for a polymerization reaction, a monomer used for an addition reaction was changed from MOI to AOI and a polymerization stop time was 15 minutes, and evaluated.

Further, an organic-inorganic composite film was fabricated according to the same method as in Reference Example 19 except that the solvent used for coating material fabrication was changed from an MEK/cyclohexanone mixture solvent to MIBK, and evaluated. Evaluation results are shown in Tables 7 and 10.

[Example 25: Beaded $SiO_2$-g-p(EMA/HEMA/AOI); photo-radical curing]

A polymerization reaction was performed according to the mix proportion of Table 2 except that the BPS-reformed 20 nm spherical silica particles were changed to the BPS-reformed beaded silica particles A2, EMA/HEMA molar ratio=50/50, a monomer used for an addition reaction was changed from MOI to AOI and a polymerization stop time was 22 hours.

Further, an addition reaction was performed according to the mix proportion of Table 4 using a polymerization liquid by the same method as in Reference Example 19 to fabricate an organic-inorganic composite R and an organic-inorganic composite film, which were then evaluated. A substrate in which a hard coat layer was formed on TAC of Example 14 was used. Evaluation results are shown in Tables 7 and 10.

[Example 26: Beaded $SiO_2$-g-p(MMA/HEMA/AOI); all-process integrated synthesis) and photo-radical curing]

According to the following procedure, a BIDS-reformed beaded silica particle/MIBK solution (beaded silica particle/MIBK solution in which BIDS was bonded to a surface thereof) was synthesized, and an organic-inorganic composite U was then continuously produced according to the mix proportion of Table 2 and evaluated.

(1) The inside of a two-necked flask connected with a cooling pipe and having a rotor put therein was nitrogen-substituted.
(2) A beaded silica solution B ("MIBK-ST-UP") of 98.9% by volume was introduced into a flask under nitrogen, BIDS of 0.1% by volume was further introduced, and stirring was initiated.
(3) The flask was immersed in an oil bath of 110 °C and a reaction was performed for 24 hours with stirring.
(4) A reaction liquid was cooled to room temperature and then HMDS was introduced at 1.0% by volume under nitrogen.
(5) Stirring was performed for 2 hours at room temperature, stirring was performed for 8 hours at 80 °C to conduct a reaction, a reaction liquid was cooled to room temperature, and a resultant liquid was used as a BIDS-reformed beaded silica solution. A part of it was washed and dried, and halogen content was measured. The halogen content was 0.1 mass%. Since chlorine was not detected, bromine content is shown as the halogen content.
(6) Subsequently, a polymerization was performed for 3 hours at 80 °C according to the mix proportion of Table 2, and the liquid was cooled to room temperature and then used as a polymerization liquid.
(7) Then, an addition reaction was performed for 6 hours at 60 °C according to the mix proportion of Table 4 and it was cooled to room temperature.
(8) The reaction liquid was washed and dried according to the same method as in Reference Example 19 to obtain an organic-inorganic composite S. Evaluation results are shown in table 7.
(9) Further, a coating material and an organic-inorganic composite film were produced according to the organic-inorganic composite U according to the same method as in Reference Example 19 Evaluation results are shown in Table 10. A substrate in which a hard coat layer was formed on the TAC of Example 14 was used.

[Example 27: Beaded $SiO_2$-g-p(TFEMA/BEMA/AOI); all-process integrated synthesis and photo-radical curing]

According to the following procedure, a BIDS-reformed beaded silica particle/MEK solution (beaded silica particle/MEK solution in which BIDS was bonded to a surface thereof) was systhesized, and then continuously an organic-inorganic composite V was produced according to the mix proportion of Table 2 and evaluated.

(1) The inside of a two-necked flask connected with a cooling pipe and having a rotor put therein was nitrogen-substituted.
(2) Under nitrogen, a beaded silica solution A ("MEK-ST-UP" of 98.8% by volume was introduced into the flask, and BIDS was further introduced at 0.2% by volume. Stirring was initiated.
(3) The flask was immersed in an oil bath of 85 °C and a reaction was performed for 24 hours with stirring.
(4) A reaction liquid was cooled to room temperature and then HMDS was introduced at 1.0% by volume under nitrogen.
(5) Stirring was performed for 2 hours at room temperature, stirring was performed for 8 hours at 80 °C to conduct a reaction, and then a reaction liquid was cooled to room temperature, and a resultant solution was used as a BIDS-reformed beaded silica solution. A part of it was washed and dried, and halogen content was measured. The halogen content was 0.2 mass%. Since chlorine was not detected, bromine content is shown as the halogen content.
(6) Subsequently, an organic-inorganic composite T was produced according to the mix proportion of Table 4 by the same method as in Example 26. Evaluation results are shown in Table 7.
(7) Further, a coating material and an organic-inorganic composite film were produced according to the organic-inorganic composite T according to the same method as in Example 26. Evaluation results are shown in Table 10.

[Example 28: Hollow $SiO_2$-g-p(MMA/HEMA/AOI); all-process integrated synthesis]

A BIDS-refonned 50 nm hollow silica particle/MIBK solution (50 nm hollow silica particle/MIBK solution in which BIDS was bonded to a surface thereof) was synthesized according to the same method as in Example 26 except that the beaded silica solution B ("MIBK-ST-UP") was changed to the hollow silica solution C (50 nm hollow silica solution), and then an organic-inorganic composite U was produced according to the mix proportion of Table 2. Evaluation results are shown in Table 7.
Further, a coating material and an organic-inorganic composite film were produced according to the organic-inorganic composite U according to the same method as in Example 26. Evaluation results are shown in Table 10.

[Example 29: Beaded $SiO_2$-g-p(EMA/HEMA/AOI)+crosslinkable polymer p(MMA/HEMA/AOI); crosslinker (dipentaerythritol pentaacrylate)]

The free polymer [p(MMA/HEMA/AOI) (14.0 mass%) of Comparative Example 9 and the crosslinker (dipentaerythritol pentaacrylate (3.5 mass%)) were added to the organic-inorganic composite R (82.5 mass%) of Example 25, and a coating material and an organic-inorganic composite film were produced according to the same method as in Example 26 and evaluated. Evaluation results are shown in Tables 7 and 10.

[Example 30: Beaded $SiO_2$-g-p(MMA/HEMA/OI); substrate change (coating to TAC+hard coat layer) and photo-radical curing]

A coating material was produced according to the organic-inorganic composite U of Example 26 according to the same method as in Example 26, while changing cyclohexanone to DAA. This was applied to the substrate (TAC+hard coat layer) of Example 15, and an organic-inorganic composite film was produced according to the same method as in Example 26 and evaluated. Evaluation results are shown in Table 10.
It was found that that the refractive index can be controlled by controlling a solubility parameter.

[Comparative Example 1]

An organic-inorganic composite $\alpha$ by a free radical polymerization was synthesized according to the mix proportion of Table 3 in the following procedure. The obtained organic-inorganic composite $\alpha$ was evaluated according to the same method as in Reference Example 19. Evaluation results are shown in table 8.

(1) AIBN was added to a Schlenk flask having a rotor put therein, an operation of vacuum-treating the inside of the flask and then performing nitrogen substitution was repeated three times to deoxygenate the inside of the flask, a small amount of MEK was introduced under nitrogen, and stirring was performed. A resultant solution was used as a catalyst solution.
(2) The CPS-reformed 20 nm spherical silica particles were put into a different Schlenk flask connected with a cooling pipe and having a rotor put therein.
(3) A cooling pipe was connected to the Schlenk flask, and an operation of vacuum-treating the inside of the flask and then performing nitrogen substitution was repeated three times to deoxygenate the inside of the flask.
(4) A remaining MIBK solvent was introduced into the flask under nitrogen and stirring was performed for 5 hours.

Then, monomers were introduced so that a molar ratio of MMA and HEMA was 90/10 and a total monomer weight was 78 mass% (MMA monomer and HEMA monomer) relative to surface-reformed inorganic particles, and the flask was immersed in an oil bath of 80 °C and stirred.

(5) Further, the catalyst solution prepared above was introduced under nitrogen, a reaction liquid was stirred for 6 hours, and then a polymerization reaction was performed.

(6) The flask was immersed in an ice bath to be rapidly cooled, put into hexane and stirred. When sediment did not easily sink, the sediment was separated through centrifugal separation and the flask was left at rest.

(7) A supernatant solution was discarded after being left at rest, MIBK was added to the remaining sediment for re-dispersion, hexane was added and left at rest, and a supernatant solution was discarded. This operation was also repeated twice and lastly washing was performed with hexane and a supernatant solution was discarded to remove an unreacted monomer.

(8) 2,6-di-tert-butylmethylphenol and an MEK solvent were added to the remaining sediment and stirring was performed until the solution became transparent.

(9) Then, the solution was heated to 60 °C, 2-methacryloyloxyethylisocyanate and dibutyltin dilaurate were added, stirring was performed for 6 hours, and an addition reaction of HEMA and 2-methacryloyl oxyethylisocyanate was performed.

(10) The flask was immersed in an ice bath to be rapidly cooled, put into hexane, stirred and left at rest. When the sediment did not easily sink, the sediment was separated through centrifugal separation.

(11) A supernatant solution was discarded, MEK was added to the remaining sediment for re-dispersion, hexane was added and left at rest, and a supernatant solution was discarded. This operation was further repeated twice, washing was lastly performed with hexane, and a supernatant solution was discarded to remove an unreacted monomer.

(12) Air drying was performed while blowing nitrogen into the remaining sediment to volatilize a liquid, thereby obtaining an organic-inorganic composite $\alpha$.

(13) Although the organic-inorganic composite $\alpha$ was not completely dissolved since it had become a gel, the molecular weight of the dissolved component was measured, and a molecular weight distribution was greater than 2.3. As a result of preparing the coating liquid using the organic-inorganic composite $\alpha$ according to the above-described method, the undissolved aggregates were obviously precipitated. The appearance of the coating film obtained from this coating liquid was visually confirmed. The aggregation of the particles was observed and slight cloudiness was exhibited. Further, the adhesion decreased. Evaluation results of the obtained cured organic-inorganic composite film are shown in Table 11.

[Comparative Example 2]

A polymerization reaction was performed according to the mix proportion of Tables 3 and 4 without combining inorganic compound particles to synthesize a p(MMA-co-HEMA) copolymer, and a compound having a reactive double bond was added to it as in Example 19. A mixed coating film of the obtained organic polymer and the BPS-reformed beaded silica particles A1 was fabricated and evaluated according to the same method as in Reference Example 19.

(1) CuBr was added to a Schlenk flask having a rotor put therein, an operation for performing vacuum treatment on the inside of the flask and then performing nitrogen substitution was repeated three times to deoxygenate the inside of the flask, a small amount of MEK was introduced under nitrogen and the stirring was performed.

(2) PMDETA was added to the above solution, stirring was performed at 40 °C, and a resultant solution was used as a catalyst solution.

(3) An operation for performing vacuum-treatment on the inside of the flask having a rotor put therein and then performing nitrogen substitution was repeated three times to deoxygenate the inside of the flask. Then, a small amount of MIBK and EBIB was introduced under nitrogen, stirring was performed, and a resultant solution was used as a polymerization initiator solution.

(4) A cooling pipe was connected to a different Schlenk flask having a rotor put therein, and an operation of vacuum-treating the inside of the flask and then performing nitrogen substitution was repeated three times to deoxygenate the inside of the flask.

(5) A remaining MIBK solvent, an MMA monomer and HEMA were introduced into the flask under nitrogen, and the flask was immersed in an oil bath of 80 °C and stirred.

(6) Further, the catalyst solution and the polymerization initiator solution fabricated above were introduced under nitrogen, a reaction liquid was stirred for 10 hours to conduct a polymerization reaction.

(7) The flask was immersed in an ice bath to be rapidly cooled, put into hexane, stirred and left at rest. A supernatant solution was then discarded.

(8) Hexane was added to the remaining sediment again and left at rest and a supernatant solution was discarded.

This operation was further repeated twice.

(9) Air drying was performed overnight while blowing nitrogen into the remaining sediment to volatilize a liquid, and sediment of "p(MMA-co-HEMA)" was obtained.

(10) 2,6-di-tert-butylmethylphenol and an MEK solvent was added to the remaining sediment and stirring was performed until the solution became transparent.

(11) Then, the solution was heated to 60 °C, 2-methacryloyloxyethylisocyanate and dibutyltin dilaurate were added, stirring was performed for 6 hours, and an addition reaction of HEMA and 2-methacryloyloxyethylisocyanate was performed.

(12) The flask was immersed in an ice bath to be rapidly cooled, put into hexane, stirred and left at rest. When the sediment did not easily sink, the sediment was separated through centrifugal separation.

(13) A supernatant solution was discarded, MEK was added to the remaining sediment for re-dispersion, and hexane was added and the flask was left at rest to discard a supernatant solution. This operation was further repeated twice, washing was lastly performed with hexane, and a supernatant solution was discarded to remove the unreacted monomer.

(14) Air drying was performed while blowing nitrogen into the remaining sediment to volatilize a liquid, and a free polymer of "p(MMA/HEMA/MOI)" was obtained.

(15) The number average molecular weight (Mn) of the polymer was measured according to the above-described method. Mn=61,200. Further, a molecular weight distribution (Mw/Mn) was calculated. Mw/Mn=1.85 ($\leq$2.3).

(16) The BPS-reformed beaded silica particles A1 were added to the above polymer so that inorganic content was 90% by weight, and an organic-inorganic composite film was fabricated with a mixture of the organic polymer and the BPS-reformed beaded silica particles A1 according to the same method as in Reference Example 19, and evaluated.

(17) The appearance of the obtained organic-inorganic composite film was visually confirmed. Slight cloudiness was exhibited. A total light transmittance and haze of the cured organic-inorganic composite film were measured according to the above-described method. A total light transmittance was 82% and haze was 10.1%. Further, the adhesion decreased. Evaluation results of the obtained cured organic-inorganic composite film are shown in Table 11.

[Comparative Example 3]

An organic-inorganic composite β was produced according to Tables 3 and 4 by the same method as in Reference Example 22 except that a polymerization stop time was 14 hours, and evaluated. Inorganic content of the obtained organic-inorganic composite β was 47 mass%, and an effect of reduction of the refractive index was not observed. Evaluation results of the obtained organic-inorganic composite film are shown in Table 11.

[Comparative Example 4]

An organic-inorganic composite γ was produced according to Tables 3 and 4 by the same method as in Reference Example 22 except that th polymerization stop time was 20 minutes, and evaluated. Inorganic content of the obtained organic-inorganic composite γ was 96 mass%, and the appearance was visually confirmed. Slight cloudiness was exhibited. Further, the obtained organic-inorganic composite film was brittle and damaged and the refractive index or the like could not be evaluated. Evaluation results are shown in Table 11.

[Comparative Example 5]

A free polymer "p(MMA/HEMA/MOI)" (35 mass%) of Comparative Example 2 was added to the organic-inorganic composite O (65 mass%) of Reference Example 22, and a coating material and an organic-inorganic composite film were fabricated and evaluated according to the same method as in Reference Example 22. The effect of reduction of the refractive index was not observed in the obtained organic-inorganic composite film. Evaluation results are shown in Table 11.

[Example 31]

A coating material, a low refractive index layer, and an antireflection film (corresponding to Fig. 2(a)) were fabricated according to the organic-inorganic composite D described in Example 4, according to the following procedure, and evaluated.

(1) Using the organic-inorganic composite D of Example 4, the coating material was fabricated according to the same method as in Example 4.

(2) The low refractive index layer for evaluation was fabricated using the coating material according to the above method, and a refractive index was measured to be 1.20.

(3) The coating material was diluted to the solid content concentration of 3 mass%, and applied to a PET film by a bar coater according to the above-described method so that a thickness of the low refractive index layer was approximately 110 nm, and dried to obtain an antireflection film. An appearance of the obtained antireflection film was visually confirmed. The aggregation of the particles was not observed and transparency was maintained.

(4) It was found that a minimum reflectance of the antireflection film was measured to be 0.04% according to the above-described method and it had an antireflection effect. Further, reflected glare was evaluated. The reflected glare was less than the antireflection film of pMMA (Comparative Example 6), which is a reference, and it was determined to pass ("A").

[Comparative Example 6]

pMMA was synthesized according to the mix proportion of Table 3 using EBIB in place of the BPS-reformed 60 nm hollow silica particles of Example 4. A coating material, a low refractive index layer, and an antireflection film (corresponding to Fig. 2(a)) were fabricated according to the following procedure, and evaluated.

(1) The coating material was obtained using pMMA described above according to the same method as in Example 4.

(2) The low refractive index layer for evaluation was fabricated by a bar coater using the above coating material according to the above-described method. A refractive index was measured to be 1.49.

(3) The above coating material was used and applied to a PET film by the bar coater so that a thickness of the low refractive index layer was approximately 110 nm, and dried, according to the above-described method, to obtain an antireflection film. An appearance of the obtained antireflection film was visually confirmed. Transparency was maintained.

(4) A minimum reflectance of the antireflection film was measured to be 4.1% according to the above-described method. An antireflection effect was insufficient.

[Example 32]

A coating material, a low refractive index layer, and an antireflection film were fabricated according to the organic-inorganic composite J of Example 10 according to the following method, and evaluated.

According to the following method, a hard coat layer was formed on a TAC film and a low refractive index layer was stacked on the hard coat layer to fabricate the antireflection film (corresponding to Fig. 2(b)).

(1) 100 g of MEK was mixed with 100 g of urethane acrylate oligomer ("Purple Light UV-1700B" made by Nippon Synthetic Chemical Industry Co., Ltd.).

(2) Further, as a photopolymerization initiator, 5g of 1-hydroxy-cyclohexyl-phenyl-ketone ("Irgacure 184" made by BASF Japan Co., Ltd.) and 1g of 2-methyl-1 [4-(methylthio)phenyl]-2-morpholinopropane-1-one ("Irgacure 907" made by BASF Japan Co., Ltd.) were added and mixed, and a resultant liquid was used as a hard coat liquid.

(3) The hard coat liquid was applied to the TAC film by a bar coater and dried for 2 minutes using a ventilation dryer of 90 °C. Further, UV irradiation was performed under nitrogen with a cumulative light amount of 500 $mJ/cm^2$ using an ultraviolet ray curing device (made by SEN Engineering Co., Ltd.) to form a hard coat layer having a thickness of approximately 5 $\mu$m.

(4) Using the organic-inorganic composite J of Example 10, the coating material was fabricated according to the same method as in Example 10 and further diluted with a solvent at a concentration of 3 mass%.

(5) The hard coat layer was coated by the bar coater according to the above-described method so that a thickness of the low refractive index layer was approximately 110 nm, and dried.

(6) Further, UV irradiation was performed to obtain an antireflection film according to the same method as in Example 10. An appearance of the obtained antireflection film was visually confirmed. The aggregation of the particles was not observed and transparency was maintained.

(7) It was found that a minimum reflectance of the antireflection film was measured to be 0.1% according to the above-described method and it had an antireflection effect. Further, reflected glare was evaluated. The reflected glare was less than the antireflection film of pGMA (Comparative Example 7), which is a reference, and it was determined to pass ("A").

[Comparative Example 7]

pGMA was synthesized according to the mix proportion of Table 3 using EBIB in place of the BPS-reformed

beaded silica particles A1 of Example 10. A coating material, a low refractive index layer, and an antireflection film (corresponding to Fig. 2(b)) were fabricated and evaluated according to the following procedure.

(1) The coating material was obtained using pGMA described above according to the same method as in Example 10.
(2) Coating of the coating material was performed by a bar coater using the above method to fabricate the low refractive index layer for evaluation, and a refractive index was measured to be 1.51.
(3) A hard coat layer was fabricated on a TAC film according to the same method as in Example 31.
(4) The coating material was diluted to a solid content concentration of 3 mass%, and applied to the hard coat layer by the bar coater according to the above-described method so that a thickness of the low refractive index layer was approximately 110 nm, and dried.
(5) Further, UV irradiation was performed to obtain an antireflection film according to the same method as in Example 10. An appearance of the obtained antireflection film was visually confirmed. The aggregation of the particles was not observed and transparency was maintained.
(6) A minimum reflectance of the antireflection film was measured to be 4.5% according to the above-described method, and an antireflection effect was insufficient.

[Example 33]

A coating material, a low refractive index layer, and an antireflection film (corresponding to Fig. 2(d)) were fabricated using the organic-inorganic composite L of Reference Example 19 and evaluated according to the following procedure.

(1) A hard coat layer was fabricated on a TAC film according to the same method as in Example 32.
(2) Further, a high refractive index coating material ("Opstar KZ6666": refractive index 1.74, made by JSR Co., Ltd.) was applied to the hard coat layer by a bar coater and dried for 2 minutes by a fan dryer of 90 °C.
(3) Further, UV irradiation was performed under nitrogen with a cumulative light amount of 1 J/cm$^2$ using an ultraviolet ray curing device (made by SEN Engineering Co., Ltd.), and a high refractive index layer having a thickness of approximately 120 nm was formed on a support.
(4) A coating material was obtained using the organic-inorganic composite L described above according to the same method as in Reference Example 19.
(5) The coating material was diluted to a solid content concentration of 3 mass%, and applied to the high refractive index layer by the bar coater according to the above-described method so that a thickness of the low refractive index layer was approximately 110 nm, and dried.
(6) Further, UV irradiation was performed to obtain an antireflection film according to the same method as in Reference Example 19. An appearance of the obtained antireflection film was visually confirmed. The aggregation of the particles was not observed and transparency was maintained.
(7) It was found that a minimum reflectance of the antireflection film was measured to be 1. 1% according to the above-described method and it had an antireflection effect. Further, reflected glare was evaluated. The reflected glare was less than the antireflection film of p(MMA/HEMA/MOI) (Comparative Example 8), which is a reference, and it was determined to pass ("A").

[Comparative Example 8]

p(MMA/HEMA/MOI) was synthesized according to the mix proportion of Tables 3 and 4 using EBIB in place of the BPS-reformed 20 nm spherical silica particles of Reference Example 19 according to the same method as in Reference Example 19. A coating material, a low refractive index layer, and an antireflection film (corresponding to Fig. 2(d)) were fabricated and evaluated according to the following procedure.

(1) Using p(MMA/HEMA/MOI) described above, the coating material was obtained according to the same method as in Reference Example 19.
(2) Coating of the coating material was performed by a bar coater according to the above method to fabricate a low refractive index layer for evaluation. A refractive index was measured to be 1.49.
(3) A hard coat layer and a high refractive index layer were fabricated on a TAC film according to the same method as in Example 32.
(4) The coating material was diluted to a solid content concentration of 3 mass%, and applied to the high refractive index layer by the bar coater according to the above-described method so that a thickness of the low refractive index layer was approximately 110 nm, and dried.
(5) Further, UV irradiation was performed to obtain an antireflection film according to the same method as in Reference

Example 19. An appearance of the obtained antireflection film was visually confirmed. The aggregation of the particles was not observed and transparency was maintained.

(6) A minimum reflectance of the antireflection film was measured to be 3.1% according to the above-described method, and an antireflection effect was insufficient.

[Example 34]

A coating material, a low refractive index layer, and an antireflection film were fabricated using the organic-inorganic composite R of Example 25 and evaluated according to the following method.

According to the same method as in Example 32, a hard coat layer was formed on a TAC film and a low refractive index layer was stacked on the hard coat layer to fabricate the antireflection film (corresponding to Fig. 2(b))

(1) The coating material was fabricated using the organic-inorganic composite R of Example 25 according to the same method as in Example 25 and diluted to a concentration of 3 mass% with a solvent.

(2) The hard coat layer was coated by the bar coater according to the above-described method so that a thickness of the low refractive index layer was approximately 110 nm, and dried.

(3) Further, UV irradiation was performed to obtain an antireflection film according to the same method as in Example 25. An appearance of the obtained antireflection film was visually confirmed. The aggregation of the particles was not observed and transparency was maintained.

(4) It was found that a minimum reflectance of the antireflection film was measured to be 0.05% according to the above-described method and it had an antireflection effect. Further, reflected glare was evaluated. The reflected glare was less than the antireflection film of p(EMA/HEMA/AOI) (Comparative Example 9), which is a reference, and it was determined to pass ("A").

[Comparative Example 9]

p(MMA/HEMA/AOI) was synthesized according to the mix proportion of Tables 3 and 4 using EBIB in place of the BPS-reformed beaded silica particles A2 of Example 25 according to the same method as in Example 25. A coating material, a low refractive index layer, and an antireflection film (corresponding to Fig. 2(b)) were fabricated and evaluated according to the following procedure.

(1) A coating material was obtained using p(MMA/HEMA/AOI) described above according to the same method as in Example 25.

(2) Coating of the coating material was performed by a bar coater according to the above method to fabricate the low refractive index layer for evaluation. A refractive index was measured to be 1.49.

(3) A hard coat layer was fabricated on a TAC film according to the same method as in Example 33.

(4) The coating material was diluted to a solid content concentration of 3 mass%, and applied to the hard coat layer by the bar coater according to the above-described method so that a thickness of the low refractive index layer was approximately 110 nm, and dried.

(5) Further, UV irradiation was performed to obtain an antireflection film according to the same method as in Example 25. An appearance of the obtained antireflection film was visually confirmed. The aggregation of the particles was not observed and transparency was maintained.

(6) A minimum reflectance of the antireflection film was measured to be 4.3% according to the above-described method and an antireflection effect was insufficient.

[Comparative Example 10]

A antireflection film was fabricated according to the same method as in Comparative Example 9 except that the organic-inorganic composite β [beaded SiO2-g-p(MMA/HEMA/MOI)] of Comparative Example 3 was used in place of p(MMA/HEMA/AOI) of Comparative Example 9, and evaluated.

An appearance of the obtained antireflection film was visually confirmed. The aggregation of the particles was not observed and transparency was maintained. However, a minimum reflectance of the antireflection film was measured to be 4.1% according to the above-described method and an antireflection effect was not sufficient.

[Example 35]

A polarizing plate was fabricated using the antireflection film of Example 32 according to the following procedure and incorporated into a liquid crystal display device (LCD). Evaluation was performed.

Fabrication of a polarizer

(1) Iodine at 0.63 mass%, iodine-potassium at 9.44 mass%, and ion exchanged water at 89.93 mass% (a total of 100 mass%) were mixed to fabricate an iodine-potassium iodide aqueous solution.
(2) A polyvinyl alcohol film (made by Kuraray Co., Ltd.) was immersed for 5 minutes in the iodine-potassium iodide aqueous solution.
(3) The film was uniaxially stretched 4.4 times in a vertical axis direction in a 4 mass% boric acid aqueous solution and dried in a tension state to obtain a polarizer.

Saponification treatment of antireflection film

(1) A 1.5 mol/L aqueous sodium hydroxide solution was prepared, temperature-adjusted to 50 °C and used as a saponification liquid.
(2) A back surface (a surface on which the antireflection film was not formed) of the support of the antireflection film of Reference Example 1 was subjected to the saponification treatment using the saponification liquid and sufficiently washed by ion exchanged water.
(3) Further, the saponification-treated surface was washed by a 0.005 mol/L sulfuric acid aqueous solution, sufficiently washed using ion exchanged water and dried for 10 minutes at 100 °C.

Fabrication of a polarizing plate

(1) One surface of the polarizer and the saponification-treated surface of the antireflection film were bonded using a polyvinyl alcohol-based adhesive.
(2) Further, the other surface of the polarizer and the saponification-treated surface of the TAC film whose one surface was saponification-treated were bonded using a polyvinyl alcohol-based adhesive, and a polarizing plate in which the both surfaces of the polarizer were protected was obtained.

Incorporation into a liquid crystal display device (LCD)

(1) For evaluation, a laptop PC with a "liquid crystal display device (LCD); transmission type TN mode: an LCD having a polarization separation film ("DBFF" made by Sumitomo 3M Co., Ltd.) between a liquid crystal cell and a backlight)" was prepared.
(2) A polarizing plate on a viewing side of the liquid crystal display device (LCD) was removed and, instead, the above polarizing plate was bonded in such a manner that the antireflection film was an outermost surface.
(3) The liquid crystal display device (LCD) was operated. A display device in which reflected glare of a background was much less and image quality was much higher than those in Comparative Example 10 was obtained.

[Comparative Example 11]

A polarizing plate was fabricated using the antireflection film of Comparative Example 7 according to the same method as in Example 35, incorporated into a liquid crystal display device (LCD), and evaluated.

The liquid crystal display device (LCD) was operated. Reflected glare of a background was intense and image quality was greatly degraded as compared with Example 35.

[Example 36]

A polarizing plate was fabricated using the antireflection film of Example 34 according to the same method as in Example 35 and incorporated in a liquid crystal display device (LCD) and evaluated. The liquid crystal display device (LCD) was operated. A display device in which reflected glare of a background was much less and image quality was much higher than those in Comparative Example 11 was obtained.

[Comparative Example 12]

A polarizing plate was fabricated using the antireflection film of Comparative Example 9 according to the same method as in Example 35 and incorporated into a liquid crystal display device (LCD) and evaluated.
The liquid crystal display device (LCD) was operated. Reflected glare of a background was intense and image quality was greatly degraded as compared with Example 36.

[Example 37]

A back surface (a surface on which an antireflection film was been formed) of the support of the antireflection film of Example 34 was bonded to a glass surface of a surface of an organic electroluminescence display device (ELD) through a pressure sensitive adhesive. The device was operated. A display device in which reflection of a screen was greatly suppressed and visibility was higher in comparison with Comparative Example 12 was obtained.

[Comparative Example 13]

The antireflection film of Comparative Example 9 in place of the antireflection film of Example 34 was bonded to the surface glass of the surface of the organic electroluminescence display device (ELD) through a pressure sensitive adhesive according to the same method as in Example 37. The device was operated. A display device in which reflection of a screen was greatly higher and visibility was lower in comparison with Example 34 was obtained.

[Example 38]

A polycarbonate resin (made by Chimei-Asahi Corporation) having a thickness of 2 mm and a diameter of 50 mm was molded under conditions of a cylinder temperature of 290 °C, a mold temperature of 80 °C and a molding cycle of 1 minute using an injection molding machine ("J-50EP" made by Japan Steel Works, Ltd.) to obtain a spectacle lens.
A coating material was obtained according to the same method as in Example 23 except that the solvent used for coating material fabrication was changed from the MEK/cyclohexanone mixture solvent to methylcellosolve and a solid content concentration was 3 mass%, using the organic-inorganic composite P [beaded $SiO_2$-g-p(MMA/HEMA/AOI) of Example 23.
Both surfaces of the spectacle lens described above were coated with the coating material using a spray so that a film thickness, a thickness of a low refractive index layer is approximately 110 nm. Drying was performed, and then UV curing treatment was performed according to the same method as in Example 23. The obtained spectacle lens had much less reflected glare and more excellent visibility than the spectacle lens of Comparative Example 13.

[Comparative Example 14]

A spectacle lens was molded according to the same method as in Example 38, coating of the coating material was performed, and evaluation was performed. Reflected glare was intense and visibility was poor.

[Comparative Example 15]

A coating material was obtained according to the same method as in Comparative Example 9 except that the solvent used for coating material fabrication was changed from the MEK/cyclohexanone mixture solvent to methylcellosolve, using p(MMA/HEMA/AOI) of Comparative Example 9 in place of the organic-inorganic composite P [beaded $SiO_2$-g-p(MMA/HEMA/AOI) of Example 38. Using this coating material, a spectacle lens was fabricated according to the same method as in Example 38. The obtained spectacle lens was evaluated. Reflected glare was intense, and visibility was bad.

[Comparative Example 16]

A coating material was obtained according to the same method as in Comparative Example 10 except that the solvent used for coating material fabrication is changed from the MEK/cyclohexanone mixture solvent to methylcellosolve, using the organic-inorganic composite β [beaded $SiO_{2}$-p(MMA/HEMA/MOI) of Comparative Example 10 in place of the organic-inorganic composite P [beaded $SiO_2$-g-p(MMA/HEMA/AOI) of Example 38. Using this coating material, a spectacle lens was fabricated according to the same method as in Example 38. The obtained spectacle lens was evaluated. Reflected glare was intense, and visibility was poor.

[Example 39]

A coating material was obtained using the organic-inorganic composite J according to the same method as in Example 32. Further, a slide glass (total light transmittance=90.1%) was coated with the coating material so that a thickness of a low refractive index layer was approximately 110 nm, drying and UV curing were performed to form a low refractive index layer according to the same method as in Example 32. A total light transmittance of the obtained stack film was measured. It was found that the total light transmittance was as significantly high as 92.3% and light extraction efficiency was improved.

Then, a low refractive index layer was formed on a back surface of the slide glass by the same method, and a total light transmittance was measured. It was found that the total light transmittance was as high as 93.8% and light extraction efficiency was further improved.

[Example 40]

A film (total light transmittance=90.3%) having a thickness of approximately 200 μm was fabricated using polycarbonate resin (made by Chimei-Asahi Corporation) by a melt extrusion molding method.

This film was coated with the coating material of Example 38 by a bar coater and drying and UV curing treatment were performed to form a low refractive index layer having a thickness of approximately 110 nm. A total light transmittance of the obtained stack film was measured. It was found that the total light transmittance was as significantly high as 92.5% and light extraction efficiency was improved.

Then, a low refractive index layer was formed on a back surface of the film by the similar method, and a total light transmittance was measured. It was found that the total light transmittance was as high as 94.0% and light extraction efficiency was further improved.

[Example 41]

A PMMA plate (thickness=800 μm, total light transmittance=92.9%, and haze=0.3%; made by Asahi Kasei Technoplus Co. Ltd) was coated with the coating material of Example 38 by a bar coater, and drying and UV curing treatment were performed to form a low refractive index layer having a thickness of approximately 110 nm. A total light transmittance of the obtained stack film was measured. It was found that the total light transmittance was as significantly high as 95.3% and light extraction efficiency was improved. Further, a minimum reflectance was 0.1%.

Then, a low refractive index layer was formed on the back surface of the PMMA plate by the similar method. The appearance maintained transparency, and haze was 0.3%. A total light transmittance was measured. It was found that the total light transmittance was as high as 97.2% and light extraction efficiency was further improved.

[Comparative Example 17]

A low refractive index layer having a thickness of approximately 110 nm was formed on one surface or both surfaces of the PMMA plate according to the same method as in Example 41 except that the coating material of Comparative Example 15 was used in place of the coating material of Example 41. A total light transmittance of the obtained stack film was measured. When the low refractive index layer was formed on only one surface, the total light transmittance was 92.8%, and when the low refractive index layer was formed on the both surfaces, the total light transmittance was 93.3%. There was no significant difference and light extraction efficiency was not improved. Further, a minimum reflectance was 4.1% and a sufficient antireflection effect was not obtained.

[Comparative Example 18]

A low refractive index layer having a thickness of approximately 110 nm was formed on one surface or both surfaces of the PMMA plate according to the same method as in Example 41 except that the coating material of Comparative Example 16 was used in place of the coating material of Example 41. A total light transmittance of the obtained stack film was measured. When the low refractive index layer was formed on only one surface, the total light transmittance was 93.1%, and when the low refractive index layer was formed on both of the surfaces, the total light transmittance was 92.9%. There was no significant difference and light extraction efficiency was not improved. Further, a minimum reflectance was 4.2% and a sufficient antireflection effect was not obtained.

[Example 42]

A coating material was obtained using the organic-inorganic composite J according to the same method as in

Example 32. Further, a clear glass LED bulb (made by Panasonic Co., Ltd.) was coated with the coating material by a spray, and drying and UV curing treatment were performed to form a low refractive index layer having a thickness of approximately 110 nm.

An untreated clear glass LED bulb and the clear glass LED bulb provided with the low refractive index layer formed thereon were turned on in a darkroom. The clear glass LED bulb having the low refractive index layer appeared brighter.

[Reference Example 43: $ZrO_2$-g-p(MMA/HEMA/AOI); all-process integrated synthesis and photo-radical curing]

A BIDS-reformed zirconia solution was fabricated according to the same method as in Example 26 except that the above-described zirconia solution was used in place of the beaded silica solution B ("MIBK-ST-UP") of Example 26. A part of the zirconia solution was washed and dried, and halogen content was measured to be 0.2 mass%. Since chlorine was not detected, bromine content is shown as halogen content.

Subsequently, an organic-inorganic composite W was obtained according to the same method as in Example 26. Evaluation results are shown in table 7.

Further, a coating material and an organic-inorganic composite film were fabricated using the organic-inorganic composite W according to the same method as in Reference Example 19. Evaluation results are shown in Table 10. A substrate in which a hard coat layer was formed on TAC of Example 14 was used.

[Reference Example 44: (beaded $SiO_2$/$TiO_2$)-g-p(MMA/HEMA/AOI); all-process integrated synthesis and photo-radical curing]

A mixture solution A was fabricated according to the following procedure.

Mixture solution A: A beaded silica solution B ("MIBK-ST-UP") and a titania solution were mixed in the ratio of 9:1 by a volume ratio to obtain 20 mass% (beaded $SiO_2$+$TiO_2$)/MIBK solution.

A BIDS-reformed mixture solution A was fabricated according to the same method as in Example 26 except that the above-described mixture solution A was used in place of the beaded silica solution B ("MIBK-ST-UP") of Example 26. A part of the mixture solution was washed and dried, and halogen content was measured to be 0.1 mass%. Since chlorine was not detected, bromine content is shown as the halogen content.

Subsequently, an organic-inorganic composite X was obtained according to the same method as in Example 26. Evaluation results are shown in table 7.

Further, a coating material and an organic-inorganic composite film were produced using the organic-inorganic composite X according to the same method as in Reference Example 19. Evaluation results are shown in Table 10. A substrate in which a hard coat layer was formed on TAC of Example 14 was used.

[Table 1]

| material names | | mass ratio (%) | | | | | | | | | |
|---|---|---|---|---|---|---|---|---|---|---|---|
| | | Example 1* | Example 2* | Example 3 | Example 4 | Example 5 | Example 6* | Example 7* | Example 8* | Example 9 | Example 10 |
| monomers | MMA | 0.00 | 2.16 | 0.00 | 42,04 | 43.04 | 0.00 | 0.00 | 0.00 | 0.00 | 0.00 |
| | TFEMA | 38.32 | 18.84 | 43.73 | 0.00 | 0.00 | 0.00 | 0.00 | 0.00 | 0.00 | 0.00 |
| | EA | 0.00 | 0.94 | 0.00 | 0.00 | 0.00 | 0.00 | 0.00 | 0.00 | 0.00 | 0.00 |
| | MA | 0.00 | 0.00 | 0.00 | 0.93 | 0.00 | 0.00 | 0.00 | 0.00 | 0.00 | 0.00 |
| | PFPMA | 0.21 | 0.00 | 0.00 | 0.00 | 0.00 | 0.00 | 0.00 | 0.00 | 0.00 | 0.00 |
| | SIMA | 0.00 | 0.00 | 0.00 | 0.00 | 0.00 | 0.00 | 0.00 | 0.00 | 0.00 | 0.00 |
| | EMA | 0.00 | 0.00 | 0.00 | 0.00 | 0.00 | 0.00 | 0.00 | 0.00 | 0.00 | 0.00 |
| | HEMA | 0.00 | 0.00 | 0.87 | 0.00 | 0.00 | 0.00 | 0.00 | 0.00 | 0.00 | 0.00 |
| | GMA | 0.00 | 0.00 | 0.00 | 0.00 | 0.00 | 4.82 | 4.82 | 4.82 | 4.82 | 4.82 |
| | BPS-reformed 20nm spherical silica particle | 3.70 | 0.00 | 0.00 | 0.00 | 0.00 | 6.34 | 0.00 | 0.00 | 0.00 | 0.00 |
| | BPS-reformed 50 nm spherical silica particle | 0.00 | 12.31 | 0.00 | 0.00 | 0.00 | 0.00 | 6.34 | 0.00 | 0.00 | 0.00 |
| | BPS-redormed 100nm spherical silica particle | 0.00 | 0.00 | 0.00 | 0.00 | 0.00 | 0.00 | 0.00 | 6.34 | 0.00 | 0.00 |
| | BPS-reformed beaded silica particle A1 | 0.00 | 0.00 | 0.00 | 0.00 | 0.00 | 0.00 | 0.00 | 0.00 | 0.00 | 6.34 |
| | BPS-reformed beaded silica particle A2 | 0.00 | 0.00 | 0.00 | 0.00 | 13.87 | 0.00 | 0.00 | 0.00 | 0.00 | 0.00 |

(continued)

| material names | | mass ratio (%) | | | | | | | | | |
|---|---|---|---|---|---|---|---|---|---|---|---|
| | | Example 1* | Example 2* | Example 3 | Example 4 | Example 5 | Example 6* | Example 7* | Example 8* | Example 9 | Example 10 |
| surface-reformed Inorganic oxide particles | BPS-reformed 50nm hollow silica particle | 0.00 | 0.00 | 3.14 | 0.00 | 0.00 | 0.00 | 0.00 | 0.00 | 6.34 | 0.00 |
| | BPS-reformed 60nm hollow silica particle | 0.00 | 0.00 | 0.00 | 13.89 | 0.00 | 0.00 | 0.00 | 0.00 | 0.00 | 0.00 |
| | BIDS-reformed beaded silica particle/MBK solution | 0.00 | 0.00 | 0.00 | 0.00 | 0.00 | 0.00 | 0.00 | 0.00 | 0.00 | 0.00 |
| | BIDS-reformed beaded silica particle/MEK solution | 0.00 | 0.00 | 0.00 | 0.00 | 0.00 | 0.00 | 0.00 | 0.00 | 0.00 | 0.00 |
| | BIDS-reformed hollow silica particle/MBK solution | 0.00 | 0.00 | 0.00 | 0.00 | 0.00 | 0.00 | 0.00 | 0.00 | 0.00 | 0.00 |
| | C PS-reformed 20nm spherical silica particle | 0.00 | 0.00 | 0.00 | 0.00 | 0.00 | 0.00 | 0.00 | 0.00 | 0.00 | 0.00 |
| | hollow silica particle solution-4 | 0.00 | 0.00 | 0.00 | 0.00 | 0.00 | 0.00 | 0.00 | 0.00 | 0.00 | 0.00 |
| initiator | EBIB | 0.00 | 0.00 | 0.00 | 0.00 | 0.00 | 0.00 | 0.00 | 0.00 | 0.00 | 0.00 |
| | AIBN | 0.00 | 0.00 | 0.00 | 0.00 | 0.00 | 0.00 | 0.00 | 0.00 | 0.00 | 0.00 |
| solvent | MIBK | 57.73 | 65.72 | 52.13 | 42.99 | 43,03 | 0.00 | 0.00 | 0.00 | 0.00 | 0.00 |
| | MEK | 0.00 | 0.00 | 0.00 | 0.00 | 0.00 | 88.78 | 88.78 | 88.78 | 88.78 | 88.78 |
| | DMF | 0.00 | 0.00 | 0.00 | 0.00 | 0.00 | 0.00 | 0.00 | 0.00 | 0.00 | 0.00 |
| ligand | PMDETA | 0.026 | 0.020 | 0.090 | 0.126 | 0.037 | 0.038 | 0.038 | 0.038 | 0.038 | 0.038 |
| catalyst | CuBr | 0.013 | 0.010 | 0.036 | 0.021 | 0.020 | 0.019 | 0.019 | 0.019 | 0.019 | 0.019 |
| | CuBr2 | 0.001 | 0.000 | 0.004 | 0.003 | 0.003 | 0.003 | 0.003 | 0.003 | 0.003 | 0.003 |

(continued)

| material names | | mass ratio (%) | | | | | | | | | |
|---|---|---|---|---|---|---|---|---|---|---|---|
| | | Example 1* | Example 2* | Example 3 | Example 4 | Example 5 | Example 6* | Example 7* | Example 8* | Example 9 | Example 10 |
| | total | 100.00 | 100.00 | 100.00 | 100.00 | 100.00 | 100.00 | 100.00 | 100.00 | 100.00 | 100.00 |
| * Examples 1, 2, 6, 7, and 8 are Reference Examples | | | | | | | | | | | |

[Table 2]

| material names | | mass ratio (%) | | | | | | | | | |
|---|---|---|---|---|---|---|---|---|---|---|---|
| | | Example 19* | Example 20* | Example 21* | Example 22* | Example 23 | Example 24 | Example 25 | Example 26 | Example 27 | Example 28 |
| monomers | MMA | 3.33 | 3.91 | 4,51 | 4.51 | 3.23 | 0.00 | 0.00 | 3.23 | 0.00 | 0.00 |
| | TFEMA | 0.00 | 0.00 | 0.00 | 0.00 | 0.00 | 0.00 | 0.00 | 0.00 | 3.94 | 1.31 |
| | EA | 0.00 | 0.00 | 0.00 | 0.00 | 0.00 | 0.00 | 0.00 | 0.00 | 0.00 | 0.00 |
| | MA | 0.00 | 0.00 | 0.00 | 0.00 | 0.00 | 0.00 | 0.00 | 0.00 | 0.00 | 0.00 |
| | PFPMA | 0.00 | 0.00 | 0.00 | 0.00 | 0.00 | 0.00 | 0.00 | 0.00 | 0.00 | 0.00 |
| | SIMA | 0.00 | 0.00 | 0.00 | 0.00 | 0.00 | 4.24 | 0.00 | 0.00 | 0.00 | 0.00 |
| | EMA | 0.00 | 0.00 | 0.00 | 0.00 | 0.00 | 0.00 | 2.09 | 0.00 | 0.00 | 0.00 |
| | HEMA | 1.86 | 1.27 | 0.65 | 0.65 | 1.80 | 0.56 | 1.83 | 1.80 | 1.31 | 3.94 |
| | GMA | 0.00 | 0.00 | 0.00 | 0.00 | 0.00 | 0.00 | 0.00 | 0.00 | 0.00 | 0.00 |
| | BPS-reformed 20nm spherical silica particle | 6.63 | 0.00 | 0.00 | 0.00 | 0.00 | 0.00 | 0.00 | 0.00 | 0.00 | 0.00 |
| | BPS-reformed 50nm spherical silica particle | 0.00 | 6.81 | 0.00 | 0.00 | 0.00 | 0.00 | 0.00 | 0.00 | 0.00 | 0.00 |
| | BPS-redormed 100nm spherical silica particle | 0.00 | 0.00 | 6.99 | 0.00 | 0.00 | 0.00 | 0.00 | 0.00 | 0.00 | 0.00 |
| | BPS-reformed beaded silica particle A1 | 0.00 | 0.00 | 0.00 | 6.99 | 6.43 | 10.77 | 0.00 | 0.00 | 0.00 | 0.00 |
| | BPS-reformed beaded silica particle A2 | 0.00 | 0.00 | 0.00 | 0.00 | 0.00 | 0.00 | 9.75 | 0.00 | 0.00 | 0.00 |

(continued)

| material names | | mass ratio (%) | | | | | | | | | |
|---|---|---|---|---|---|---|---|---|---|---|---|
| | | Example 19* | Example 20* | Example 21* | Example 22* | Example 23 | Example 24 | Example 25 | Example 26 | Example 27 | Example 28 |
| surface-reformed inorganic oxide particles | BPS-reformed 50nm hollow silica particle | 0.00 | 0.00 | 0.00 | 0.00 | 0.00 | 0.00 | 0.00 | 0.00 | 0.00 | 0.00 |
| | BP6-reformed 60nm hollow silica particle | 0.00 | 0.00 | 0.00 | 0.00 | 0.00 | 0.00 | 0.00 | 0.00 | 0.00 | 0.00 |
| | BIDS-reformed beaded silica particle/MBK solution | 0.00 | 0.00 | 0.00 | 0.00 | 0.00 | 0.00 | 0.00 | 32.14 | 0.00 | 0.00 |
| | BIDS-reformed beaded silica particle/MEK solution | 0.00 | 0.00 | 0.00 | 0.00 | 0.00 | 0.00 | 0.00 | 0.00 | 24.28 | 0.00 |
| | BIDS-reformed hollow silica particle/MBK solution | 0.00 | 0.00 | 0.00 | 0.00 | 0.00 | 0.00 | 0.00 | 0.00 | 0.00 | 24.28 |
| | CPS-reformed 20nm spherical silica particle | 0.00 | 0.00 | 0.00 | 0.00 | 0.00 | 0.00 | 0.00 | 0.00 | 0.00 | 0.00 |
| | hollow silica particle solution-4 | 0.00 | 0.00 | 0.00 | 0.00 | 0.00 | 0.00 | 0.00 | 0.00 | 0.00 | 0.00 |
| Initiator | EBIB | 0.00 | 0.00 | 0.00 | 0.00 | 0.00 | 0.00 | 0.00 | 0.00 | 0.00 | 0.00 |
| | AIBN | 0.00 | 0.00 | 0.00 | 0.00 | 0.00 | 0.00 | 0.00 | 0.00 | 0.00 | 0.00 |
| solvent | MIBK | 88.17 | 88.00 | 87.84 | 87.84 | 0.00 | 84.42 | 66.71 | 62.82 | 0.00 | 0.00 |
| | MEK | 0.00 | 0.00 | 0.00 | 0.00 | 70.83 | 0.00 | 0.00 | 0.00 | 70.46 | 70.46 |
| | DMF | 0.00 | 0.00 | 0.00 | 0.00 | 17.70 | 0.00 | 19.61 | 0.00 | 0.00 | 0.00 |
| ligand | PMDETA | 0.006 | 0.006 | 0.006 | 0.006 | 0.006 | 0.006 | 0.006 | 0.006 | 0.006 | 0.006 |
| catalyst | CuBr | 0.004 | 0.004 | 0.004 | 0.004 | 0.004 | 0.004 | 0.003 | 0.003 | 0.003 | 0.003 |
| | CuBr2 | 0.000 | 0.000 | 0.000 | 0.000 | 0.000 | 0.000 | 0.001 | 0.001 | 0.001 | 0.001 |

(continued)

| material names | | mass ratio (%) | | | | | | | | | |
|---|---|---|---|---|---|---|---|---|---|---|---|
| | | Example 19* | Example 20* | Example 21* | Example 22* | Example 23 | Example 24 | Example 25 | Example 26 | Example 27 | Example 28 |
| | total | 100.00 | 100.00 | 100.00 | 100.00 | 100.00 | 100.00 | 100.00 | 100.00 | 100.00 | 100.00 |

* Examples 19-22 are Reference Examples

[Table 3]

| | material names | Comp. Example 1 | Comp. Example 2 | Comp. Example 3 | Comp. Example 4 | Comp. Example 6 | Comp. Example 7 | Comp. Example 8 | Comp. Example 9 |
|---|---|---|---|---|---|---|---|---|---|
| monomers | MMA | 4.51 | 3.55 | 4.51 | 4.51 | 43.04 | 0.00 | 3.33 | 0.00 |
| | TFEMA | 0.00 | 0.00 | 0.00 | 0.00 | 0.00 | 0.00 | 0.00 | 0.00 |
| | EA | 0.00 | 0.00 | 0.00 | 0.00 | 0.00 | 0.00 | 0.00 | 0.00 |
| | MA | 0.00 | 0.00 | 0.00 | 0.00 | 0.00 | 0.00 | 0.00 | 0.00 |
| | PFPMA | 0.00 | 0.00 | 0.00 | 0.00 | 0.00 | 0.00 | 0.00 | 0.00 |
| | SiMA | 0.00 | 0.00 | 0.00 | 0.00 | 0.00 | 0.00 | 0.00 | 0.00 |
| | EMA | 0.00 | 0.00 | 0.00 | 0.00 | 0.00 | 0.00 | 0.00 | 2.09 |
| | HEMA | 0.65 | 1.98 | 0.65 | 0.65 | 0.00 | 0.00 | 1.86 | 1.83 |
| | GMA | 0.00 | 0.00 | 0.00 | 0.00 | 0.00 | 4.82 | 0.00 | 0.00 |

(continued)

| material names | | | | | | | | | |
|---|---|---|---|---|---|---|---|---|---|
| | | Comp. Example 1 | Comp. Example 2 | Comp. Example 3 | Comp. Example 4 | Comp. Example 6 | Comp. Example 7 | Comp. Example 8 | Comp. Example 9 |
| surface-reformed inorganic oxide particles | BPS-reformed 20nm spherical silica particle | 0.00 | 0.00 | 0.00 | 0.00 | 0.00 | 0.00 | 0.00 | 0.00 |
| | BPS-reformed 50nm spherical silica particle | 0.00 | 0.00 | 0.00 | 0.00 | 0.00 | 0.00 | 0.00 | 0.00 |
| | BPS-redormed 100nm spherical silica particle | 0.00 | 0.00 | 0.00 | 0.00 | 0.00 | 0.00 | 0.00 | 0.00 |
| | BPS-reformed beaded silica particle A1 | 0.00 | 0.00 | 6.99 | 6.99 | 0.00 | 0.00 | 0.00 | 0.00 |
| | BPS-reformed beaded silica particle A2 | 0.00 | 0.00 | 0.00 | 0.00 | 0.00 | 0.00 | 0.00 | 0.00 |
| | BPS-reformed 50nm hollow silica particle | 0.00 | 0.00 | 0.00 | 0.00 | 0.00 | 0.00 | 0.00 | 0.00 |
| | BPS-reformed 60nm hollow silica particle | 0.00 | 0.00 | 0.00 | 0.00 | 0.00 | 0.00 | 0.00 | 0.00 |
| | BIDS-reformed beaded silica particle/MIBK solution | 0.00 | 0.00 | 0.00 | 0.00 | 0.00 | 0.00 | 0.00 | 0.00 |
| | BIDS-reformed beaded silica particle/MEK solution | 0.00 | 0.00 | 0.00 | 0.00 | 0.00 | 0.00 | 0.00 | 0.00 |
| | BIDS-reformed hollow silica particle/MIBK solution | 0.00 | 0.00 | 0.00 | 0.00 | 0.00 | 0.00 | 0.00 | 0.00 |
| | CPS-reformed 20nm spherical silica particle | 6.99 | 0.00 | 0.00 | 0.00 | 0.00 | 0.00 | 0.00 | 0.00 |
| | hollow silica particle solution-4 | 0.00 | 0.00 | 0.00 | 0.00 | 0.00 | 0.00 | 0.00 | 0.00 |
| Initiator | EBIB | 0.00 | 0.06 | 0.00 | 0.00 | 0.15 | 0.02 | 0.02 | 0.01 |
| | AIBN | 0.11 | 0.00 | 0.00 | 0.00 | 0.00 | 0.00 | 0.00 | 0.00 |

(continued)

| material names | | Comp. Example 1 | Comp. Example 2 | Comp. Example 3 | Comp. Example 4 | Comp. Example 6 | Comp. Example 7 | Comp. Example 8 | Comp. Example 9 |
|---|---|---|---|---|---|---|---|---|---|
| solvent | MIBK | 87.73 | 94.39 | 87.84 | 87.84 | 56.75 | 0.00 | 94.78 | 73.90 |
| | MEK | 0.00 | 0.00 | 0.00 | 0.00 | 0.00 | 95.10 | 0.00 | 0.00 |
| | DMF | 0.00 | 0.00 | 0.00 | 0.00 | 0.00 | 0.00 | 0.00 | 22.16 |
| ligand | PMDETA | 0.006 | 0.012 | 0.006 | 0.006 | 0.037 | 0.038 | 0.006 | 0.006 |
| catalyst | CuBr | 0.004 | 0.006 | 0.004 | 0.004 | 0.020 | 0.019 | 0.004 | 0.003 |
| | CuBr2 | 0.000 | 0.000 | 0.000 | 0.000 | 0.003 | 0.003 | 0.000 | 0.001 |
| | total | 100.00 | 100.00 | 100.00 | 100.00 | 100.00 | 100.00 | 100.00 | 100.00 |

[Table 4]

| material names | | mass ratio (%) | | | | | | | | | |
|---|---|---|---|---|---|---|---|---|---|---|---|
| | | Example 19* | Example 20* | Example 21* | Example 22* | Example 23 | Example 24 | Example 25 | Example 26 | Example 27 | Example 28 |
| sediment | | 10.05 | 10.05 | 10.05 | 10.05 | 11.90 | 13.49 | 0.00 | 0.00 | 0.00 | 0.00 |
| polymerization liquid | | 0.00 | 0.00 | 0.00 | 0.00 | 0.00 | 0.00 | 95.66 | 95.66 | 95.66 | 95.66 |
| monomer | MOI | 2.18 | 2.18 | 2.18 | 2.18 | 0.00 | 0.00 | 0.00 | 0.00 | 0.00 | 0.00 |
| | AOI | 0.00 | 0.00 | 0.00 | 0.00 | 2.98 | 1.48 | 4.29 | 4.29 | 4.29 | 4.29 |
| solvent | MEK | 87.75 | 87.75 | 87.75 | 87.75 | 85.09 | 0.00 | 0.00 | 0.00 | 0.00 | 0.00 |
| | MIBK | 0.00 | 0.00 | 0.00 | 0.00 | 0.00 | 85.01 | 0.00 | 0.00 | 0.00 | 0.00 |
| polymerization inhibitor | | 0.001 | 0.001 | 0.001 | 0.001 | 0.003 | 0.002 | 0.003 | 0.003 | 0.003 | 0.003 |
| catalyst | DBTDL | 0.019 | 0.019 | 0.019 | 0.019 | 0.027 | 0.018 | 0.047 | 0.047 | 0.047 | 0.047 |
| total | | 100.00 | 100.00 | 100.00 | 100.00 | 100.00 | 100.00 | 100.00 | 100.00 | 100.00 | 100.00 |

| material names | | mass ratio (%) | | | | |
|---|---|---|---|---|---|---|
| | | Comp. Example 2 | Comp. Example 3 | Com p. Example 4 | Com p. Example 8 | Comp. Example 9 |
| sediment | | 2.00 | 10.05 | 10.05 | 2.00 | 0.00 |
| polymerization liquid | | 0.00 | 0.00 | 0.00 | 0.00 | 81.51 |
| monomer | MOI | 2.50 | 2.18 | 2.18 | 2.50 | 0.00 |
| | AOI | 0.00 | 0.00 | 0.00 | 0.00 | 18.28 |
| solvent | MEK | 95.40 | 87.75 | 87.75 | 95.40 | 0.00 |
| | MIBK | 0.00 | 0.00 | 0.00 | 0.00 | 0.00 |
| polymerization inhibitor | | 0.005 | 0.001 | 0.001 | 0.005 | 0.013 |
| catalyst | DBTDL | 0.095 | 0.019 | 0.019 | 0.095 | 0.200 |
| total | | 100.00 | 100.60 | 100.00 | 100.00 | 100.00 |

* Examples 19-22 are Reference Examples

[Table 5]

| | Coating material mix proportion(mass%) | | | | |
|---|---|---|---|---|---|
| | organic-inorganic composite | crosslinker | curing agent | curing accelerator | photo-acid generating agent |
| Example 6* | 99.1 | 0.0 | 0.0 | 0.0 | 0.9 |
| Example 7* | 98.9 | 0.0 | 0.0 | 0.0 | 1.1 |
| Examples 8* | 98.4 | 0.0 | 0.0 | 0.0 | 1.6 |
| Example 9 | 99.0 | 0.0 | 0.0 | 0.0 | 1.0 |
| Example 10 | 99.0 | 0.0 | 0.0 | 0.0 | 1.0 |
| Example 11* | 94.0 | 5.3 | 0.0 | 0.0 | 0.7 |
| Example 12 | 92.8 | 0.0 | 6.5 | 0.7 | 0.0 |
| Example 13 | 93.4 | 0.0 | 6.0 | 0.6 | 0.0 |
| Example 18 | 99.0 | 0.0 | 0.0 | 0.0 | 1.0 |
| * Examples 6, 7, 8, and 11 are Reference Examples | | | | | |

[Table 6]

| | inorganic compound particle | | | | | | | monomer | | | | organic-inorganic composite or polymer | | | | | | | | | |
|---|---|---|---|---|---|---|---|---|---|---|---|---|---|---|---|---|---|---|---|---|---|
| Example or Comp. Example | cavity content (%) | | particle diameter (nm) | circularity | L/D | outer shell thickness (nm) | refractive index | kind | | ratio | | inorganic compound content | | double bond | number average molecular weight | molecular weight distribution (Mw/Mn) | | Tg (°C) | halogen content (wt%) | copper content (wt%) | fluorine content (wt%) |
| | measured value | decision | | measured value | | | | M1 | M2 | M1 | M2 | (wt%) | (vol%) | (mol%) | Mn | measured value | decision | | | | |
| Example 1* | — | — | 16 | 0.96 | 1.1 | — | 1.45 | — | — | — | — | 84 | 75 | — | 9,500 | 1.43 | A | 73 | 1.8 | 0.004 | 5 |
| Example 2* | — | — | 49 | 0.95 | 1.1 | — | 1.45 | — | — | — | — | 75 | 65 | — | 19,500 | 1.54 | A | 65 | 0.5 | 0.007 | 38 |
| Example 3 | 27 | A | 48 | 0.95 | 1.1 | 8.5 | 1.30 | — | — | — | — | 52 | 46 | — | 24,200 | 1.70 | A | 82 | 0.5 | 0.015 | 20 |
| Example 4 | 37 | A | 64 | 0.92 | 1.1 | 9 | 1.25 | — | — | — | — | 76 | 70 | — | 11,600 | 2.12 | A | 110 | 0.9 | 0.011 | 0 |
| Example 5 | — | — | — | — | >3 | — | 1.45 | — | — | — | — | 91 | 85 | — | 8,300 | 1.68 | A | 108 | 2.0 | 0.094 | 0 |
| Example 6* | — | — | 16 | 0.96 | 1.1 | — | 1.45 | — | — | — | — | 82 | 71 | — | 11,300 | 1.38 | A | — | 1.6 | 0.020 | 0 |
| Example 7* | — | — | 48 | 0.95 | 1.1 | — | 1.45 | — | — | — | — | 72 | 58 | — | 41,300 | 1.76 | A | — | 0.4 | — | 0 |
| Example 8* | — | — | 88 | 0.91 | 1.1 | — | 1.45 | — | — | — | — | 68 | 53 | — | 48,300 | 1.79 | A | — | 0.3 | — | 0 |
| Example 9 | 27 | A | 48 | 0.95 | 1.1 | 8.5 | 1.30 | — | — | — | — | 79 | 72 | — | 18,500 | 1.98 | A | — | 0.8 | — | 0 |
| Example 10 | — | — | — | — | >3 | — | 1.45 | — | — | — | — | 86 | 77 | — | 58,300 | 1.91 | A | — | 0.1 | — | 0 |

* Examples 1, 2, 6, 7, and 8 are Reference Examples

[Table 7]

| Example or Comp. Example | inorganic compound particle | | | | | | | monomer | | | | organic-inorganic composite or polymer | | | | | | | | | |
|---|---|---|---|---|---|---|---|---|---|---|---|---|---|---|---|---|---|---|---|---|---|
| | cavity content (%) | | particle diameter (nm) | circularity | L/D | outer shell thickness (nm) | refractive index | kind | | ratio | | inorganic compound content | | double bond | number average molecular weight | molecular weight distribution (Mw/Mn) | | Tg (°C) | halogen content (wt%) | copper content (wt%) | fluorine content (wt%) |
| | measured value | decision | | measured value | | | | M1 | M2 | M1 | M2 | (wt%) | (vol%) | (mol%) | Mn | measured value | decision | | | | |
| Example 18 | — | — | — | — | >3 | — | 1.45 | — | — | — | — | 81 | 70 | — | 63,800 | 2.01 | A | — | 0.2 | — | 2 |
| Example 19* | — | — | 16 | 0.96 | 1.1 | — | 1.45 | MMA | HEMA | 70 | 30 | 85 | 75 | 42 | 13,900 | 1.82 | A | — | 1.6 | — | 0 |
| Example 20* | — | — | 49 | 0.95 | 1.1 | — | 1.45 | MMA | HEMA | 80 | 20 | 72 | 58 | 26 | 17,300 | 1.71 | A | — | 0.5 | — | 0 |
| Example 21* | — | — | 88 | 0.91 | 1.1 | — | 1.45 | MMA | HEMA | 90 | 10 | 64 | 49 | 16 | 19,900 | 1.75 | A | — | 0.3 | — | 0 |
| Example 22* | — | — | — | — | >3 | — | 1.45 | MMA | HEMA | 90 | 10 | 61 | 46 | 17 | 35,200 | 1.95 | A | — | 1.2 | — | 0 |
| Example 23 | — | — | — | — | >3 | — | 1.45 | MMA | HEMA | 70 | 30 | 86 | 77 | 41 | 24,800 | 2.18 | A | — | 1.6 | — | 0 |
| Example 24 | — | — | — | — | >3 | — | 1.45 | SiMA | HEMA | 70 | 30 | 88 | 80 | 40 | 31,200 | 2.25 | A | — | 1.6 | — | 0 |
| Example 25 | — | — | — | — | >3 | — | 1.45 | EMA | HEMA | 50 | 50 | 88 | 80 | 53 | 63,200 | 2.00 | A | — | 0.1 | — | 0 |
| Example 26 | — | — | — | — | >3 | — | 1.45 | MMA | HEMA | 70 | 30 | 86 | 77 | 40 | 55,300 | 1.82 | A | — | 0.1 | — | 0 |
| Example 27 | — | — | — | — | >3 | — | 1.45 | TFEMA | HEMA | 70 | 30 | 83 | 70 | 42 | 48,500 | 1.93 | A | — | 0.2 | — | 4 |
| Example 28 | 27 | A | 48 | 0.95 | 1.1 | 8.5 | 1.30 | MMA | HEMA | 70 | 30 | 57 | 48 | 39 | 39,500 | 1.72 | A | — | 0.6 | — | 0 |
| Example 43* | — | — | — | — | 1.5 | — | 1.90 | MMA | HEMA | 70 | 30 | 90 | 68 | 40 | 19,200 | 2.15 | A | — | 0.2 | — | 0 |
| Example 44* | — | — | — | — | — | — | 1.50 | MMA | HEMA | 70 | 30 | 86 | 77 | 40 | 46,900 | 2.29 | A | — | 0.1 | — | 0 |

* Examples 19-22, 43, and 44 are Reference Examples

[Table 8]

| Example or Comp. Example | inorganic compound particle | | | | | | | monomer | | | | organic-inorganic composite or polymer | | | | | | | | | |
|---|---|---|---|---|---|---|---|---|---|---|---|---|---|---|---|---|---|---|---|---|---|
| | cavity content (%) | | particle diameter (nm) | circularity | L/D | outer shell thickness (nm) | refractive index | kind | | ratio | | inorganic compound content | | double bond | number average molecular weight | molecular weight distribution (Mw/Mn) | | Tg (°C) | halogen content (wt%) | copper content (wt%) | fluorine content (wt%) |
| | measured value | decision | | measured value | | | | M1 | M2 | M1 | M2 | (wt%) | (vol%) | (mol%) | Mn | measured value | decision | | | | |
| Com. Example 1 | — | — | 16 | 0.96 | 1.1 | — | 1.45 | MMA | HEMA | 90 | 10 | 76 | 63 | 15 | — | — | — | — | 0 | — | 0 |
| Com. Example 2 | — | — | — | — | >3 | — | 1.45 | MMA | HEMA | 70 | 30 | 0 | 0 | 40 | 61,200 | 1.85 | A | — | — | — | — |
| Comp. Example 3 | — | — | — | — | >3 | — | 1.45 | MMA | HEMA | 90 | 10 | 47 | 33 | 17 | 69,200 | 2.03 | A | — | 0.7 | — | 0 |
| Comp. Example 4 | — | — | — | — | >3 | — | 1.45 | MMA | HEMA | 90 | 10 | 96 | 93 | 13 | 2,800 | 1.99 | A | — | 1.6 | — | 0 |
| Comp. Example 5 | — | — | — | — | — | — | — | — | — | — | — | — | — | — | — | — | — | — | — | — | — |

[Table 9]

| | coating material | organic-inorganic composite film | | | | | | | | | | | | | synthehic judgement |
|---|---|---|---|---|---|---|---|---|---|---|---|---|---|---|---|
| Example or Comp. Example | solid content (wt%) | substrate | appearanee | free polymer (wt%) | total light transmittance (%) | haze (%) | refractive index | | void content (%) | pencil hardness | adhesion | solvent resistance | water contact angle (°) | oil contact angle (°) | |
| | | | decision | | | | calculated value | measured value | | | decision | decision | | | |
| Example 1* | 10.2 | PET | A | 0 | 92 | 0.3 | 1.44 | 1.39 | 12 | 2H | | - | 95 | 48 | A |
| Example 2* | 9.2 | PET | A | 1 | 92 | 1.7 | 1.44 | 1.38 | 14 | H | A | - | 109 | 42 | A |
| | | TAC | A | 1 | 91 | 1.9 | 1.44 | 1.38 | 14 | H | A | - | 105 | 44 | |
| Example 3 | 11.8 | PET | A | 3 | 91 | 2.0 | 1.37 | 1.33 | 9 | H | A | - | 103 | 55 | A |
| Example 4 | 9.8 | PET | A | 2 | 91 | 3.1 | 1.32 | 1.20 | 38 | H | - | - | 112 | unmeasurable | A |
| Example 5 | 10.1 | PET | A | 0 | 92 | 0.2 | 1.46 | 1.21 | 54 | <B | - | - | 118 | unmeasurable | A |
| Example 6* | 12.0 | PET | A | 2 | 92 | 0.2 | 1.47 | 1.42 | 11 | F | A | A | 104 | unmeasurable | A |
| Example 7* | 10.1 | PET | A | 1 | 91 | 1.1 | 1.48 | 1.40 | 17 | H | A | A | 101 | unmeasurable | A |
| Example 8' | 11.2 | PET | A | 3 | 91 | 1.9 | 1.48 | 1.43 | 11 | F | A | A | 110 | unmeasurable | A |
| Example 9 | 9.5 | PET | A | 2 | 91 | 1.6 | 1.47 | 1.33 | 31 | F | A | A | 101 | unmeasurable | A |
| Example 10 | 10.9 | PET | A | 0 | 91 | 0.3 | 1.46 | 1.28 | 39 | H | A | A | 111 | unmeasurable | A |
| Example 11* | 10.3 | PET | A | 28 | 90 | 1.5 | 1.47 | 1.33 | 30 | 2H | A | A | 92 | - | A |
| Example 12 | 8.2 | PET | A | 2 | 91 | 0.8 | 1.46 | 1.31 | 33 | H | A | A | 111 | - | A |

(continued)

| | coating material | organic-inorganic composite film | | | | | | | | | | | | | | syntehtic judgement |
|---|---|---|---|---|---|---|---|---|---|---|---|---|---|---|---|---|
| Example or Comp. Example | solid content (wt%) | substrate | appearanee | free polymer (wt%) | total light transmittance (%) | haze (%) | refractive index | | void content (%) | pencil hardness | adhesion | solvent resistance | water contact angle (°) | oil contact angle (°) | | |
| | | | decision | | | | calculated value | measured value | | | decision | decision | | | | |
| Example 13 | 9.3 | PET | A | 1 | 91 | 0.9 | 1.46 | 1.31 | 33 | H | A | A | 111 | - | | A |
| Example 14 | 10.9 | TAC +HC | A | 0 | 91 | 0.3 | 1.46 | 1.28 | 39 | H | A | A | 102 | - | | A |
| Example 15 | 9.8 | TAC +HC | A | 0 | 91 | 0.3 | 1.46 | 1.25 | 46 | F | - | A | 112 | - | | A |

* Examples 1, 2, 6-8, and 11 are Reference Examples

[Table 10]

| | coating material | organic-inorganic composite film | | | | | | | | | | | | | synthetic judgement |
|---|---|---|---|---|---|---|---|---|---|---|---|---|---|---|---|
| Example or Comp. Example | solid content (wt%) | substrate | appearance | free polymer (wt%) | total light transmittance (%) | haze (%) | refractive index | | void content (%) | pencil hardness | adhesion | solvent resistance | water contact angle (°) | oil contact angle (°) | |
| | | | decision | | | | calculated value | measured value | | | decision | decision | | | |
| Example 16 | 10.5 | TAC+HC | A | 0 | 91 | 0.3 | 1.46 | 1.20 | 57 | <B | - | A | 105 | - | A |
| Example 17 | 10.9 | glass | A | 0 | 90 | - | 1.46 | 1.28 | 39 | 2H | A | A | 108 | - | A |
| Example 18 | 10.5 | PET | A | 0 | 91 | 2.1 | 1.47 | 1.31 | 34 | H | A | A | 118 | - | A |
| Example 19 | 10.3 | PET | A | 2 | 91 | 0.4 | 1.47 | 1.43 | 8 | H | A | A | 106 | - | A |
| Example 20* | 12.0 | PET | A | 1 | 90 | 1.1 | 1.47 | 1.44 | 8 | H | A | A | 98 | - | A |
| Example 21* | 8.2 | PET | A | 3 | 89 | 1.9 | 1.48 | 1.46 | 4 | H | A | A | 105 | - | A |
| Example 22* | 10.5 | PET | A | 2 | 92 | 0.6 | 1.48 | 1.43 | 10 | F | A | A | 109 | - | A |
| Example 23 | 10.2 | PET | A | 2 | 92 | 0.2 | 1.48 | 1.30 | 38 | F | A | A | 112 | - | A |
| Example 24 | 11.2 | PET | A | 1 | 92 | 0.8 | 1.47 | 1.28 | 40 | F | - | A | 103 | - | A |
| Example 25 | 10.6 | TAC+HC | A | 0 | 92 | 0.5 | 1.48 | 1.26 | 46 | HB | - | A | 100 | - | A |
| Example 26 | 12.0 | AC+HC | A | 1 | 92 | 0.2 | 1.48 | 1.32 | 33 | F | - | A | 105 | - | A |
| Example 27 | 10.1 | TAC+HC | A | 1 | 92 | 0.2 | 1.47 | 1.32 | 32 | HB | - | A | 118 | - | A |

(continued)

| | coating material | organic-inorganic composite film | | | | | | | | | | | | | |
|---|---|---|---|---|---|---|---|---|---|---|---|---|---|---|---|
| Example or Comp. Example | solid content (wt%) | substrate | appearance | free polymer (wt%) | total light tranmittance (%) | haze (%) | refractive index | | void content (%) | pencil hardness | adhesion | solvent resistance | water contact angle (°) | oil contact angle (°) | syntehtic judgement |
| | | | decision | | | | calculated value | measured value | | | decision | decision | | | |
| Example 28 | 9.1 | TAC+HC | A | 1 | 92 | 2.2 | 1.40 | 1.32 | 20 | F | - | A | 105 | - | A |
| Example 29 | 10.9 | TAC+HC | A | 16 | 92 | 0.5 | 1.48 | 1.34 | 29 | H | - | A | 102 | - | A |
| Example 30 | 10.2 | TAC+HC | A | 1 | 92 | 0.2 | 1.48 | 1.29 | 40 | F | - | A | 105 | - | A |
| Example 43* | 10.2 | TAC+HC | A | 1 | 91 | 2.8 | 1.71 | 1.63 | 11 | H | - | A | 105 | - | A |
| Example 44* | 10.8 | TAC+HC | A | 1 | 92 | 0.5 | 1.50 | 1.38 | 24 | F | - | A | 105 | - | A |

* Examples 19-22, 43, and 44 are Reference Examples

[Table 11]

| | coating material | organic-inorganic composite film | | | | | | | | | | | | | synthetic judgement |
|---|---|---|---|---|---|---|---|---|---|---|---|---|---|---|---|
| Example or Comp. Example | solid content (wt%) | substrate | appearance | free polymer (wt%) | total light transmittance (%) | haze (%) | refractive index | | void content (%) | pencil hardness | adhesion | solvent resistance | water contact angle (°) | oil contact angle (°) | |
| | | | decision | | | | calculated value | measured value | | | decision | decision | | | |
| Comp. Example 1 | 10.6 | TAC+HC | B | unmeasurable | unmeasurable | 6.5 | unmeasurable | unmeasurable | unmeasurable | unmeasurable | B | A | 102 | - | B |
| Comp. Example 2 | 10.2 | TAC+HC | B | 10 | 82 | 10.1 | unmeasurable | unmeasurable | unmeasurable | unmeasurable | B | A | unmeasurable | - | B |
| Comp. Example 3 | 10.5 | TAC+HC | A | 4 | 92 | 0.6 | 1.49 | 1.49 | 0 | HB | A | A | 93 | - | B |
| Comp. Example 4 | 10.2 | TAC+HC | B | 1 | 86 | 8.8 | unmeasurable | unmeasurable | unmeasurable | unmeasurable | unmeasurable | A | unmeasurable | - | B |
| Comp. Example 5 | 9.5 | TAC+HC | A | 37 | 92 | 0.6 | 1.49 | 1.49 | 0 | HB | A | A | 93 | - | B |

It has been found from the experiment results shown in Tables 4 to 11 that: a polymer layer in which the length of the polymer chain has matched is formed and each organic-inorganic composite is independently generated without being bonded, by synthesizing a polymer by a living radical polymerization method from a polymerization initiating group bonded to an inorganic particle, and; an organic-inorganic composite film in which a void content with respect to an inorganic filling amount can be easily increased is obtained, as an amount of free polymers filling the voids is less. Further, it has been found that an organic-inorganic composite film having excellent solvent-resistant characteristic and high film strength is obtained by curing the organic-inorganic composite film.

## Industrial Applicability

The organic-inorganic composite, the coating material, and the organic-inorganic composite film according to the present embodiment are useful, for example, as an optical material and a coating film.

## Claims

1. An organic-inorganic composite film comprising:

an organic-inorganic composite including: an inorganic compound particle; and a polymer bonded to the inorganic compound particle, wherein a molecular weight distribution of the polymer is equal to or less than 2.3,
wherein the inorganic compound particle and the polymer are bonded through a coupling agent which has a structure represented by the following formula:

X-Si(R1)(R2)(R3)

in the formula, X denotes a polymerization initiating group, R1 and R2 independently denote an alkyl group having 1 to 10 carbon atoms respectively, and R3 denotes an alkoxy group having 1 to 10 carbon atoms, a hydrogen atom, a hydroxyl group or a halogen atom;
wherein the polymerization initiating group is an organic halide group represented by the following general formula (1) or a halogenated sulfonyl group represented by general formula (2):

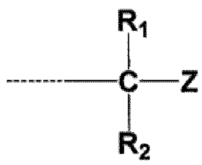 · · · (1) 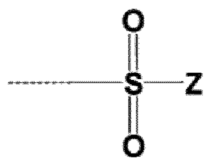 · · · (2)

in which $R_1$ and $R_2$ each independently denotes a hydrogen atom, an alkyl group having 1 to 20 carbon atoms that may have a substituent, an allyl group that may have a substituent, an aryl group having 6 to 20 carbon atoms that may have a substituent, an alkyl aryl group, or an alkyl aryl group that may have a substituent, and Z denotes a halogen atom;
wherein the organic-inorganic composite further includes a free polymer not bonded to the inorganic compound particle, and a percentage of the free polymer is equal to or less than 20 mass% with reference to a total mass of the free polymer and the polymer bonded to the inorganic compound particle;
wherein a percentage of voids in the film is 3 to 70 volume% with reference to a volume of the film; and
wherein the organic-inorganic composite film has a refractive index of equal to or less than 1.36.

2. The organic-inorganic composite film according to claim 1, wherein the inorganic compound particle is an inorganic oxide particle.

3. The organic-inorganic composite film according to claim 2, wherein the inorganic oxide particle form a chain structure including a plurality of primary particles linked in a beaded shape.

4. The organic-inorganic composite film according to claim 1 or 2, wherein a circularity of the inorganic compound particle is 0.5 to 1.

5. The organic-inorganic composite film according to any one of claims 1 to 4, wherein the polymer contains a methacrylic

acid ester or an acrylic acid ester as a monomer unit.

6. The organic-inorganic composite film according to any one of claims 1 to 5, wherein the polymer contains at least one crosslinkable functional group.

7. The organic-inorganic composite film according to claim 6, wherein the crosslinkable functional group contains at least one reactive double bond.

8. The organic-inorganic composite film according to claim 7, wherein the reactive double bond is a carbon-carbon double bond in a (meta) acryloyl group.

9. The organic-inorganic composite film according to any one of claims 1 to 8, wherein a number average molecular weight Mn of the polymer is 10000 to 100000 g/mol, and/or wherein a content of the inorganic compound particle is 70 to 96 mass% with reference to a total mass of the organic-inorganic composite.

10. The organic-inorganic composite film according to any one of claims 1 to 9, wherein a content of the inorganic compound particle is 55 to 94 volume% with reference to a total volume of the organic-inorganic composite.

11. The organic-inorganic composite film according to any one of claims 1 to 10, having a refractive index of 0.020 or more lower than a theoretical refractive index, and/or having a minimum reflectance of equal to or less than 1.5%.

12. The organic-inorganic composite film according to any one of claims 1 to 11, having a pencil hardness of equal to or more than F.

13. The organic-inorganic composite film according to any one of claims 1 to 12, wherein the organic-inorganic composite is crosslinked.

14. The organic-inorganic composite film according to claim 13, wherein the organic-inorganic composite is crosslinked by radical polymerization, and/or wherein the organic-inorganic composite is further crosslinked by a crosslinker.

15. A coating material to form an organic-inorganic composite film according to any one of claims 1 to 14 through coating, the coating material comprising:
an organic-inorganic composite including: an inorganic compound particle; and a polymer bonded to the inorganic compound particle; wherein the organic-inorganic composite is as defined in any one of claims 1 to 14.

16. The coating material according to claim 15, further comprising an organic solvent, and/or further comprising a photo-polymerization initiator or a curing agent, and/or wherein a solid content concentration is 0.2 to 50 mass%, and/or having a viscosity of equal to or less than 5 Pa·s.

17. The organic-inorganic composite film according to any one of claims 1 to 14, produced by a method including the following steps 1 and 2:

   Step 1: reacting the inorganic compound particle with a coupling agent having a polymerization initiating group, to obtain a surface-reformed inorganic compound particle; and
   Step 2: forming the polymer bonded to the inorganic compound particle through living radical polymerization of a radical polymerizable monomer initiated by the polymerization initiating group, to produce the organic-inorganic composite; wherein the living radical polymerization is atom transfer radical polymerization.

18. The organic-inorganic composite film according to any one of claims 13 or 14, produced by a method including the following steps 1, 2 and 3:

   Step 1: reacting the inorganic compound particle with a coupling agent having a polymerization initiating group, to obtain a surface-reformed inorganic compound particle;
   Step 2: forming the polymer bonded to the inorganic compound particle through living radical polymerization of a radical polymerizable monomer initiated by the polymerization initiating group, to produce the organic-inorganic composite; wherein the living radical polymerization is atom transfer radical polymerization; and
   Step 3: bonding a compound having a crosslinkable functional group including a reactive double bond to the organic-inorganic composite after Step 2.

**19.** The organic-inorganic composite film according to any one of claims 1 to 14, produced by a method including the following steps 4 and 5:

Step 4: reacting a coupling agent having a polymerization initiating group and a hydrophobizing agent with the inorganic compound particle, to obtain a surface-reformed inorganic compound particle; and
Step 5: forming the polymer bonded to the inorganic compound particle through living radical polymerization of a radical polymerizable monomer initiated by the polymerization initiating group, to produce the organic-inorganic composite after Step 4; wherein the living radical polymerization is atom transfer radical polymerization.

**20.** The organic-inorganic composite film according to any one of claims 13 or 14, produced by a method including the following steps 4, 5 and 6:

Step 4: reacting a coupling agent having a polymerization initiating group and a hydrophobizing agent with the inorganic compound particle, to obtain a surface-reformed inorganic compound particle;
Step 5: forming the polymer bonded to the inorganic compound particle through living radical polymerization of a radical polymerizable monomer initiated by the polymerization initiating group, to produce the organic-inorganic composite after Step 4; wherein the living radical polymerization is atom transfer radical polymerization; and
Step 6: bonding a compound having a functional group including a reactive double bond to the organic-inorganic composite.

**21.** A method of producing an organic-inorganic composite film according to any one of claims 1 to 12, the method comprising the steps of:

obtaining a coating material that comprises an organic-inorganic composite including: an inorganic compound particle; and a polymer bonded to the inorganic compound particle, wherein the organic-inorganic composite is as defined in any one of claims 1 to 12; and
applying the coating material to a substrate and removing the organic solvent from the applied coating material to form an organic-inorganic composite film.

**22.** A method of producing an organic-inorganic composite film according to any one of claims 13 or 14, the method comprising the steps of:

obtaining a coating material that comprises an organic-inorganic composite including: an inorganic compound particle; and a polymer bonded to the inorganic compound particle; wherein the organic-inorganic composite is as defined in any one of claims 13 or 14;
applying the coating material to a substrate and removing the organic solvent from the applied coating material to form an organic-inorganic composite film; and
crosslinking the organic-inorganic composite through photo-curing or thermal curing.

**23.** An optical material, member or element comprising the organic-inorganic composite film according to any one of claims 1 to 14.

**24.** An antireflection member comprising the organic-inorganic composite film according to any one of claims 1 to 14.

**25.** An illumination apparatus comprising the organic-inorganic composite film according to any one of claims 1 to 14.

**Patentansprüche**

**1.** Film aus einem organisch-anorganischen Verbund, umfassend:

einen organisch-anorganischen Verbund, enthaltend: ein Teilchen aus einer anorganischen Verbindung und ein Polymer, das an das Teilchen aus einer anorganischen Verbindung gebunden ist, wobei die Molekulargewichtsverteilung des Polymers 2,3 oder weniger beträgt,
wobei das Teilchen aus einer anorganischen Verbindung und das Polymer über ein Kupplungsmittel, das die durch die folgende Formel wiedergegebene Struktur aufweist, gebunden sind:

X-Si(R1) (R2) (R3),

wobei in der Formel X für eine polymerisationsinitiierende Gruppe steht; R1 und R2 jeweils unabhängig voneinander für eine Alkylgruppe mit 1 bis 10 Kohlenstoffatomen stehen und R3 für eine Alkoxygruppe mit 1 bis 10 Kohlenstoffatomen, ein Wasserstoffatom, eine Hydroxylgruppe oder ein Halogenatom steht;
wobei es sich bei der polymerisationsinitiierenden Gruppe um eine organische Halogenidgruppen, die durch die folgende allgemeine Formel (1) wiedergegeben wird, oder eine halogenierte Sulfonylgruppe, die durch die allgemeine Formel (2) wiedergegeben wird, handelt:

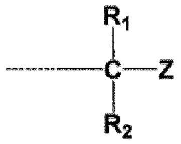 · · · (1) 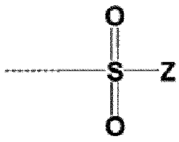 · · · (2)

wobei $R_1$ und $R_2$ jeweils unabhängig für ein Wasserstoffatom, eine Alkylgruppe mit 1 bis 20 Kohlenstoffatomen, die einen Substituenten aufweisen kann, eine Allylgruppe, die einen Substituenten aufweisen kann, eine Arylgruppe mit 6 bis 20 Kohlenstoffatomen, die einen Substituenten aufweisen kann, eine Alkylarylgruppe oder eine Alkylarylgruppe, die einen Substituenten aufweisen kann, stehen und Z für ein Halogenatom steht;
wobei der organisch-anorganische Verbund ferner ein freies Polymer, das nicht an das Teilchen aus einer anorganischen Verbindung gebunden ist,
umfasst und der Prozentanteil des freien Polymers 20 Massen-% oder weniger, bezogen auf die Gesamtmasse des freien Polymers und des an das Teilchen aus einer anorganischen Verbindung gebundenen Polymers, beträgt;
wobei der Prozentanteil von Hohlräumen in dem Film 3 bis 70 Vol.-%, bezogen auf das Volumen des Films, beträgt und
wobei der Film aus einem organisch-anorganischen Verbund einen Brechungsindex von 1,36 oder weniger aufweist.

2. Film aus einem organisch-anorganischen Verbund nach Anspruch 1, wobei es sich bei dem Teilchen aus einer anorganischen Verbindung um ein Teilchen aus einem anorganischen Oxid handelt.

3. Film aus einem organisch-anorganischen Verbund nach Anspruch 2, wobei das Teilchen aus einem anorganischen Oxid eine Kettenstruktur bildet, die mehrere in Perlenform verbundene Primärteilchen umfasst.

4. Film aus einem organisch-anorganischen Verbund nach Anspruch 1 oder 2, wobei die Rundheit des Teilchens aus einer anorganischen Verbindung 0,5 bis 1 beträgt.

5. Film aus einem organisch-anorganischen Verbund nach einem der Ansprüche 1 bis 4, wobei das Polymer einen Methacrylsäureester oder einen Acrylsäureester als Monomereinheit umfasst.

6. Film aus einem organisch-anorganischen Verbund nach einem der Ansprüche 1 bis 5, wobei das Polymer mindestens eine vernetzbare funktionelle Gruppe umfasst.

7. Film aus einem organisch-anorganischen Verbund nach Anspruch 6, wobei die vernetzbare funktionelle Gruppe mindestens eine reaktive Doppelbindung enthält.

8. Film aus einem organisch-anorganischen Verbund nach Anspruch 7, wobei es sich bei der reaktiven Doppelbindung um eine Kohlenstoff-Kohlenstoff-Doppelbindung in einer (Meth)acryloylgruppe handelt.

9. Film aus einem organisch-anorganischen Verbund nach einem der Ansprüche 1 bis 8, wobei das zahlenmittlere Molekulargewicht Mn des Polymers 10.000 bis 100.000 g/mol beträgt und/oder wobei der Gehalt des Teilchens aus einer anorganischen Verbindung 70 bis 96 Massen-%, bezogen auf die Gesamtmasse des organisch-anorganischen Verbunds, beträgt.

10. Film aus einem organisch-anorganischen Verbund nach einem der Ansprüche 1 bis 9, wobei der Gehalt des Teilchens aus einer anorganischen Verbindung 55 bis 94 Vol.-%, bezogen auf das Gesamtvolumen des organisch-anorganischen Verbunds, beträgt.

**11.** Film aus einem organisch-anorganischen Verbund nach einem der Ansprüche 1 bis 10 mit einem Brechungsindex, der um 0,020 oder mehr kleiner ist als ein theoretischer Brechungsindex, und/oder einem minimalen Reflexionsgrad von 1,5 % oder weniger.

**12.** Film aus einem organisch-anorganischen Verbund nach einem der Ansprüche 1 bis 11 mit einer Bleistifthärte von F oder mehr.

**13.** Film aus einem organisch-anorganischen Verbund nach einem der Ansprüche 1 bis 12, wobei der organisch-anorganische Verbund vernetzt ist.

**14.** Film aus einem organisch-anorganischen Verbund nach Anspruch 13, wobei der organisch-anorganische Verbund durch Radikalpolymerisation vernetzt ist und/oder wobei der organisch-anorganische Verbund ferner durch einen Vernetzer vernetzt ist.

**15.** Beschichtungsmaterial zur Bildung eines Films aus einem organisch-anorganischen Verbund nach einem der Ansprüche 1 bis 14 durch Beschichten, wobei das Beschichtungsmaterial Folgendes umfasst:
einen organisch-anorganischen Verbund, der ein Teilchen aus einer organischen Verbindung enthält, und ein Polymer, das an das Teilchen aus einer anorganischen Verbindung gebunden ist, wobei der organisch-anorganische Verbund wie in einem der Ansprüche 1 bis 14 definiert ist.

**16.** Beschichtungsmaterial nach Anspruch 15, ferner umfassend ein organisches Lösungsmittel und/oder ferner umfassend einen Photopolymerisationsinitiator oder ein Härtungsmittel, und/oder wobei die Feststoffgehaltkonzentration 0,2 bis 50 Massen-% beträgt, und/oder mit einer Viskosität von 5 Pa·s oder weniger.

**17.** Film aus einem organisch-anorganischen Verbund nach einem der Ansprüche 1 bis 14, hergestellt durch ein Verfahren mit den folgenden Schritten 1 und 2:

Schritt 1: Umsetzen des Teilchens aus einer anorganischen Verbindung mit einem Kupplungsmittel mit einer polymerisationsinitiierenden Gruppe zum Erhalt eines oberflächenreformierten Teilchens aus einer anorganischen Verbindung und
Schritt 2: Bilden des an das Teilchen aus einer anorganischen Verbindung gebundenen Polymers durch lebende Radikalpolymerisation eines radikalisch polymerisierbaren Monomers, die durch die polymerisationsinitiierende Gruppe initiiert wird, zum Erhalt des organisch-anorganischen Verbunds; wobei es sich bei der lebenden Radikalpolymerisation um Atom Transfer Radical Polymerization handelt.

**18.** Film aus einem organisch-anorganischen Verbund nach Anspruch 13 oder 14, hergestellt durch ein Verfahren mit den folgenden Schritten 1, 2 und 3:

Schritt 1: Umsetzen des Teilchens aus einer anorganischen Verbindung mit einem Kupplungsmittel mit einer polymerisationsinitiierenden Gruppe zum Erhalt eines oberflächenreformierten Teilchens aus einer anorganischen Verbindung;
Schritt 2: Bilden des an das Teilchen aus einer anorganischen Verbindung gebundenen Polymers durch lebende Radikalpolymerisation eines radikalisch polymerisierbaren Monomers, die durch die polymerisationsinitiierende Gruppe initiiert wird, zum Erhalt des organisch-anorganischen Verbunds; wobei es sich bei der lebenden Radikalpolymerisation um Atom Transfer Radical Polymerization handelt und Schritt 3: Binden einer Verbindung mit einer vernetzbaren funktionellen Gruppe mit einer reaktiven Doppelbindung an den organisch-anorganischen Verbund nach Schritt 2.

**19.** Film aus einem organisch-anorganischen Verbund nach einem der Ansprüche 1 bis 14, erhalten durch ein Verfahren mit den folgenden Schritten 4 und 5:

Schritt 4: Umsetzen eines Kupplungsmittels mit einer polymerisationsinitiierenden Gruppe und eines Hydrophobierungsmittels mit dem Teilchen aus einer anorganischen Verbindung zum Erhalt eines oberflächenreformierten Teilchens aus einer anorganischen Verbindung und
Schritt 5: Bilden des an das Teilchen aus einer anorganischen Verbindung gebundenen Polymers durch lebende Radikalpolymerisation eines radikalisch polymerisierbaren Monomers, die durch die polymerisationsinitiierende Gruppe initiiert wird, zum Erhalt des organisch-anorganischen Verbunds nach Schritt 4; wobei es sich bei der lebenden Radikalpolymerisation um Atom Transfer Radical Polymerization handelt.

**20.** Film aus einem organisch-anorganischen Verbund nach einem der Ansprüche 13 bis 14, erhalten durch ein Verfahren mit den folgenden Schritten 4, 5 und 6:

Schritt 4: Umsetzen eines Kupplungsmittels mit einer polymerisationsinitiierenden Gruppe und eines Hydrophobierungsmittels mit dem Teilchen aus einer anorganischen Verbindung zum Erhalt eines oberflächenreformierten Teilchens aus einer anorganischen Verbindung;
Schritt 5: Bilden des an das Teilchen aus einer anorganischen Verbindung gebundenen Polymers durch lebende Radikalpolymerisation eines radikalisch polymerisierbaren Monomers, die durch die polymerisationsinitiierende Gruppe initiiert wird, zum Erhalt des organisch-anorganischen Verbunds nach Schritt 4; wobei es sich bei der lebenden Radikalpolymerisation um Atom Transfer Radical Polymerization handelt; und
Schritt 6: Binden einer Verbindung mit einer vernetzbaren funktionellen Gruppe mit einer reaktiven Doppelbindung an den organisch-anorganischen Verbund.

**21.** Verfahren zur Herstellung eines Films aus einem organisch-anorganischen Verbund nach einem der Ansprüche 1 bis 12, das Folgendes umfasst:

Erhalten eines Beschichtungsmaterials, das einen organisch-anorganischen Verbund, der ein Teilchen aus einer organischen Verbindung enthält, und ein Polymer, das an das Teilchen aus einer anorganischen Verbindung gebunden ist, umfasst, wobei der organisch-anorganische Verbund wie in einem der Ansprüche 1 bis 12 definiert ist; und
Aufbringen des Beschichtungsmaterials auf ein Substrat und Entfernen des organischen Lösungsmittels von dem aufgebrachten Beschichtungsmaterial zur Bildung eines Films aus einem organisch-anorganischen Verbund.

**22.** Verfahren zur Herstellung eines Films aus einem organisch-anorganischen Verbund nach Anspruch 13 oder 14, das Folgendes umfasst:

Erhalten eines Beschichtungsmaterials, das einen organisch-anorganischen Verbund, der ein Teilchen aus einer organischen Verbindung enthält, und ein Polymer, das an das Teilchen aus einer anorganischen Verbindung gebunden ist, umfasst, wobei der organisch-anorganische Verbund wie in Anspruch 13 oder 14 definiert ist;
Aufbringen des Beschichtungsmaterials auf ein Substrat und Entfernen des organischen Lösungsmittels von dem aufgebrachten Beschichtungsmaterial zur Bildung eines Films aus einem organisch-anorganischen Verbund und
Vernetzen des organisch-anorganischen Verbunds durch Lichthärtung oder Wärmehärtung.

**23.** Optisches Material, Bauelement oder Element, umfassend den Film aus einem organisch-anorganischen Verbund nach einem der Ansprüche 1 bis 14.

**24.** Antireflexionsbauelement, umfassend den Film aus einem organisch-anorganischen Verbund nach einem der Ansprüche 1 bis 14.

**25.** Beleuchtungsvorrichtung, umfassend den Film aus einem organisch-anorganischen Verbund nach einem der Ansprüche 1 bis 14.

## Revendications

**1.** Film composite organique-inorganique comprenant :

un composite organique-inorganique comportant : une particule de composé inorganique ; et un polymère lié à la particule de composé inorganique, une distribution de poids moléculaire du polymère étant égale ou inférieure à 2,3,
dans lequel la particule de composé inorganique et le polymère sont liés par un agent de couplage qui a une structure représentée par la formule suivante :

X-Si (R1) (R2) (R3)

dans la formule, X représente un groupe initiateur de polymérisation, R1 et R2 représentent indépendamment

un groupe alkyle ayant 1 à 10 atomes de carbone, respectivement, et R3 représente un groupe alcoxy ayant 1 à 10 atomes de carbone, un atome d'hydrogène, un groupe hydroxyle ou un atome d'halogène ;
dans lequel le groupe initiateur de polymérisation est un groupe halogénure organique représenté par la formule générale (1) suivante ou un groupe sulfonyle halogéné représenté par la formule générale (2) :

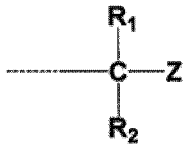 • • • (1) 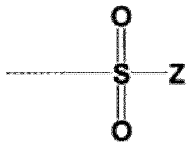 • • • (2)

dans lesquelles $R_1$ et $R_2$ représentent chacun indépendamment un atome d'hydrogène, un groupe alkyle ayant 1 à 20 atomes de carbone qui peut porter un substituant, un groupe allyle qui peut porter un substituant, un groupe aryle ayant 6 à 20 atomes de carbone qui peut porter un substituant, un groupe alkylaryle, ou un groupe alkylaryle qui peut porter un substituant, et Z représente un atome d'halogène ;
dans lequel le composite organique-inorganique comporte en outre un polymère libre non lié à la particule de composé inorganique, et un pourcentage du polymère libre est égal ou inférieur à 20 % en masse, rapporté à une masse totale du polymère libre et du polymère lié à la particule de composé inorganique ;
un pourcentage de vides dans le film étant de 3 à 70 % en volume, rapporté à un volume du film ; et
le film composite organique-inorganique ayant un indice de réfraction égal ou inférieur à 1,36.

**2.** Film composite organique-inorganique selon la revendication 1, dans lequel la particule de composé inorganique est une particule d'oxyde inorganique.

**3.** Film composite organique-inorganique selon la revendication 2, dans lequel la particule d'oxyde inorganique forme une structure de chaîne comportant une pluralité de particules primaires liées en une forme perlée.

**4.** Film composite organique-inorganique selon la revendication 1 ou 2, dans lequel une circularité de la particule de composé inorganique est de 0,5 à 1.

**5.** Film composite organique-inorganique selon l'une quelconque des revendications 1 à 4, dans lequel le polymère contient un ester d'acide méthacrylique ou un ester d'acide acrylique comme motif monomère.

**6.** Film composite organique-inorganique selon l'une quelconque des revendications 1 à 5, dans lequel le polymère contient au moins un groupe fonctionnel réticulable.

**7.** Film composite organique-inorganique selon la revendication 6, dans lequel le groupe fonctionnel réticulable contient au moins une double liaison réactive.

**8.** Film composite organique-inorganique selon la revendication 7, dans lequel la double liaison réactive est une double liaison carbone-carbone dans un groupe (méta-)acryloyle.

**9.** Film composite organique-inorganique selon l'une quelconque des revendications 1 à 8, dans lequel un poids moléculaire moyen en nombre Mn du polymère est de 10 000 à 100 000 g/mol, et/ou dans lequel une teneur de la particule de composé inorganique est de 70 à 96 % en masse, rapporté à une masse totale du composite organique-inorganique.

**10.** Film composite organique-inorganique selon l'une quelconque des revendications 1 à 9, dans lequel une teneur de la particule de composé inorganique est de 55 à 94 % en volume, rapporté à un volume total du composite organique-inorganique.

**11.** Film composite organique-inorganique selon l'une quelconque des revendications 1 à 10, ayant un indice de réfraction inférieur d'au moins 0,020 à un indice de réfraction théorique, et/ou ayant un facteur de réflexion minimal égal ou inférieur à 1,5 %.

**12.** Film composite organique-inorganique selon l'une quelconque des revendications 1 à 11, ayant une dureté au crayon égale ou supérieure à F.

**13.** Film composite organique-inorganique selon l'une quelconque des revendications 1 à 12, dans lequel le composite organique-inorganique est réticulé.

**14.** Film composite organique-inorganique selon la revendication 13, dans lequel le composite organique-inorganique est réticulé par polymérisation radicalaire, et/ou dans lequel le composite organique-inorganique est également réticulé par un agent de réticulation.

**15.** Matériau de revêtement pour former un film composite organique-inorganique selon l'une quelconque des revendications 1 à 14 par revêtement, le matériau de revêtement comprenant :
un composite organique-inorganique comportant : une particule de composé inorganique ; et un polymère lié à la particule de composé inorganique ; le composite organique-inorganique étant tel que défini dans l'une quelconque des revendications 1 à 14.

**16.** Matériau de revêtement selon la revendication 15, comprenant en outre un solvant organique, et/ou comprenant en outre un initiateur de photopolymérisation ou un durcisseur, et/ou dans lequel une concentration de matières solides est de 0,2 à 50 % en masse, et/ou ayant une viscosité égale ou inférieure à 5 Pa·s.

**17.** Film composite organique-inorganique selon l'une quelconque des revendications 1 à 14, produit par un procédé comportant les étapes 1 et 2 suivantes :

étape 1 : réaction de la particule de composé inorganique avec un agent de couplage ayant un groupe initiateur de polymérisation, pour obtenir une particule de composé inorganique reformée en surface ; et
étape 2 : formation du polymère lié à la particule de composé inorganique par polymérisation radicalaire vivante d'un monomère polymérisable par voie radicalaire initiée par le groupe initiateur de polymérisation, pour produire le composite organique-inorganique ; la polymérisation radicalaire vivante étant une polymérisation radicalaire par transfert d'atomes.

**18.** Film composite organique-inorganique selon l'une quelconque des revendications 13 et 14, produit par un procédé comportant les étapes 1, 2 et 3 suivantes :

étape 1 : réaction de la particule de composé inorganique avec un agent de couplage ayant un groupe initiateur de polymérisation, pour obtenir une particule de composé inorganique reformée en surface ;
étape 2 : formation du polymère lié à la particule de composé inorganique par polymérisation radicalaire vivante d'un monomère polymérisable par voie radicalaire initiée par le groupe initiateur de polymérisation, pour produire le composite organique-inorganique ; la polymérisation radicalaire vivante étant une polymérisation radicalaire par transfert d'atomes ; et
étape 3 : liaison d'un composé ayant un groupe fonctionnel réticulable comportant une double liaison réactive au composite organique-inorganique après l'étape 2.

**19.** Film composite organique-inorganique selon l'une quelconque des revendications 1 à 14, produit par un procédé comportant les étapes 4 et 5 suivantes :

étape 4 : réaction d'un agent de couplage ayant un groupe initiateur de polymérisation et d'un agent d'hydrophobisation avec la particule de composé inorganique, pour obtenir une particule de composé inorganique reformée en surface ; et
étape 5 : formation du polymère lié à la particule de composé inorganique par polymérisation radicalaire vivante d'un monomère polymérisable par voie radicalaire initiée par le groupe initiateur de polymérisation, pour produire le composite organique-inorganique après l'étape 4 ; la polymérisation radicalaire vivante étant une polymérisation radicalaire par transfert d'atomes.

**20.** Film composite organique-inorganique selon l'une quelconque des revendications 13 et 14, produit par un procédé comportant les étapes 4, 5 et 6 suivantes :

étape 4 : réaction d'un agent de couplage ayant un groupe initiateur de polymérisation et d'un agent d'hydrophobisation avec la particule de composé inorganique, pour obtenir une particule de composé inorganique reformée en surface ;
étape 5 : formation du polymère lié à la particule de composé inorganique par polymérisation radicalaire vivante d'un monomère polymérisable par voie radicalaire initiée par le groupe initiateur de polymérisation, pour produire

le composite organique-inorganique après l'étape 4 ; la polymérisation radicalaire vivante étant une polymérisation radicalaire par transfert d'atomes ; et

étape 6 : liaison d'un composé ayant un groupe fonctionnel comportant une double liaison réactive au composite organique-inorganique.

**21.** Procédé de production d'un film composite organique-inorganique selon l'une quelconque des revendications 1 à 12, le procédé comprenant les étapes suivantes :

obtention d'un matériau de revêtement qui comprend un composite organique-inorganique comportant : une particule de composé inorganique ; et un polymère lié à la particule de composé inorganique, le composite organique-inorganique étant tel que défini dans l'une quelconque des revendications 1 à 12 ; et

application du matériau de revêtement à un substrat et retrait du solvant organique du matériau de revêtement appliqué pour former un film composite organique-inorganique.

**22.** Procédé de production d'un film composite organique-inorganique selon l'une quelconque des revendications 13 et 14, le procédé comprenant les étapes suivantes :

obtention d'un matériau de revêtement qui comprend un composite organique-inorganique comportant : une particule de composé inorganique ; et un polymère lié à la particule de composé inorganique ; le composite organique-inorganique étant tel que défini dans l'une quelconque des revendications 13 et 14 ;

application du matériau de revêtement à un substrat et retrait du solvant organique du matériau de revêtement appliqué pour former un film composite organique-inorganique ; et

réticulation du composite organique-inorganique par photodurcissement ou durcissement thermique.

**23.** Matériau optique, composant ou élément comprenant le film composite organique-inorganique selon l'une quelconque des revendications 1 à 14.

**24.** Composant antireflet comprenant le film composite organique-inorganique selon l'une quelconque des revendications 1 à 14.

**25.** Appareil d'éclairage comprenant le film composite organique-inorganique selon l'une quelconque des revendications 1 à 14.

*Fig.1*

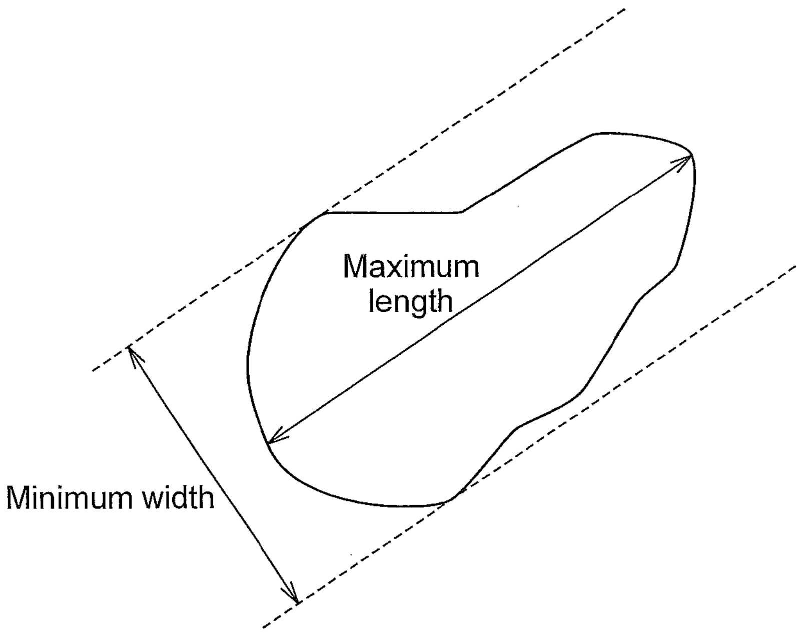

Fig.2

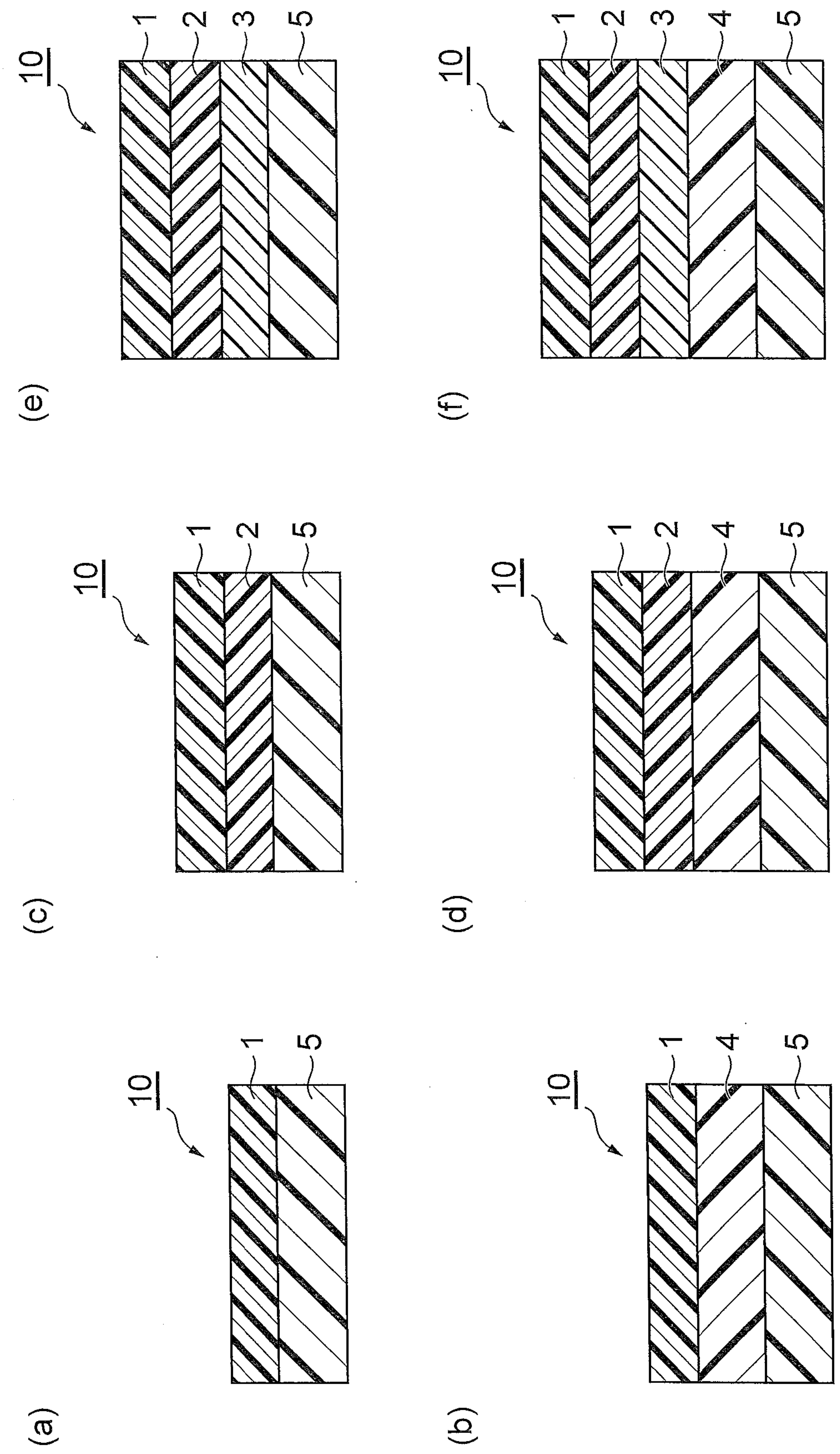

Fig.3

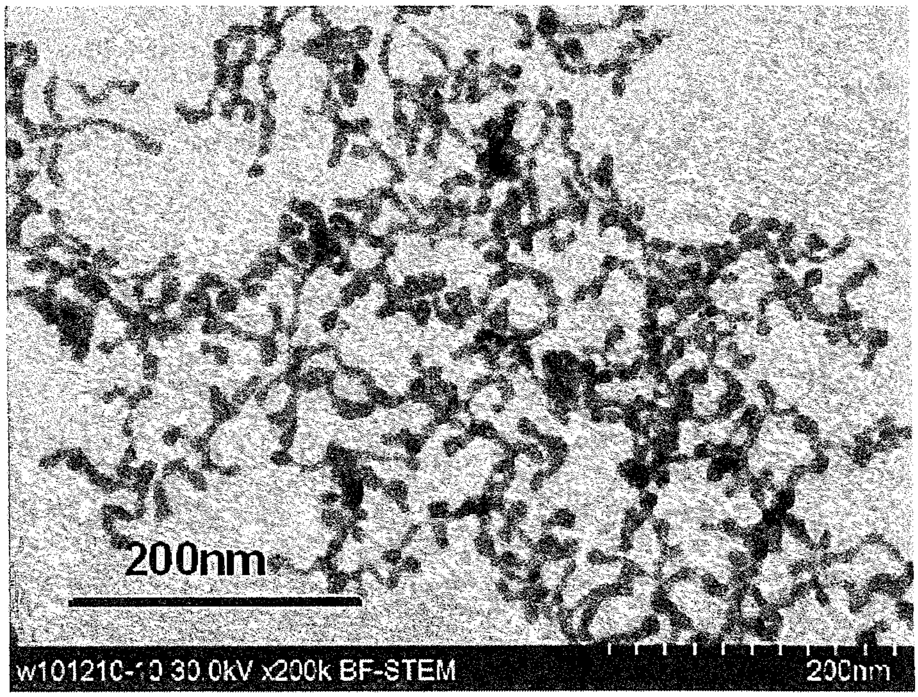

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004300172 A
- US 6383559 B1
- JP 2006063042 A
- JP 2004258267 A
- JP HEI11326601 B
- JP HEI116902 B
- JP 2006257308 A


### Non-patent literature cited in the description


- *J. Polymer Science: Part A: Polymer Chemistry,* 1993, vol. 31, 1473-1482
- *J. Polymer Science: Part A: Polymer Chemistry,* 1993, vol. 31, 1483-1491